# EUROPEAN PATENT APPLICATION

(11) **EP 4 675 132 A1**
(43) Date of publication of application: **07.01.2026**
(21) Application number: 24870742.4
(22) Date of filing: 25.09.2024
(51) Int. Cl.: F16H 57/04, F16H 57/023, F16H 57/02

(54) **POWER ASSEMBLY AND ELECTRIC VEHICLE**

(30) Priority: 27.09.2023 CN 202322650901 U
(71) Applicant: Huawei Digital Power Technologies Co., Ltd., Shenzhen, Guangdong 518043 (CN)
(72) Inventor: YANG, Libin, Shenzhen, Guangdong 518043 (CN); TIAN, Ye, Shenzhen, Guangdong 518043 (CN); YANG, Junfeng, Shenzhen, Guangdong 518043 (CN); SHI, Xuliang, Shenzhen, Guangdong 518043 (CN)
(74) Representative: Isarpatent
(86) International application number: PCT/CN2024/120917
(87) International publication number: WO 2025/067198

(57) **Abstract**

A powertrain (10) includes a die casting housing (100) and a reducer end cover (130), the die casting housing (100) includes a reducer accommodation cavity (111), a motor accommodation cavity (121), and a reducer oil passage protrusion (160) that are formed through integrated die casting, and the reducer accommodation cavity (111) and the motor accommodation cavity (121) are respectively configured to accommodate a reducer (200) and a motor (300). The reducer oil passage protrusion (160) is configured to be embedded into an internal oil passage in the reducer end cover (130), and a protruding oil hole (162) and the internal oil passage in the reducer end cover (132) are connected by using a mutually embedded structure. The reducer oil passage protrusion (160) further includes the protruding oil hole (162), an opening of the protruding oil hole (162) faces the reducer end cover (130), and the protruding oil hole (162) is configured to directly communicate with the internal oil passage in the reducer end cover (130) and is configured to communicate with the motor accommodation cavity (162) through an internal oil passage in the die casting housing, to output coolant oil to the reducer or a motor shaft system for cooling and lubrication. A sealing ring or a sealing washer does not need to be additionally used for the powertrain, meeting requirements such as a reduced quantity of parts. An electric vehicle is further provided.

## Description

This application claims priority to Chinese Patent Application No. 202322650901.2, filed with the China National Intellectual Property Administration on September 27, 2023 and entitled "POWERTRAIN AND ELECTRIC VEHICLE", which is incorporated herein by reference in its entirety.

### TECHNICAL FIELD

This application relates to the field of powertrain technologies, and in particular, to a powertrain and an electric vehicle.

### BACKGROUND

In existing electric vehicles, integrated powertrains generally serve as power sources. Currently, a motor and a motor controller are usually integrated into a two-in-one powertrain, or a motor, a motor controller, and a reducer are usually integrated into a three-in-one powertrain, or a motor, a motor controller, a reducer, and another part of the electric vehicle are usually integrated into an all-in-one powertrain. To improve overall performance of an electric vehicle, a plurality of design requirements for miniaturization, power density, reliability, heat dissipation performance, power performance, and the like need to be comprehensively considered for the powertrain. The reducer and the motor in the powertrain generate a large amount of heat in an operating process, and the reducer and the motor need to be cooled. Coolant oil cooled by a heat exchanger in the powertrain needs to be directed into a reducer input shaft bearing, a motor rotor shaft, a rotor bearing, and the like through an oil path in a housing for cooling and lubrication, to perform temperature rise control on the powertrain and implement lubrication. However, currently, structures such as an end face coating glue, a sealing washer, and a sealing ring are usually used between oil passages in the housing, to implement connection and sealing. Consequently, reliability of the powertrain is reduced, and relative costs are high.

### SUMMARY

This application provides a powertrain in which a reducer oil passage protrusion and a reducer end cover are mutually embedded to implement connection and sealing of an internal oil passage in a die casting housing, and an electric vehicle.

According to a first aspect, an embodiment of this application provides a powertrain. The powertrain includes a die casting housing and a reducer end cover, the die casting housing includes a reducer accommodation cavity, a motor accommodation cavity, and a reducer oil passage protrusion that are formed through integrated die casting, the reducer accommodation cavity and the motor accommodation cavity are respectively configured to accommodate a reducer and a motor, and the reducer end cover, the reducer accommodation cavity, and the motor accommodation cavity are sequentially arranged along an axial direction of the motor; and the reducer oil passage protrusion protrudes from an end face of the die casting housing toward the reducer end cover along the axial direction of the motor, the reducer oil passage protrusion is configured to be embedded into an internal oil passage in the reducer end cover, the reducer oil passage protrusion further includes a protruding oil hole, an opening of the protruding oil hole faces the reducer end cover, and the protruding oil hole is configured to directly communicate with the internal oil passage in the reducer end cover and is configured to communicate with the motor accommodation cavity through the internal oil passage in the die casting housing.

In this embodiment of this application, the die casting housing is formed through integrated die casting, to help improve reliability of the powertrain. The reducer end cover is configured to cover the reducer accommodation cavity. The powertrain further includes a motor end cover. The motor end cover is configured to cover the motor accommodation cavity. The reducer and the motor generate a large amount of heat in an operating process, and need to be cooled and lubricated by using coolant oil, and the reducer oil passage protrusion and the reducer end cover are embedded into each other, so that the die casting housing is connected to the reducer end cover. The protruding oil hole of the reducer oil passage protrusion and the internal oil passage in the reducer end cover communicate with each other, to transfer the coolant oil from the heat exchanger, so that the coolant oil can flow inside the die casting housing and inside the reducer end cover, and the reducer and the motor are cooled and lubricated.

In this embodiment of this application, the protruding oil hole and the internal oil passage in the reducer end cover are connected through a mutually embedded structure, and the coolant oil is output to the reducer or a motor shaft system for cooling and lubrication. An oil sealing hole is formed through cooperation of a housing structure to seal the oil passage, without a need to additionally use a sealing ring or a sealing washer, meeting requirements such as a reduced quantity of parts, simple assembly, reliable functions, and smooth oil flow, and improve reliability of the powertrain.

In an embodiment, the internal oil passage in the reducer end cover and the protruding oil hole of the reducer oil passage protrusion are formed through drawing, and a process is simple. The internal oil passage in the reducer end cover and the protruding oil hole of the reducer oil passage protrusion communicate with each other, and the opening of the protruding oil hole faces the reducer end cover, to help the coolant oil flow from the protruding oil hole of the reducer oil passage protrusion to the internal oil passage in the reducer end cover.

In an embodiment, the reducer end cover includes an end cover oil hole formed inside the reducer end cover through die casting, the end cover oil hole is configured to communicate with the protruding oil hole, an opening of the end cover oil hole faces the die casting housing along the axial direction of the motor, and the end cover oil hole is configured to accommodate the reducer oil passage protrusion.

In this embodiment of this application, the reducer end cover is configured to cover the reducer accommodation cavity, the reducer accommodation cavity is configured to accommodate the reducer, and the end cover oil hole inside the reducer end cover is formed through die casting and drawing, and a process is simple. The end cover oil hole inside the reducer end cover communicates with the protruding oil hole of the reducer oil passage protrusion, to transfer the coolant oil. The opening of the end cover oil hole faces the die casting housing along the axial direction of the motor, so that the end cover oil hole can accommodate the reducer oil passage protrusion in the die casting housing, and the oil passage in the reducer end cover communicates with the oil passage in the die casting housing. The coolant oil flows from the protruding oil hole of the reducer oil passage protrusion to the end cover oil hole inside the reducer end cover.

In an embodiment, the reducer end cover further includes an end cover oil passage, and the end cover oil hole and the end cover oil passage are arranged along the axial direction of the motor. A projection of the reducer oil passage protrusion partially overlaps a projection of the end cover oil hole along the radial direction of the motor. The reducer oil passage protrusion and the end cover oil passage are spaced apart along the axial direction of the motor. An inner diameter of the end cover oil hole is greater than an inner diameter of the end cover oil passage, and an outer diameter of the reducer oil passage protrusion is greater than the inner diameter of the end cover oil passage. A difference between the inner diameter of the end cover oil hole and the outer diameter of the reducer oil passage protrusion is greater than or equal to 0.1 mm and less than or equal to 0.2 mm along the radial direction of the motor.

In this embodiment of this application, the end cover oil passage is located in the reducer end cover, the end cover oil hole communicates with the end cover oil passage, and the end cover oil passage is used for flowing of coolant oil input through the protruding oil hole of the reducer oil passage protrusion accommodated by the end cover oil hole, to cool an internal part of the reducer. The coolant oil sequentially flows through the protruding oil hole of the reducer oil passage protrusion, the end cover oil hole, and the end cover oil passage. The projection of the reducer oil passage protrusion partially overlaps the projection of the end cover oil hole along the radial direction of the motor, to help ensure effective communication between the reducer oil passage protrusion and the end cover oil hole, and facilitate communication between an oil passage in a protrusion of the reducer and the end cover oil passage in the reducer end cover, and sealing when the coolant oil flows from the oil passage in the protrusion of the reducer to the end cover oil passage.

In this embodiment of this application, the reducer oil passage protrusion and the oil passage in the reducer end cover are connected through the protruding oil hole, and are sequentially arranged along the axial direction of the motor. The projection of the reducer oil passage protrusion partially overlaps the projection of the reducer end cover along the radial direction of the motor. The protruding oil hole and the end cover oil passage are respectively surrounded by the die casting housing and the reducer end cover, so that the coolant oil from the heat exchanger reaches the reducer or the motor located in the die casting housing more quickly. In addition, in such an arrangement manner, space outside a periphery of the die casting housing and the reducer end cover is not occupied, to help the powertrain to have a compact structure, and reduce an overall volume of the powertrain.

In this embodiment of this application, the inner diameter of the end cover oil hole is greater than the inner diameter of the end cover oil passage, the outer diameter of the reducer oil passage protrusion is greater than the inner diameter of the end cover oil passage. In a coolant oil flowing process, a reduction of an inner diameter of a pipe helps increase an oil pressure when the coolant oil flows from the end cover oil hole to the end cover oil passage, and ensure that the oil pressure of the coolant oil is not reduced in the flowing process. This helps the coolant oil more smoothly sprayed on a part of the reducer to cool and lubricate the reducer, and the coolant oil does not easily flow out from a gap between the reducer oil passage protrusion and the end cover oil hole. In this way, sealing between the end cover oil hole and the reducer oil passage protrusion is ensured, and no additional sealing element needs to be added, to reduce costs.

In this embodiment of this application, a difference between the inner diameter of the end cover oil hole and the outer diameter of the reducer oil passage protrusion is greater than or equal to 0.1 mm and less than or equal to 0.2 mm along the radial direction of the motor. A value of the difference can be precisely controlled only when certain flatness of mutually embedded contact faces is ensured. Both the inner diameter of the end cover oil hole and the outer diameter of the reducer oil passage protrusion are formed through machining, contributing to a smoother surface and ensuring ease of assembly as well as effective sealing.

In an embodiment, along the axial direction of the motor, the protruding oil hole includes an outlet facing the end cover oil passage, the end cover oil passage includes an inlet facing the protruding oil hole, and an inner diameter of the outlet of the protruding oil hole is less than an inner diameter of the inlet of the end cover oil passage.

In this embodiment of this application, the protruding oil hole is located at the reducer oil passage protrusion, the end cover oil passage is a part of the oil passage in the reducer end cover, the outlet of the protruding oil hole is a position at which the coolant oil flows out of the reducer oil passage protrusion, and the inlet of the end cover oil passage is a position at which the coolant oil flows into the end cover oil passage in the reducer end cover. In this embodiment of this application, both the protruding oil hole and the end cover oil passage are configured to transfer the coolant oil, the outlet of the protruding oil hole faces the end cover oil passage, and the inlet of the end cover oil passage faces an oil passage in the protruding oil hole, so that the coolant oil flows smoothly from the protruding oil hole into the end cover oil passage in the reducer end cover through a short path.

In this embodiment of this application, the inner diameter of the outlet of the protruding oil hole is less than the inner diameter of the inlet of the end cover oil passage. This helps the end cover oil passage accommodate all coolant oil transferred from the protruding oil hole, and better cool and lubricate the part of the reducer. In this way, the oil pressure of the coolant oil in the flowing process is increased, so that the coolant oil enters the end cover oil passage at a higher speed, to prevent the coolant oil from entering the gap between the end cover oil hole and the protruding oil hole, and improve a sealing effect.

In an embodiment, an axis of the protruding oil hole is parallel to the axial direction of the motor, and along the axial direction of the motor, the inner diameter of the protruding oil hole gradually decreases from an end facing the end cover oil passage to an end away from the end cover oil passage, and the inner diameter of the end cover oil passage gradually decreases from an end facing the protruding oil hole to an end away from the protruding oil hole.

In this embodiment of this application, the protruding oil hole is located in the die casting housing, and the axis of the protruding oil hole is parallel to the axial direction of the motor, so that a drawing process of forming the protruding oil hole in the die casting housing is smoother and simpler. The end cover oil passage is a part of the oil passage in the reducer end cover. The coolant oil flows from the reducer oil passage protrusion to the end cover oil passage in the reducer end cover.

In this embodiment of this application, the inner diameter of the protruding oil hole gradually decreases from the end facing the end cover oil passage to the end away from the end cover oil passage. In other words, the inner diameter of the protruding oil hole gradually increases from the end away from the end cover oil passage to the end close to the end cover oil passage. This helps reduce resistance in a flowing process of a cooled coolant oil transferred by the protruding oil hole from the heat exchanger, to better transfer the coolant oil to the protruding oil hole. However, the inner diameter of the end cover oil passage gradually decreases from the end facing the protruding oil hole to the end away from the protruding oil hole. This helps increase an oil pressure in a process in which coolant oil input from the protruding oil hole flows to the end cover oil passage, and ensures that a flowing pressure of the coolant oil is not reduced, so that the coolant oil in the end cover oil passage is better output to the reducer, to cool and lubricate the internal part of the reducer, and improve a sealing effect.

In an embodiment, the reducer end cover further includes an oil sealing hole. The oil sealing hole is configured to accommodate the coolant oil and a part of the reducer oil passage protrusion. The end cover oil passage, the end cover oil hole, and the oil sealing hole are sequentially arranged along the axial direction of the motor. Along the radial direction of the motor, an inner diameter of the oil sealing hole is greater than the inner diameter of the end cover oil hole, and the inner diameter of the oil sealing hole is greater than the outer diameter of the reducer oil passage protrusion. Along the axial direction of the motor, the inner diameter of the oil sealing hole gradually increases from the end facing the end cover oil hole to the end away from the end cover oil hole.

In this embodiment of this application, an inner wall of the oil sealing hole fits and cooperates with the reducer oil passage protrusion of the die casting housing to form space for accommodating the coolant oil. The coolant oil accommodated in the oil sealing hole is coolant oil flowing out from the reducer oil passage protrusion that cooperates with the protruding oil hole or the end cover oil hole.

In this embodiment of this application, the inner diameter of the oil sealing hole is greater than the inner diameter of the end cover oil hole, and the inner diameter of the oil sealing hole is greater than the outer diameter of the reducer oil passage protrusion. This helps enable the oil sealing hole to accommodate coolant oil flowing out of the end cover oil passage and the end cover oil hole. In this embodiment of this application, the oil sealing hole is configured to implement sealing of communication between the protruding oil hole and the end cover oil hole in a mutually embedded manner, to store coolant oil flowing out of a gap formed between an inner wall of the end cover oil hole and an outer wall of the reducer oil passage protrusion, and prevent leakage of the coolant oil, thereby ensuring a sealing effect of communication between the protruding oil hole and the end cover oil hole. In addition, sealing is implemented without a need to additionally use a sealing ring, a sealing washer, or an end face coating glue. Sealing is implemented only through structural cooperation between housings, to reduce a quantity of used parts, reduce costs, and improve competitiveness.

In this embodiment of this application, along the axial direction of the motor, the inner diameter of the oil sealing hole gradually increases from one end facing the end cover oil hole to one end away from the end cover oil hole. In this way, because a surface contact angle formed between the inner wall of the oil sealing hole and the outer wall of the reducer oil passage protrusion becomes larger, the coolant oil is not easily leaked, and due to a trend in which the coolant oil gradually increases, a buffer force and resistance are formed due to diffusion and flowing of the coolant oil in the oil sealing hole, to prevent the coolant oil from being leaked from the oil sealing hole to some extent.

In an embodiment, the included angle between the inner surface of the oil sealing hole and the axial direction of the motor is less than 30°. Along the axial direction of the motor, a length of the oil sealing hole is less than a length of the end cover oil hole, and the length of the oil sealing hole is less than a difference between a length of the reducer oil passage protrusion and the length of the oil sealing hole.

In this embodiment of this application, an included angle exists between the inner surface of the oil sealing hole and the axial direction of the motor, and is less than 30°, to ensure that enough tension can be formed in the oil sealing hole, so that when the coolant oil flows in the oil sealing hole, the coolant oil stops continuously spreading outward because local oil liquid tension is formed on the inner surface of the oil sealing hole, to prevent the coolant oil from continuously flowing outward and being leaked after flowing into the oil sealing hole.

In this embodiment of this application, the inner surface of the oil sealing hole, an embedded oil sealing face, and an outer wall of a part of the reducer oil passage protrusion surround and form oil sealing space, the end cover oil hole is a part of the oil passage in the reducer end cover, and the end cover oil hole is configured to accommodate the reducer oil passage protrusion. The length of the oil sealing hole is less than the length of the end cover oil hole. The length of the oil sealing hole is less than the difference between the length of the reducer oil passage protrusion and the length of the oil sealing hole. This helps the oil sealing hole better seal the protruding oil hole and the end cover oil hole. Alternatively, if the length of the oil sealing hole is not less than the length of the end cover oil hole, and the length of the oil sealing hole is not less than the difference between the length of the reducer oil passage protrusion and the length of the oil sealing hole, the oil sealing hole is likely to be too long, an overall volume of the oil sealing hole becomes larger, and the oil sealing hole stores more coolant oil. Consequently, the coolant oil forms a large impact force and has a risk of breaking through the oil sealing hole and being leaked.

In an embodiment, along the axial direction of the motor, an end face that is of the reducer end cover and that faces the die casting housing includes an end cover oil sealing face, an end face that is of the die casting housing and that faces the reducer end cover includes the embedded oil sealing face, the end cover oil sealing face fits a part of the embedded oil sealing face, and space among the oil sealing hole, the reducer oil passage protrusion, and the part of the embedded oil sealing face is used to accommodate the coolant oil.

In this embodiment of this application, space used to accommodate coolant oil playing a sealing role is surrounded and formed by the inner wall of the oil sealing hole, the end cover oil sealing face, and the embedded oil sealing face, the oil sealing hole surrounds an outside of the protruding oil hole, and a cross section that is of the oil sealing hole and that is parallel to the axial direction of the motor is a right-angled triangle. The end cover oil sealing face and the embedded oil sealing face jointly act to help form the oil sealing space. The end cover oil sealing face and the embedded oil sealing face are some surfaces that are of the die casting housing and the reducer end cover and that are in contact with each other. The end cover oil sealing face and the embedded oil sealing face are both formed through machining, to ensure smoothness of the end cover oil sealing face and the embedded oil sealing face. Flatness of the end face facilitates mutual fitting and sealing of the end cover oil sealing face and the embedded oil sealing face, and helps improve reliability of the powertrain. Space among the oil sealing hole, the reducer oil passage protrusion, and a part of an embedded oil sealing end face accommodates the coolant oil, to prevent the coolant oil from being leaked, and implement sealing of a mutually embedded structure.

In an embodiment, along the radial direction of the motor, the reducer oil passage protrusion, the inner wall of the oil sealing hole, and the end cover oil sealing face are sequentially arranged. An inner wall of the end cover oil hole, the inner wall of the oil sealing hole, and the embedded oil sealing face are sequentially connected along the axial direction of the motor. Along the radial direction of the motor, the embedded oil sealing face surrounds a periphery of the reducer oil passage protrusion, and the embedded oil sealing face is perpendicular to the axial direction of the motor.

In this embodiment of this application, along the radial direction of the motor, the reducer oil passage protrusion, the inner wall of the oil sealing hole, and the end cover oil sealing face are sequentially arranged, to help form a gradually enlarged outer ring around the protruding oil hole, and help prevent the coolant oil from being leaked from the protruding oil hole and the end cover oil passage to another part in the die casting housing. The inner wall of the end cover oil hole, the inner wall of the oil sealing hole, and the embedded oil sealing face are sequentially connected along the axial direction of the motor, to help the coolant oil flow to the oil sealing hole to achieve a sealing effect. In addition, a flowing direction in such an arrangement manner is opposite to a flowing direction of the coolant oil in the protruding oil hole and the end cover oil passage, to prevent, to some extent, more coolant oil from flowing into the oil sealing hole, and avoid a case in which an accommodation capability of the oil sealing hole is exceeded and leakage occurs. Along the radial direction of the motor, the embedded oil sealing face surrounds a periphery of the reducer oil passage protrusion, and the embedded oil sealing face is perpendicular to the axial direction of the motor. The embedded oil sealing face is disposed around the periphery of the reducer oil passage protrusion, to help the embedded oil sealing face better seal the reducer oil passage protrusion in an all-round manner. The embedded oil sealing face is perpendicular to the axial direction of the motor, and provides blocking resistance for flowing of the coolant oil along the axial direction of the motor, to help better prevent the coolant oil from being leaked from the oil sealing hole.

In an embodiment, along the radial direction of the motor, a surface of an inner wall of the end cover oil passage and a surface of an inner wall of the protruding oil hole are rough surfaces, and a surface of the inner wall of the end cover oil hole and an outer surface of the reducer oil passage protrusion are machined surfaces.

In this embodiment of this application, the end cover oil passage and the end cover oil hole jointly form the oil passage in the reducer end cover. The end cover oil hole is configured to accommodate the reducer oil passage protrusion. The protruding oil hole of the reducer oil passage protrusion communicates with the oil passage in the reducer end cover to transfer the coolant oil to cool and lubricate the reducer or the motor.

In this embodiment of this application, the surface of the inner wall of the end cover oil passage and the surface of the inner wall of the protruding oil hole are rough surfaces, and the end cover oil passage and the protruding oil hole are formed through drawing. A drawing manner has a simple process requirement, processing is facilitated, and there is high density, to prevent the coolant oil from being leaked. The surface of the inner wall of the end cover oil hole and the outer surface of the reducer oil passage protrusion are machined surfaces, to ensure flatness of the surface of the inner wall of the end cover oil hole and the outer surface of the reducer oil passage protrusion, ensure convenience when the end cover oil hole and the reducer oil passage protrusion are mutually embedded, and help seal a coolant oil flowing passage including the inner wall of the end cover oil hole and the outer wall of the reducer oil passage protrusion.

In an embodiment, the die casting housing further includes the housing oil inlet hole formed through integrated die casting, and the housing oil inlet hole is configured to communicate with the heat exchanger and is configured to communicate with the motor accommodation cavity through the internal oil passage in the die casting housing. An axis of the housing oil inlet hole is parallel to the first direction, an opening of the housing oil inlet hole faces away from the reducer accommodation cavity along the first direction, the reducer accommodation cavity, the protruding oil hole, and the housing oil inlet hole are sequentially arranged along the first direction, and the first direction is perpendicular to the axial direction of the powertrain.

In this embodiment of this application, the heat exchanger is configured to perform heat exchange and cooling on the hot coolant oil in the powertrain, and the heat exchanger is disposed above an end that is of the die casting housing and that is close to the reducer accommodation cavity. The heat exchanger has an internal oil passage for heat exchange with cooling water from the entire vehicle. The housing oil inlet hole is configured to: receive coolant oil output by the internal oil passage in the heat exchanger, and output the coolant oil to the oil passage in the reducer oil passage protrusion. The coolant oil flows into the inside of the die casting housing. The coolant oil sequentially flows through the internal oil passage in the heat exchanger, the housing oil inlet hole, the protruding oil hole, the end cover oil hole, and the end cover oil passage. In this embodiment of this application, the axis of the housing oil inlet hole is parallel to the first direction, to help the coolant oil in the heat exchanger flow into the die casting housing through a short path. The opening of the housing oil inlet hole faces away from the reducer accommodation cavity along the first direction, to help the housing oil inlet hole receive the coolant oil output from a bottom of the heat exchanger. The coolant oil flows into the reducer accommodation cavity along a gravity direction, to help reduce energy consumption.

In an embodiment, the die casting housing further includes a communicating oil hole formed through integrated die casting, and the communicating oil hole is configured to communicate the protruding oil hole and the motor accommodation cavity through the internal oil passage in the die casting housing. An axis of the communicating oil hole is parallel to the first direction, an opening of the communicating oil hole is configured to accommodate a blocking element, and the opening of the communicating oil hole and an opening of the housing oil inlet hole face a same direction. The reducer oil passage protrusion, the housing oil inlet hole, the communicating oil hole, and the motor accommodation cavity are sequentially arranged at intervals along the axial direction of the motor. A distance between the communicating oil hole and the protruding oil hole is greater than a distance between the housing oil inlet hole and the protruding oil hole along the first direction.

In this embodiment of this application, the communicating oil hole is formed through integrated die casting, and an operation is simple. The coolant oil in the die casting housing may flow from the protruding oil hole to the motor accommodation cavity through the communicating oil hole. The axis of the communicating oil hole is parallel to the first direction. In other words, the axis of the communicating oil hole is further perpendicular to the axial direction of the powertrain. This facilitates drawing in a forming process of the die casting housing, and also facilitates a regular arrangement of the communicating oil hole on the die casting housing. After the opening of the communicating oil hole accommodates the blocking element, the coolant oil in the die casting housing is prevented from being leaked from the communicating oil hole. The opening of the communicating oil hole and the opening of the housing oil inlet hole face a same direction. This facilitates a drawing and simplification process in a same direction in a forming process of the die casting housing. The reducer oil passage protrusion, the housing oil inlet hole, the communicating oil hole, and the motor accommodation cavity are sequentially arranged at intervals along the axial direction of the motor, so that the coolant oil can flow in the die casting housing along the axial direction of the motor, and the coolant oil can flow throughout the die casting housing. This helps the coolant oil cool and lubricate a part inside the die casting housing, and helps control a temperature rise of the powertrain.

In an embodiment, the die casting housing further includes a motor oil hole formed through integrated die casting, and the motor oil hole is configured to communicate the communicating oil hole and the motor accommodation cavity through the internal oil passage in the die casting housing. An axis of the motor oil hole is parallel to the axial direction of the motor, an opening of the motor oil hole faces the reducer oil passage protrusion along the axial direction of the motor, and the opening of the motor oil hole is configured to accommodate a blocking element. A distance between the motor oil hole and the protruding oil hole is greater than a distance between the housing oil inlet hole and the protruding oil hole along the first direction.

In this embodiment of this application, the motor oil hole is formed through integrated die casting, and a process is simple. The coolant oil in the die casting housing may flow from the communicating oil hole and flow into the motor accommodation cavity through the motor oil hole. The axis of the motor oil hole is parallel to the axial direction of the motor, to facilitate a drawing process along the axial direction of the motor when a motor housing is formed on the die casting housing. The opening of the motor oil hole faces the reducer oil passage protrusion along the axial direction of the motor, to help the coolant oil flow from the heat exchanger to the motor accommodation cavity. The motor oil hole accommodates the blocking element, to help prevent the coolant oil in the die casting housing from being leaked from the motor oil hole.

In this embodiment of this application, a distance between the motor oil hole and the protruding oil hole is greater than a distance between the housing oil inlet hole and the protruding oil hole along the first direction. In other words, a path for conveying the coolant oil in the heat exchanger through the housing oil inlet hole to the protruding oil hole is short, so that the coolant oil flows into the oil passage in the reducer end cover at a fast speed, to cool and lubricate the reducer. However, a distance in a process in which the coolant oil flows from the protruding oil hole to the motor oil hole is long, so that it takes long time for the coolant oil to flow into the motor in the die casting housing. In this process, some parts in the die casting housing are cooled to reduce a temperature to some extent.

In an embodiment, the internal oil passage in the die casting housing includes a reducer oil passage, a housing oil inlet passage, a communicating oil passage, and a motor oil passage, axes of the reducer oil passage and the motor oil passage are both parallel to the axial direction of the motor, and both the housing oil inlet passage and the communicating oil passage are parallel to the first direction.

In this embodiment of this application, the reducer oil passage, the housing oil inlet passage, the communicating oil passage, and the motor oil passage are all configured to convey the coolant oil in the die casting housing. The axes of the reducer oil passage and the motor oil passage are parallel to the axial direction of the motor, to help form the reducer oil passage and the motor oil passage through drawing along the axial direction of the motor in an integrated die casting process of the die casting housing. Both the housing oil inlet passage and the communicating oil passage are parallel to the first direction, to help form the housing oil inlet passage and the communicating oil passage through drawing in the first direction in the integrated die casting process of the die casting housing.

In an embodiment, the reducer oil passage and the protruding oil hole are coaxially arranged along the axial direction of the motor, one end of the reducer oil passage and the protruding oil hole are connected and communicate with each other, the other end of the reducer oil passage and one end of the communicating oil passage are connected and communicate with each other, the communicating oil passage and the communicating oil hole are coaxially arranged along the first direction, the other end of the communicating oil passage and the communicating oil hole are connected and communicate with each other, the motor oil passage and the motor oil hole are coaxially arranged along the axial direction of the motor, one end of the motor oil passage and the motor oil hole are connected and communicate with each other, the other end of the motor oil passage communicates with the motor accommodation cavity, the housing oil inlet passage and the housing oil inlet hole are coaxially arranged along the first direction, one end of the housing oil inlet passage and the housing oil inlet hole are connected and communicate with each other, and the other end of the housing oil inlet passage and a middle part of the reducer oil passage are connected and communicate with each other.

In this embodiment of this application, both the reducer oil passage and the protruding oil hole are located in the reducer oil passage protrusion, the reducer oil passage extends to an inside of the die casting housing, the reducer oil passage and the protruding oil hole are coaxially arranged along the axial direction of the motor, and one end of the reducer oil passage is connected to the protruding oil hole. That is, the reducer oil passage and the protruding oil hole communicate with each other, and axes of the reducer oil passage and the protruding oil hole are parallel to the axial direction of the motor. The communicating oil passage and the communicating oil hole are coaxially arranged along the first direction, and one end of the communicating oil passage and one end of the communicating oil hole are connected and communicate with each other, to help form the communicating oil passage through drawing in the communicating oil hole in a forming process of the die casting housing. The motor oil passage and the motor oil hole are coaxially arranged along the axial direction of the motor. One end of the motor oil passage and the motor oil hole are connected and communicate with each other, to help form the motor oil passage through drawing in the motor oil hole in the forming process of the die casting housing. The housing oil inlet passage and the housing oil inlet hole are coaxially arranged along the first direction, and one end of the housing oil inlet passage and the housing oil inlet hole are connected and communicate with each other, to help form the housing oil inlet passage through drawing in the housing oil inlet hole in the forming process of the die casting housing. The coolant oil sequentially flows into the motor accommodation cavity through the housing oil inlet hole, the housing oil inlet passage, the reducer oil passage, the communicating oil passage, the communicating oil hole, the motor oil hole, and the motor oil passage, to cool and lubricate the part of the motor.

In an embodiment, the powertrain further includes a heat exchanger, the heat exchanger includes a mounting plate and a plurality of flowing plates, the plurality of flowing plates are configured to form a liquid passage and an oil passage in the heat exchanger, and the mounting plate is configured to fasten the die casting housing. The reducer accommodation cavity, the reducer oil passage protrusion, the mounting plate, and the plurality of flowing plates are sequentially arranged along the first direction, and the first direction is perpendicular to the axial direction of the powertrain. Along the first direction, a projection of the mounting plate at least partially overlaps a projection of the reducer accommodation cavity, and the projection of the mounting plate does not overlap a projection of the motor accommodation cavity. The mounting plate includes four heat exchange holes, two heat exchange holes are configured to communicate the liquid passage in the heat exchanger and an internal liquid passage in the die casting housing, the other two heat exchange holes are configured to communicate the oil passage in the heat exchanger and the protruding oil hole, and the heat exchange hole penetrates through the mounting plate along the first direction.

In this embodiment of this application, the reducer and the motor in the powertrain generate a large amount of heat in a running process of an electric vehicle. The heat exchanger is configured to: perform heat exchange and cooling on the hot coolant oil in the reducer and the motor in the powertrain, and control a temperature rise of the powertrain. The plurality of flowing plates are arranged in a stacked manner along the first direction, and the plurality of flowing plates are connected to each other and the flowing plates and the mounting plate are connected to each other through soldering and brazing, to provide a flowing passage for the coolant oil and the coolant in the heat exchanger. The oil passage and the liquid passage in the heat exchanger do not communicate with each other. The mounting plate is located at the bottom of the heat exchanger, and is configured to fasten the heat exchanger to the reducer accommodation housing. The reducer accommodation cavity, the mounting plate, and the plurality of flowing plates are arranged in the first direction. In other words, the heat exchanger is arranged above the reducer accommodation cavity. In this embodiment of this application, the four heat exchange holes of the heat exchanger are all arranged on the mounting plate at the bottom, to reduce occupied space above the heat exchanger along the first direction, and facilitate compact arrangement of the heat exchanger in the powertrain and miniaturization of the powertrain. The four holes are located on the die casting housing, and the four heat exchange holes are configured to respectively communicate with the four holes. In other words, the liquid passage and the oil passage in the heat exchanger communicate with the liquid passage and the oil passage in the die casting housing through the four heat exchange holes and the four holes, so that the heat exchanger cools the hot coolant oil in the die casting housing, and transfers the cooled coolant oil to the die casting housing, to cool and lubricate the part inside the reducer, the motor, or the like.

According to a second aspect, an embodiment of this application provides an electric vehicle, including a vehicle body, a cooling system, and the powertrain according to any one of the foregoing embodiments. The powertrain and the cooling system are fastened on the vehicle body, the cooling system is configured to communicate with a liquid passage in the powertrain, a coolant in the cooling system is used to be successively conveyed to a liquid passage in a heat exchanger in the powertrain through the liquid passage in the powertrain, to perform heat exchange with an oil passage in the heat exchanger in the powertrain, and the oil passage in the heat exchanger is configured to convey coolant oil to the protruding oil hole and the motor accommodation cavity. In this embodiment of this application, the protruding oil hole and the internal oil passage in the reducer end cover are connected through a mutually embedded structure, and the coolant oil is output to the reducer or a motor shaft system for cooling and lubrication. An oil sealing hole is formed through cooperation of a housing structure to seal the oil passage, without a need to additionally use a sealing ring or a sealing washer, to meet requirements such as a reduced quantity of parts, simple assembly, reliable functions, and smooth oil flow, and improve reliability of the powertrain.

### BRIEF DESCRIPTION OF DRAWINGS

To describe technical solutions in embodiments of this application more clearly, the following describes the accompanying drawings used in embodiments of this application.
FIG. 1 is a diagram of a structure of an electric vehicle according to an embodiment of this application;
FIG. 2 is a diagram of a structure of a powertrain according to an embodiment of this application;
FIG. 3 is a partial exploded diagram of a powertrain according to an embodiment of this application;
FIG. 4 is a sectional view of a powertrain along an axial direction of a motor according to an embodiment of this application;
FIG. 5 is a locally enlarged view of a part M1 in the powertrain in FIG. 3;
FIG. 6 is a locally enlarged view of a part M1 in the powertrain in FIG. 3;
FIG. 7 is a diagram of a structure of a powertrain according to an embodiment of this application;
FIG. 8 is a sectional view of a powertrain along an axial direction of a motor according to an embodiment of this application;
FIG. 9 is a diagram of a partial structure of a powertrain according to an embodiment of this application;
FIG. 10 is a diagram of a partial structure of a powertrain according to an embodiment of this application;
FIG. 11 is a locally enlarged view of a part M2 in the sectional view of the powertrain in FIG. 8;
FIG. 12 is a locally enlarged view of a part M3 in the sectional view of the powertrain in FIG. 8;
FIG. 13 is a locally enlarged view of a part M3 in the sectional view of the powertrain in FIG. 8;
FIG. 14 is a locally enlarged view of a part M4 in the locally enlarged view of the powertrain in FIG. 12;
FIG. 15 is a diagram of a structure of a die casting housing according to an embodiment of this application;
FIG. 16 is a top view of the die casting housing in FIG. 15;
FIG. 17 is a sectional view of the die casting housing in FIG. 16 along A-A;
FIG. 18 is a sectional view of the die casting housing in FIG. 16 along B-B;
FIG. 19 is a sectional view of the die casting housing in FIG. 16 along C-C;
FIG. 20 is a sectional view of the die casting housing in FIG. 16 along D-D;
FIG. 21 is a diagram of a heat exchanger according to an embodiment of this application;
FIG. 22 is a diagram of a structure of a heat exchanger according to an embodiment of this application;
FIG. 23 is a diagram of a structure of a heat exchanger according to an embodiment of this application;
FIG. 24 is a diagram of a structure of a mounting plate of a heat exchanger according to an embodiment of this application;
FIG. 25 is a sectional view of the heat exchanger in FIG. 22 along E-E;
FIG. 26 is a diagram of a structure of a mounting plate of a heat exchanger according to an embodiment of this application;
FIG. 27 is a sectional view of the heat exchanger in FIG. 22 along F-F;
FIG. 28 is a sectional view of the heat exchanger in FIG. 22 along G-G;
FIG. 29 is a sectional view of a powertrain along an axial direction of a motor according to an embodiment of this application; and
FIG. 30 is a locally enlarged view of a part M5 in the powertrain in FIG. 2.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

Terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise stated, "a plurality of" means two or more than two.

In addition, in this specification, position terms such as "top" and "bottom" are defined relative to positions of structures in the accompanying drawings. It should be understood that these position terms are relative concepts used for relative description and clarification, and may correspondingly change according to changes in the positions of the structures.

For ease of understanding, the following first explains and describes related technical terms in embodiments of this application.

Parallelism: Parallelism defined in embodiments of this application is not limited to absolute parallelism. The definition of the parallelism may be understood as basic parallelism. A case in which there is no absolute parallelism due to a factor such as an assembling tolerance, a design tolerance, or impact of structural flatness is allowed.

Verticality: Verticality defined in embodiments of this application is not limited to an absolute vertical intersection (an included angle is 90 degrees) relationship. A case in which there is no absolute perpendicular intersection due to a factor such as an assembling tolerance, a design tolerance, or impact of structural flatness is allowed. An error within a small angle range is allowed. For example, an assembling error range of 80 degrees to degrees may be understood as a vertical relationship.

A first direction is perpendicular to the first direction and a third direction.

The second direction is perpendicular to the first direction and the third direction.

The third direction is perpendicular to the first direction and the second direction.

When a powertrain is in an operating state, much heat is generated inside the powertrain, and coolant oil needs to be supplied to the powertrain, to perform temperature rise control on the powertrain. Coolant oil cooled by a heat exchanger in the powertrain needs to be directed into a reducer input shaft bearing, a motor rotor shaft, a rotor bearing, and the like through an oil path in a powertrain housing for cooling and lubrication, to perform temperature rise control on the powertrain and implement lubrication. However, currently, structures such as an end face coating glue, a sealing washer, and a sealing ring are usually used between oil passages in the powertrain housing, to implement connection and sealing. Consequently, reliability of the powertrain is reduced, and relative costs are high.

An embodiment of this application provides a powertrain. The powertrain includes a die casting housing and a reducer end cover, the die casting housing includes a reducer accommodation cavity, a motor accommodation cavity, and a reducer oil passage protrusion that are formed through integrated die casting, the reducer accommodation cavity and the motor accommodation cavity are respectively configured to accommodate a reducer and a motor, and the reducer end cover, the reducer accommodation cavity, and the motor accommodation cavity are sequentially arranged along an axial direction of the motor; and the reducer oil passage protrusion protrudes from an end face of the die casting housing toward the reducer end cover along the axial direction of the motor, the reducer oil passage protrusion is configured to be embedded into an internal oil passage in the reducer end cover, the reducer oil passage protrusion further includes a protruding oil hole, an opening of the protruding oil hole faces the reducer end cover, and the protruding oil hole is configured to directly communicate with the internal oil passage in the reducer end cover and is configured to communicate with the motor accommodation cavity through the internal oil passage in the die casting housing. In this embodiment of this application, the protruding oil hole and the internal oil passage in the reducer end cover are connected through a mutually embedded structure, and the coolant oil is output to the reducer or a motor shaft system for cooling and lubrication. An oil sealing hole is formed through cooperation of a housing structure to seal the oil passage, without a need to additionally use a sealing ring or a sealing washer, to meet requirements such as a reduced quantity of parts, simple assembly, reliable functions, and smooth oil flow, and improve reliability of the powertrain.

The powertrain provided in embodiments of this application is used in an electric vehicle, to improve overall performance of the electric vehicle.

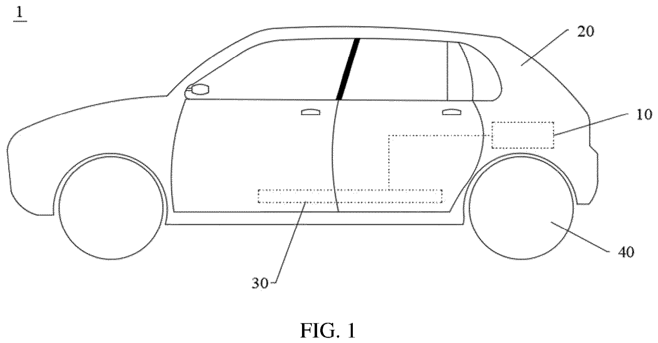

FIG. 1 is a diagram of a structure of an electric vehicle 1 according to an embodiment of this application. In this embodiment of this application, the electric vehicle 1 includes a powertrain 10, a vehicle body 20, a battery pack 30, and a wheel 40. The powertrain 10 and the battery pack 30 are fastened to the vehicle body 20. The powertrain 10 is configured to receive power supplied by the battery pack 30, and is configured to drive the wheel 40.

In this embodiment of this application, the battery pack 30 may also be referred to as a power battery.

In this embodiment of this application, the electric vehicle 1 is a wheeled device driven or pulled by a power apparatus.

The following describes in detail the powertrain 10 provided in embodiments of this application.

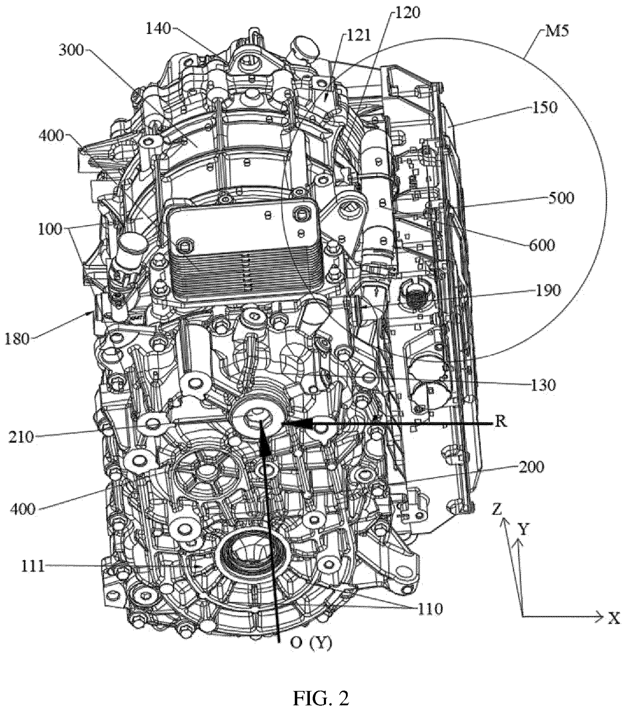

FIG. 2 is a diagram of a structure of a powertrain 10 according to an embodiment of this application.

In an embodiment, the powertrain 10 includes a die casting housing 100, a heat exchanger 400, a motor 300, and a reducer 200. The die casting housing 100 includes a reducer accommodation cavity 111 and a motor accommodation cavity 121, the motor accommodation cavity 121 is configured to accommodate the motor 300, and the reducer accommodation cavity 111 is configured to accommodate the reducer 200. The motor 300 converts electric energy provided by a motor controller 500 into kinetic energy, and transmits the kinetic energy to a reducer input shaft 210 in the reducer 200. The reducer input shaft 210 transmits power to an internal gear of the reducer 200. An output shaft (not shown in the figure) of the reducer 200 is configured to transmit power of the motor 300 to a wheel 40.

In this embodiment of this application, the die casting housing 100 may also be referred to as a powertrain housing 100, a middle integrated housing, an electric drive housing, or the like. In this embodiment of this application, the die casting housing 100 is a housing formed through integrated die casting.

In this embodiment of this application, as shown in FIG. 2, the reducer accommodation cavity 111 and the motor accommodation cavity 121 penetrate through the die casting housing 100 in a third direction Y. The motor accommodation cavity 121 communicates with the reducer accommodation cavity 111, and a motor shaft (not shown in the figure) of the motor 300 is fastened to the reducer input shaft 210 of the reducer 200. It should be noted that the reducer input shaft 210 herein is at a schematic position of the reducer input shaft.

In an embodiment, the powertrain 10 further includes the motor controller 500. The motor controller 500 is configured to receive a direct current of a battery pack 30, and is configured to output an alternating current to the motor 300. A motor stator (not shown in the figure) in the motor 300 is configured to: receive an alternating current output by the motor controller 500, and drive a motor rotor (not shown in the figure) and a motor shaft (not shown in the figure) in the motor 300 to rotate. The motor shaft (not shown in the figure) rotates to drive the reducer input shaft 210 to rotate.

In this embodiment of this application, the die casting housing 100 is configured to accommodate the motor 300 and the reducer 200. The motor 300 is located in the motor accommodation cavity 121 of the die casting housing 100, the reducer 200 is located in the reducer accommodation cavity 111 of the die casting housing 100, and the motor controller 500 and the die casting housing 100 are arranged long a second direction X.

In an embodiment, the motor 300 and the motor controller 500 share one die casting housing 100, to help reduce a volume of the powertrain 10, so that the powertrain 10 is more centralized.

The motor 300 and the reducer 200 generate much heat during operating. When a temperature continuously increases, operating effects of the motor 300 and the reducer 200 are affected. In this embodiment of this application, the heat exchanger 400 is configured to cool coolant oil in the die casting housing 100, to cool and lubricate the motor 300 and the reducer 200.

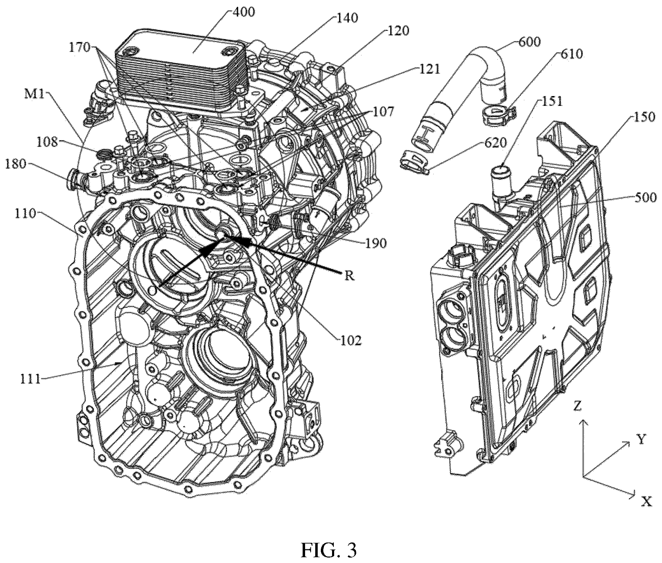

Refer to FIG. 2 and FIG. 3. FIG. 3 is a partial exploded diagram of a powertrain 10 according to an embodiment of this application. In an embodiment, the powertrain 10 includes the die casting housing 100 and the heat exchanger 400. The die casting housing 100 includes the reducer accommodation cavity 111 formed inside the die casting housing 100 through die casting and four holes 170. The reducer accommodation cavity 111 is configured to accommodate the reducer 200. Two holes 170 are configured to communicate with a liquid passage in the heat exchanger 400, the other two holes 170 are configured to communicate with an oil passage in the heat exchanger 400, openings of the four holes 170 all face the heat exchanger 400, the reducer accommodation cavity 111, the four holes 170, and the heat exchanger 400 are arranged along a first direction Z, the first direction Z is perpendicular to an axial direction O of the motor, and projections of the four holes 170 are located in a projection of the reducer accommodation cavity 111 along a radial direction R of the motor.

A liquid passage and an oil passage that are isolated from each other exist in each of the die casting housing 100 and the heat exchanger 400. A liquid passage in the die casting housing 100 communicates with a liquid passage in the heat exchanger 400, an oil passage in the die casting housing 100 communicates with an oil passage in the heat exchanger 400, and the liquid passage in the heat exchanger 400 is configured to perform heat exchange with the oil passage in the heat exchanger 400. The liquid passage is used for flowing of a coolant, the oil passage is used for flowing of coolant oil, the coolant oil is in contact with a part in the reducer 200 or the motor 300 to absorb heat, the liquid passage and the oil passage are isolated from each other, and a coolant in the liquid passage is used to absorb heat of coolant oil in the oil passage.

In this embodiment of this application, the reducer accommodation cavity 111 is configured to accommodate the reducer 200, the reducer 200 includes the reducer input shaft 210, and the reducer input shaft 210 is configured to be fastened to a motor shaft. The four holes 170 in the die casting housing 100 are configured to communicate with the heat exchanger 400, the two holes 170 are holes through which a coolant flows and communicates with the liquid passage in the heat exchanger 400, and the other two holes 170 are holes through which coolant oil flows and communicates with the oil passage in the heat exchanger 400. The openings of the four holes 170 face the heat exchanger 400, to help the die casting housing 100 receive a coolant or coolant oil from the heat exchanger 400. The reducer accommodation cavity 111, the four holes 170, and the heat exchanger 400 are arranged in the first direction Z, the heat exchanger 400 is placed above the reducer accommodation cavity 111, and the projections of the four holes 170 are located in the projection of the reducer accommodation cavity 111 along the radial direction R of the motor, so that the four holes 170 do not need to occupy too much space of the die casting housing 100 along the second direction X and the third direction Y, to facilitate structure compactness and miniaturization designs of the powertrain 10.

The projection along the radial direction R of the motor is a projection along the radial direction R of the motor on a projective plane perpendicular to the radial direction R of the motor. A projective plane of the projection along the radial direction R of the motor is perpendicular to the radial direction R of the motor.

In this embodiment of this application, the axial direction of the motor, an axial direction of the powertrain, and an axial direction of the reducer are parallel.

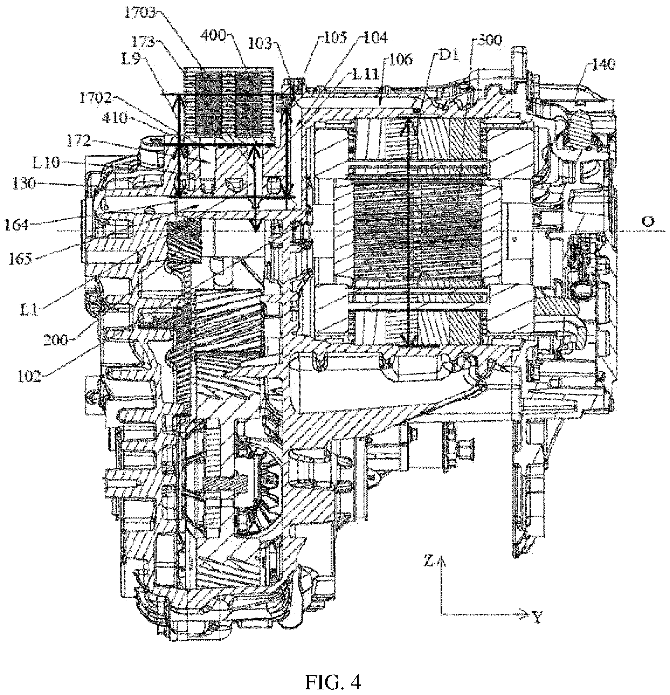

Refer to FIG. 2, FIG. 3, and FIG. 4. FIG. 4 is a sectional view of a powertrain 10 along an axial direction O of a motor according to an embodiment of this application. In an embodiment, the die casting housing 100 further includes the motor accommodation cavity 121 formed inside the die casting housing 100 through die casting, the motor accommodation cavity 121 and the reducer accommodation cavity 111 are spaced apart along the axial direction O of the powertrain, axial directions of the four holes 170 are parallel to the first direction Z, and along the first direction Z, a distance between the axial direction O of the motor and end faces that are of the four holes 170 and that face the heat exchanger 400 is less than a half of an inner diameter of the motor accommodation cavity 121.

In this embodiment of this application, the motor accommodation cavity 121 is configured to accommodate the motor 300, and the reducer accommodation cavity 111 is configured to accommodate the reducer 200. The motor 300 converts electric energy provided by a motor controller 500 into kinetic energy and transmits the kinetic energy to the reducer input shaft 210 in the reducer 200.

As shown in FIG. 4, in this embodiment of this application, the axial directions of the four holes 170 are parallel to the first direction Z, so that the four holes 170 are formed along the first direction Z through drafting in a forming process of the die casting housing 100. Along the first direction Z, a distance between an axis of the motor and the end faces that are of the four holes 170 and that face the heat exchanger 400 is denoted as L1, the inner diameter of the motor accommodation cavity 121 is denoted as D1, L1<0.5D1, and space occupied by the heat exchanger 400 in the first direction Z does not exceed space occupied by the motor accommodation cavity 121 in the first direction Z, to additionally increase a height part of the powertrain 10. In addition, the motor accommodation cavity 121 and the reducer accommodation cavity 111 are arranged along the axial direction O of the powertrain, and therefore, the heat exchanger 400 may also be arranged above the reducer accommodation cavity 111 in the first direction Z and not above the motor accommodation cavity 121.

Still refer to FIG. 2 and FIG. 3. In an embodiment, along the first direction Z, a projection of the heat exchanger 400 does not overlap a projection of the motor accommodation cavity 121, the projection of the heat exchanger 400 overlaps the projection of the reducer accommodation cavity 111, and the projection of the reducer accommodation cavity 111 does not overlap the projection of the motor accommodation cavity 121. Along the axial direction O of the motor, the projection of the heat exchanger 400 overlaps the projection of the motor accommodation cavity 121, and the projection of the heat exchanger 400 does not overlap the projection of the reducer accommodation cavity 111, so that the heat exchanger 400 is adjacent to the reducer accommodation cavity 111 and the motor accommodation cavity 121. The heat exchanger 400 does not occupy much space of the powertrain 10 in the first direction Z, the second direction X, and the third direction Y, to facilitate miniaturization of the powertrain 10.

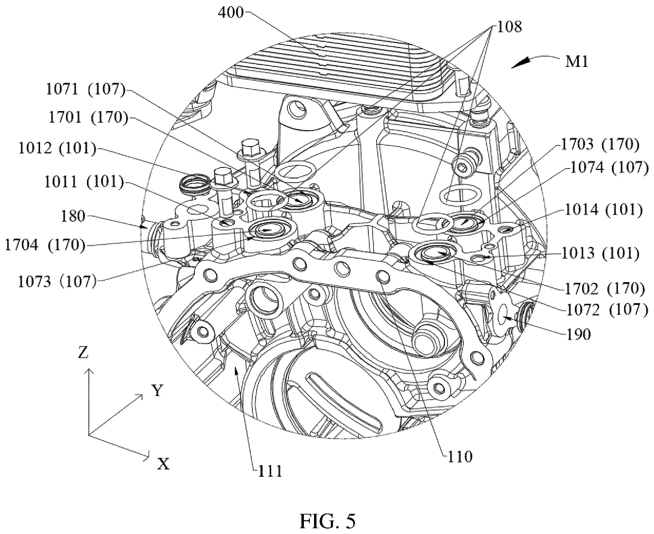

FIG. 5 is a locally enlarged view of a part M1 in the powertrain 10 shown in FIG. 3. In an embodiment, the die casting housing 100 further includes a plurality of housing mounting holes 101, the plurality of housing mounting holes 101 are arranged on peripheral sides of the four holes 170, and the housing mounting holes 101 are configured to fasten the heat exchanger 400; openings of the housing mounting holes 101 all face the heat exchanger 400; and along the first direction Z, end faces that are of the plurality of housing mounting holes 101 and that face the heat exchanger 400 are flush with the end faces that are of the four holes 170 and that face the heat exchanger 400.

The housing mounting holes 101 are located above the reducer accommodation cavity 111 of the die casting housing 100, and the housing mounting holes 101 are all arranged on the peripheral sides of the four holes 170, to facilitate mounting and fastening of the heat exchanger 400 and the die casting housing 100. That the openings of the housing mounting holes 101 all face the heat exchanger 400 also helps provide more convenience for mounting of the heat exchanger 400 on the die casting housing 100, to make mounting simple. In an embodiment of this application, there are four housing mounting holes 101, and the four housing mounting holes 101 are a first housing mounting hole 1011, a second housing mounting hole 1012, a third housing mounting hole 1013, and a fourth housing mounting hole 1014. The first housing mounting hole 1011 and the second housing mounting hole 1012 are sequentially arranged along the third direction Y, a projection of the first housing mounting hole 1011 and a projection of the second housing mounting hole 1012 along the third direction Y coincide, the third housing mounting hole 1013 and the fourth housing mounting hole 1014 are sequentially arranged along the third direction Y, and a projection of the third housing mounting hole 1013 and a projection of the fourth housing mounting hole 1014 along the third direction Y coincide. In this implementation solution, the holes are arranged regularly and symmetrically, to facilitate direct casting through processing in a mold, and facilitate production.

In this embodiment of this application, the housing mounting holes 101 are flush with the end faces that are of the four holes 170 and that face the heat exchanger 400 in the first direction Z. In other words, a plane is provided on the die casting housing 100 for mounting of the heat exchanger 400, and a structure is regular. In addition, communication and sealing between the four holes 170 and the oil passage and the liquid passage in the heat exchanger 400 are facilitated. The housing mounting holes 101 not only play a role in mounting of the heat exchanger 400 on the die casting housing 100, but also provide assistance for a connection and sealing between the four holes 170 and the heat exchanger 400.

Still refer to FIG. 5. In an embodiment, the two holes 170 include a housing liquid inlet hole 1701 and a housing liquid outlet hole 1702, and the other two holes 170 include a housing oil inlet hole 1703 and a housing oil outlet hole 1704; along a second direction X, the housing liquid outlet hole 1702 and the housing oil outlet hole 1704 are sequentially arranged, the housing oil inlet hole 1703 and the housing liquid inlet hole 1701 are sequentially arranged, and the second direction X is perpendicular to the first direction Z and an axial direction O of the motor; and along the axial direction O of the motor, the housing oil outlet hole 1704, the housing liquid inlet hole 1701, and the motor accommodation cavity 121 are sequentially arranged at intervals, and the housing liquid outlet hole 1702, the housing oil inlet hole 1703, and the motor accommodation cavity 121 are sequentially arranged at intervals.

As shown in FIG. 5, in this embodiment of this application, the housing liquid inlet hole 1701, the housing liquid outlet hole 1702, the housing oil inlet hole 1703, and the housing oil outlet hole 1704 are arranged diagonally in a cross manner, to help implement a cross distribution of the oil passage and the liquid passage in the die casting housing 100 or the oil passage and the liquid passage in the heat exchanger 400, and facilitate heat exchange between the oil passage and the liquid passage. The housing oil outlet hole 1704, the housing liquid inlet hole 1701, and the motor accommodation cavity 121 are sequentially arranged at intervals, and the housing liquid outlet hole 1702, the housing oil inlet hole 1703, and the motor accommodation cavity 121 are sequentially arranged at intervals, to help implement mutual isolation between flowing of the coolant and flowing of the coolant oil, and avoid mutual leakage.

Refer to FIG. 3 and FIG. 5. In this embodiment of this application, the two holes 170 are located on the die casting housing 100, the two holes 170 include the housing liquid inlet hole 1701 and the housing liquid outlet hole 1702, and the liquid passage in the die casting housing 100 communicates with the liquid passage in the heat exchanger 400 through the housing liquid inlet hole 1701 and the housing liquid outlet hole 1702. In this embodiment of this application, the housing liquid outlet hole 1702 transfers, to the heat exchanger 400, the coolant transferred from the die casting housing 100, and the housing liquid inlet hole 1701 inputs, to the die casting housing 100, a coolant that heats up after heat exchange by the heat exchanger 400, and outputs the coolant to a cooling system of an entire vehicle through the liquid passage in the die casting housing 100.

Refer to FIG. 3 and FIG. 5. In this embodiment of this application, the other two holes 170 are located on the die casting housing 100, the other two holes 170 include the housing oil inlet hole 1703 and the housing oil outlet hole 1704, and the oil passage in the die casting housing 100 communicate with the oil passage in the heat exchanger 400 through the housing oil inlet hole 1703 and the housing oil outlet hole 1704. In this embodiment of this application, the housing oil outlet hole 1704 transfers, to the heat exchanger 400, coolant oil transferred from the die casting housing 100, the housing oil inlet hole 1703 inputs the coolant oil cooled by the heat exchanger 400 to the die casting housing 100, and the coolant oil enters the reducer accommodation cavity 111 and the motor accommodation cavity 121 through the oil passage in the die casting housing 100, to cool and lubricate a part inside the reducer 200 or the motor 300.

A type of the coolant includes water, methanol, ethylene glycol, glycol, glycerol, or another liquid medium, to cool a hot coolant oil during running of the entire vehicle. For example, the coolant is water. A type of the coolant oil includes an ethylene glycol coolant oil, a synthetic oil, a mineral oil, or the like. For example, the coolant oil is an ethylene glycol coolant oil.

Still refer to FIG. 5. In an embodiment, the housing oil outlet hole 1704, the housing liquid inlet hole 1701, the housing liquid outlet hole 1702, and the housing oil inlet hole 1703 all protrude from the die casting housing 100, and surfaces of the housing oil outlet hole 1704, the housing liquid inlet hole 1701, the housing liquid outlet hole 1702, and the housing oil inlet hole 1703 are flush in the first direction Z and are located on a same horizontal plane. In this embodiment of this application, an arrangement manner of the housing oil outlet hole 1704, the housing liquid inlet hole 1701, the housing liquid outlet hole 1702, and the housing oil inlet hole 1703 on the die casting housing 100 facilitates a connection to openings of the oil passage and the liquid passage in the heat exchanger 400, and facilitates communication and sealing between the oil passage and the liquid passage in the die casting housing 100 and the oil passage and the liquid passage in the heat exchanger 400.

It should be noted that, in this embodiment of this application, the projection along the first direction Z is a projection along the first direction Z on a projective plane perpendicular to the first direction Z. The projective plane of the projection along the first direction Z is perpendicular to the first direction Z. A projection along the second direction X is a projection along the second direction X on a projective plane perpendicular to the second direction X. The projective plane of the projection along the second direction X is perpendicular to the second direction X. A projection along the third direction Y is a projection along the third direction Y on a projective plane perpendicular to the third direction Y. The projective plane of the projection along the third direction Y is perpendicular to the third direction Y.

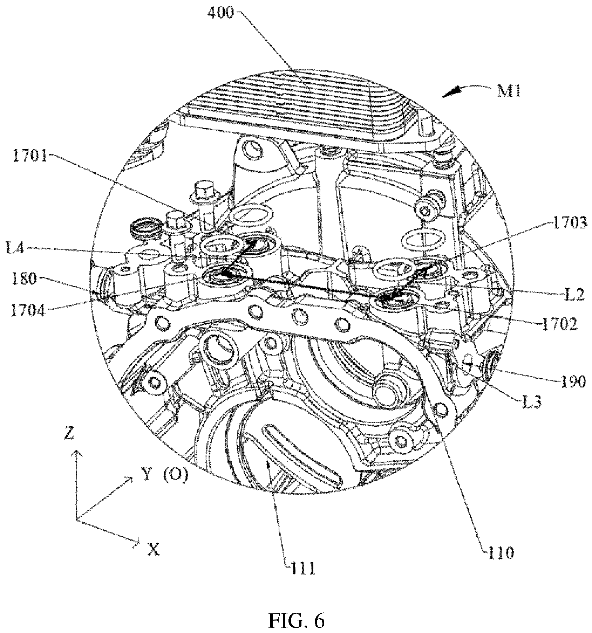

FIG. 6 is a locally enlarged view of a part M1 in the powertrain 10 shown in FIG. 3. In an embodiment, a distance between a center of the housing liquid outlet hole 1702 and a center of the housing oil inlet hole 1703 along the axial direction O of the motor is less than a distance between the center of the housing liquid outlet hole 1702 and a center of the housing oil outlet hole 1704 along the second direction X; and a distance between the center of the housing oil outlet hole 1704 and a center of the housing liquid inlet hole 1701 along the axial direction O of the motor is less than a distance between the center of the housing liquid outlet hole 1702 and the center of the housing oil outlet hole 1704 along the second direction X.

As shown in FIG. 6, in this embodiment of this application, the distance between the center of the housing liquid outlet hole 1702 and the center of the housing oil inlet hole 1703 along the axial direction O of the motor is denoted as L2, the distance between the center of the housing liquid outlet hole 1702 and the center of the housing oil outlet hole 1704 along the second direction X is denoted as L3, the distance between the center of the housing oil outlet hole 1704 and the center of the housing liquid inlet hole 1701 in the axial direction O of the motor is denoted as L4, L2<L3, and L4<L3. A layout of the housing oil outlet hole 1704, the housing oil inlet hole 1703, the housing liquid inlet hole 1701, and the housing liquid outlet hole 1702 is proper, to facilitate implementation of a process of performing processing by using a mold, make production simpler, and increase a production yield.

Refer to FIG. 2. In an embodiment, the die casting housing 100 further includes a general liquid inlet hole 190 and a general liquid outlet hole 180, the general liquid inlet hole 190 is configured to communicate with the housing liquid outlet hole 1702 through an internal liquid passage in the die casting housing 100, the general liquid outlet hole 180 is configured to communicate with the housing liquid inlet hole 1701 through the internal liquid passage in the die casting housing 100, and the general liquid inlet hole 190 and the general liquid outlet hole 180 are arranged along the first direction Z at one end that is of the four holes 170 and that faces away from the heat exchanger 400. In this embodiment of this application, the die casting housing 100 includes the general liquid inlet hole 190 and the general liquid outlet hole 180, so that a coolant entering from the general liquid inlet hole 190 flows through the liquid passage in the die casting housing 100 and then enters the heat exchanger 400 through the housing liquid outlet hole 1702, and the coolant can cool a part in the die casting housing 100, for example, may cool the reducer 200. Compared with a case in which the general liquid inlet hole 190 is disposed in the heat exchanger 400, in this embodiment of this application, it is more conducive to improving a heat exchange effect.

The general liquid inlet hole 190 is configured to input a coolant from the cooling system of the entire vehicle, and the general liquid outlet hole 180 is configured to output a coolant after heat exchange with a hot coolant oil. The coolant entering from the general liquid inlet hole 190 enters the liquid passage in the heat exchanger 400 through the liquid passage in the die casting housing 100 and the housing liquid outlet hole 1702, the liquid passage in the heat exchanger 400 performs heat exchange with the oil passage in the heat exchanger 400, and the coolant in the liquid passage absorbs heat of the coolant oil in the oil passage, enters the liquid passage in the die casting housing 100 through the housing liquid inlet hole 1701 in the die casting housing 100, and is output from the general liquid outlet hole 180. In this application, the heat exchanger 400 is configured to perform heat exchange on a hot coolant oil of the entire vehicle, the general liquid inlet hole 190 is configured to receive the coolant, the general liquid outlet hole 180 is configured to output a coolant cooled by the heat exchanger 400, and the coolant that has heated up returns to a coolant circulation system of the entire vehicle.

In this embodiment of this application, the die casting housing 100 includes the general liquid inlet hole 190 and the general liquid outlet hole 180, and the general liquid inlet hole 190 and the general liquid outlet hole 180 are a part of the die casting housing 100. Compared with a case in which the general liquid inlet hole 190 and the general liquid outlet hole 180 are disposed on the heat exchanger 400, in this embodiment of this application, the die casting housing 100 including the general liquid inlet hole 190 and the general liquid outlet hole 180 can improve a degree of integration of the powertrain 10, so that space utilization of the powertrain 10 is increased.

Still refer to FIG. 3 and FIG. 5. In an embodiment, an axis of the general liquid inlet hole 190 and an axis of the general liquid outlet hole 180 are parallel to the second direction X, and an opening of the general liquid inlet hole 190 and an opening of the general liquid outlet hole 180 face opposite directions along the second direction X; along the second direction X, the general liquid inlet hole 190, the housing liquid outlet hole 1702, and the housing oil outlet hole 1704 are sequentially arranged, and the general liquid inlet hole 190 and the housing liquid outlet hole 1702 are adjacent to and communicate with each other; and along the second direction X, the housing oil inlet hole 1703, the housing liquid inlet hole 1701, and the general liquid outlet hole 180 are sequentially arranged, and the housing liquid inlet hole 1701 and the general liquid outlet hole 180 are adjacent to and communicate with each other. The housing liquid outlet hole 1702, the housing oil outlet hole 1704, the housing oil inlet hole 1703, and the housing liquid inlet hole 1701 are all located on the die casting housing 100, and all projections in the first direction Z fall into the heat exchanger 400. In other words, the general liquid inlet hole 190, the heat exchanger 400, and the general liquid outlet hole 180 are arranged along the second direction X. The general liquid inlet hole 190 and the general liquid outlet hole 180 are arranged on two sides of the heat exchanger 400 and are arranged on two side ends of the die casting housing 100. In this way, the general liquid inlet hole 190 and the general liquid outlet hole 180 are separated, to ensure isolation of an inlet liquid and an outlet liquid, facilitate mounting of the general liquid inlet hole 190, the general liquid outlet hole 180, and a water pipe, and improve ease of assembly.

As shown in FIG. 3 and FIG. 5, in an embodiment, the general liquid inlet hole 190 and the general liquid outlet hole 180 are spaced apart with the heat exchanger 400 along the first direction Z, and the general liquid inlet hole 190, the heat exchanger 400, and the general liquid outlet hole 180 are sequentially arranged along the second direction X. The second direction X is perpendicular to the first direction Z and the axial direction O of the motor. In another embodiment, the general liquid inlet hole 190 and the general liquid outlet hole 180 may also be arranged at other relative positions of the die casting housing 100. For example, the general liquid inlet hole 190 and the general liquid outlet hole 180 are disposed on a same side of the heat exchanger 400 along the second direction X, the first direction Z, or the third direction Y. In another embodiment, the general liquid inlet hole 190, the heat exchanger 400, and the general liquid outlet hole 180 are sequentially arranged along the third direction Y, or an arrangement order of the general liquid inlet hole 190 and the general liquid outlet hole 180 is opposite to that in the embodiment shown in FIG. 2. Compared with this, a layout in FIG. 2 in this embodiment of this application facilitates an arrangement of an external water pipe in the powertrain 10, and shortens a length of a pipe required for connecting the general liquid inlet hole 190 and an electrically controlled liquid outlet hole 151 of the motor controller 500, and a length of a pipe required for the coolant flowing out of the general liquid outlet hole 180 to flow back to the cooling system of the entire vehicle. In this way, the powertrain 10 has a more compact overall layout, and occupies less space, to help reduce a volume of the powertrain 10, and optimize a layout of the entire vehicle.

Refer to FIG. 2. In an embodiment, the heat exchanger 400, the general liquid inlet hole 190, and the general liquid outlet hole 180 are arranged adjacent to the reducer accommodation cavity 111.

In this embodiment of this application, the heat exchanger 400, the general liquid inlet hole 190, and the general liquid outlet hole 180 are arranged adjacent to the reducer accommodation cavity 111, so that a path for transmitting a coolant entering from the general liquid inlet hole 190 to the heat exchanger 400 is shorter, and a path for transmitting a coolant after heat exchange by the heat exchanger 400 to the general liquid outlet hole 180 is shorter, to help ensure a heat exchange effect of the coolant and the oil passage in the heat exchanger 400, and further help make a structure layout of the heat exchanger 400, the general liquid inlet hole 190, and the general liquid outlet hole 180 more centralized. In this embodiment of this application, the general liquid inlet hole 190 and the general liquid outlet hole 180 occupy small space along the second direction X, and do not occupy space of the reducer accommodation cavity 111 along the second direction X. In this way, space occupied by the die casting housing 100 along the second direction X is also reduced, to help make the powertrain 10 have a more compact layout, and reduce space that is of a vehicle body and that is occupied by the powertrain 10.

Refer to FIG. 3. In an embodiment, the die casting housing 100 further includes a motor shaft hole 102, the motor shaft hole 102 is configured to accommodate a part of a motor shaft, the motor shaft is configured to be drivingly connected to a reducer input shaft 210 in the reducer 200, the motor shaft hole 102 communicates with both the reducer accommodation cavity 111 and an inside of the motor accommodation cavity 121, and the reducer accommodation cavity 111, the motor shaft hole 102, and the motor accommodation cavity 121 are sequentially arranged along the axial direction O of the motor.

In this embodiment of this application, the die casting housing 100 is formed through integrated die casting, the reducer accommodation cavity 111 is configured to accommodate the reducer 200, the motor accommodation cavity 121 is configured to accommodate the motor 300, the motor shaft hole 102 is located inside the motor 300, a motor stator in the motor 300 is configured to receive an alternating current output by the motor controller 500, and drive a motor rotor and the motor shaft in the motor 300 to rotate, and the motor shaft rotates to drive the reducer input shaft 210 to rotate. The reducer accommodation cavity 111, the motor shaft hole 102, and the motor accommodation cavity 121 are sequentially arranged along the axial direction O of the motor, to facilitate a driving connection between the motor shaft and the reducer input shaft 210.

Still refer to FIG. 3. In an embodiment, along the first direction Z, both the general liquid inlet hole 190 and the general liquid outlet hole 180 are located between the four holes 170 and an axis of the motor shaft hole 102. Along the axial direction O of the motor, the general liquid inlet hole 190, the general liquid outlet hole 180, the motor shaft hole 102, and the motor accommodation cavity 121 are sequentially arranged.

As shown in FIG. 3, in this embodiment of this application, the general liquid inlet hole 190, the general liquid outlet hole 180, and the four holes 170 are all located on the die casting housing 100, and the general liquid inlet hole 190 and the general liquid outlet hole 180 are located below the four holes 170 in the first direction Z, so that the coolant enters the heat exchanger 400 from an upper part of the die casting housing 100, and a coolant that has performed heat exchange with the heat exchanger 400 also flows into the die casting housing 100 from the upper part of the die casting housing 100. In this way, a path through which the coolant flows is shorter and smoother, to improve a heat exchange effect. A coolant that enters the die casting housing 100 from the general liquid inlet hole 190 flows through the liquid passage in the die casting housing 100 and then enters the heat exchanger 400 through a short path, so that a cooling effect on the oil passage in the heat exchanger 400 can be improved, and a cooling effect of the coolant oil in the oil passage on the reducer 200 and the motor 300 can be improved, to ensure operating efficiency of the powertrain 10. Both the general liquid inlet hole 190 and the general liquid outlet hole 180 are located between the four holes 170 and the axis of the motor shaft hole 102, so that the general liquid inlet hole 190, the general liquid outlet hole 180, and the four holes 170 are compactly arranged along the first direction Z, and a structure of the powertrain 10 is miniaturized.

Refer to FIG. 4. In an embodiment, the die casting housing 100 further includes a reducer oil hole 164, and the reducer oil hole 164 is configured to communicate with the housing oil inlet hole 1703 through an internal oil passage in the die casting housing 100; an axis of the reducer oil hole 164 is parallel to the axial direction O of the motor, and an opening of the reducer oil hole 164 faces away from the motor accommodation cavity 121 along the axial direction O of the motor; the reducer oil hole 164, the housing oil inlet hole 1703, and the heat exchanger 400 are sequentially arranged along the first direction Z; and the reducer oil hole 164 is connected to the housing oil inlet hole 1703, and the reducer oil hole 164 is separated from the housing liquid outlet hole 1702.

As shown in FIG. 4, in this embodiment of this application, the reducer oil hole 164 is formed through integrated die casting and drawing, and a process is simple. The coolant oil in the die casting housing 100 may flow into the reducer oil hole 164 through the housing oil inlet hole 1703, and the reducer oil hole 164 may further transfer the coolant oil to a part inside the reducer 200, to cool and lubricate the reducer 200. The axis of the reducer oil hole 164 is parallel to the axial direction O of the motor, and the opening of the reducer oil hole 164 faces away from the motor accommodation cavity 121 along the axial direction O of the motor. This facilitates drawing in a forming process of the die casting housing 100, and also facilitates a regular arrangement of the reducer oil hole 164 on the die casting housing 100. The reducer oil hole 164, the housing oil inlet hole 1703, and the heat exchanger 400 are sequentially arranged in the first direction Z, so that the coolant oil cooled by the heat exchanger 400 flows from the heat exchanger 400 through the housing oil inlet hole 1703 and the reducer oil hole 164 sequentially to cool and lubricate the part inside the reducer 200. In addition, in this layout manner, a flow direction of the coolant oil is a gravity direction, to help reduce an energy loss. The reducer oil hole 164 is connected to the housing oil inlet hole 1703, so that the coolant oil in the heat exchanger 400 flows into the die casting housing 100 from the housing oil inlet hole 1703. The reducer oil hole 164 is isolated from the housing liquid outlet hole 1702, to help avoid mutual leakage of the coolant oil and the coolant in the die casting housing 100 in a flowing process.

It should be noted that the reducer oil hole 164 may include a reducer oil passage protrusion 160 and a reducer end cover 130 that are formed through integrated die casting in the die casting housing 100. That is, the reducer oil hole 164 may alternatively be a protruding oil hole 162. In some embodiments, if there is no reducer oil passage protrusion 160, the opening of the reducer oil hole 164 may be flush with an end face that is of the die casting housing 100 and that faces the reducer end cover.

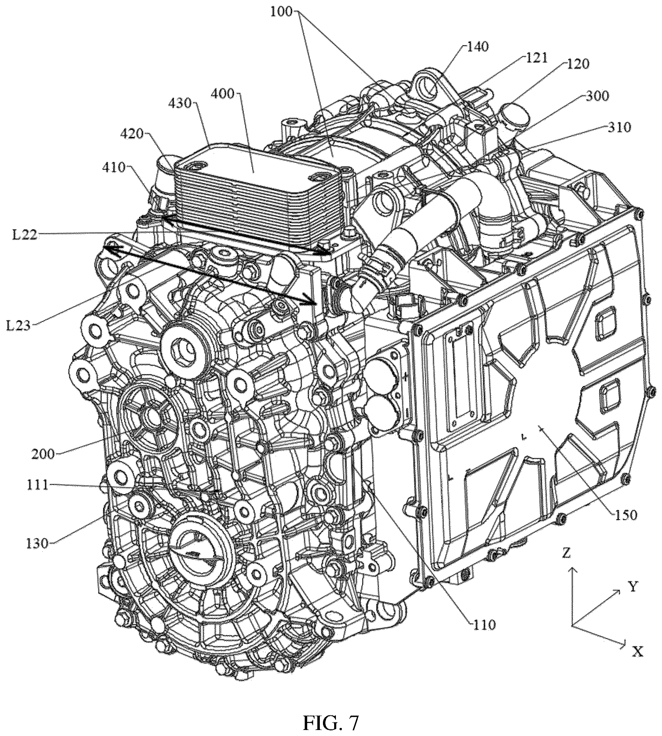

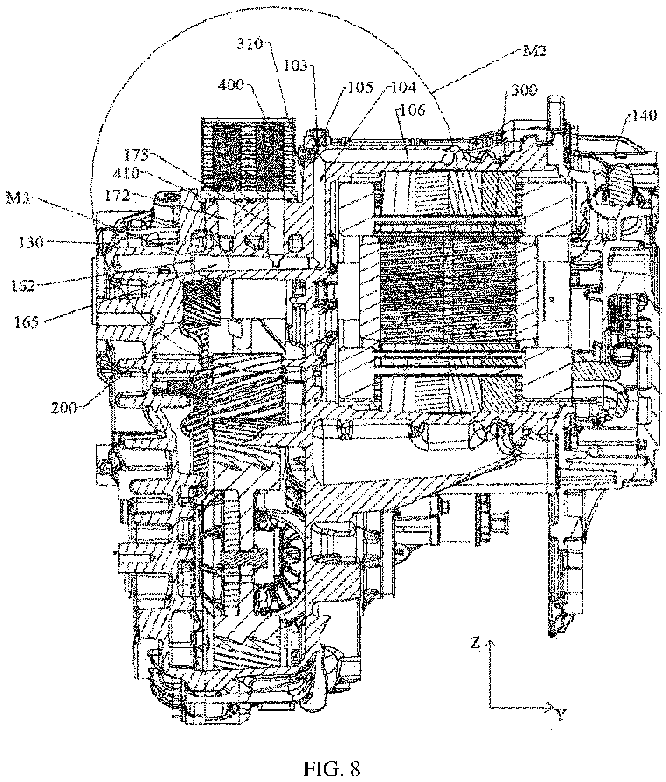

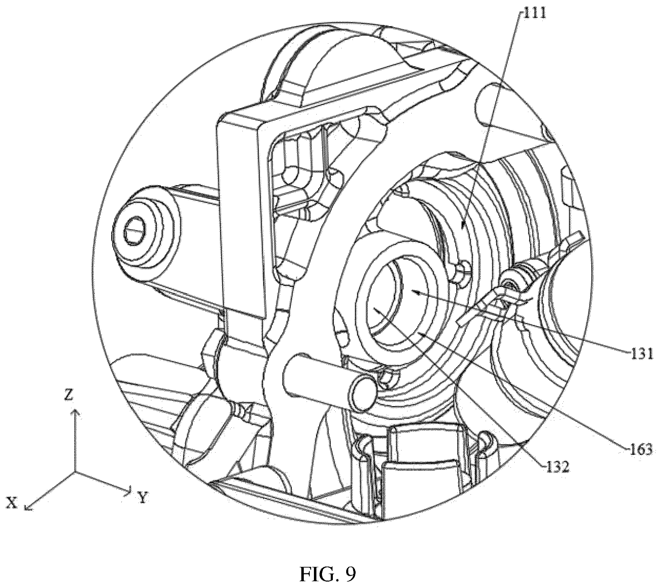

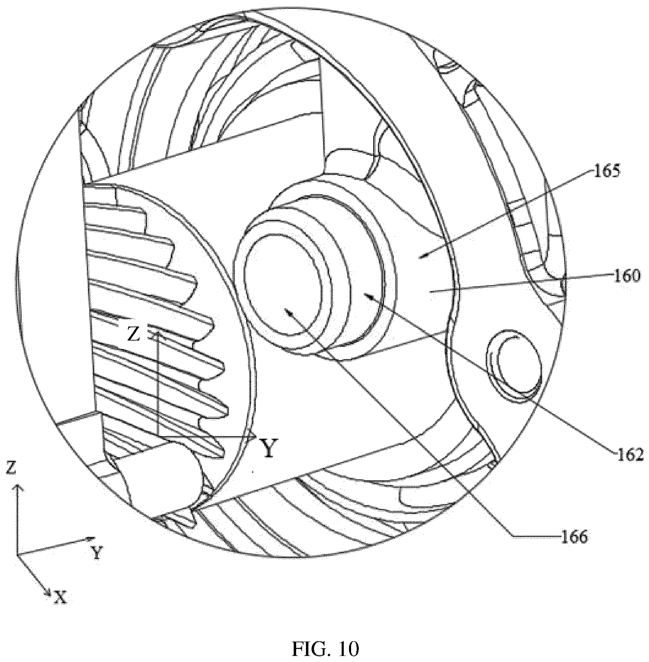

FIG. 7 is a diagram of a structure of a powertrain according to an embodiment of this application. FIG. 8 is a sectional view of a powertrain 10 along an axial direction O of a motor according to an embodiment of this application. FIG. 9 is a diagram of a partial structure of a powertrain 10 according to an embodiment of this application. FIG. 10 is a diagram of a partial structure of a powertrain 10 according to an embodiment of this application. In an embodiment, the die casting housing 100 includes a reducer accommodation cavity 111, a motor accommodation cavity 121, and a reducer oil passage protrusion 160 that are formed through integrated die casting. The reducer accommodation cavity 111 and the motor accommodation cavity 121 are respectively configured to accommodate cavity the reducer 200 and the motor 300. The powertrain 10 further includes the reducer end cover 130, and the reducer end cover 130, the reducer accommodation cavity 111, and the motor accommodation cavity 121 are sequentially arranged along the axial direction O of the motor. The reducer oil passage protrusion 160 protrudes from an end face of the die casting housing 100 toward the reducer end cover 130 along the axial direction O of the motor, the reducer oil passage protrusion 160 is configured to be embedded into an internal oil passage in the reducer end cover 130, the reducer oil passage protrusion 160 further includes a protruding oil hole 162, an opening of the protruding oil hole 162 faces the reducer end cover 130, and the protruding oil hole 162 is configured to directly communicate with the internal oil passage in the reducer end cover 130 and is configured to communicate with the motor accommodation cavity 121 through the internal oil passage in the die casting housing 100.

As shown in FIG. 7, FIG. 8, FIG. 9, and FIG. 10, in this embodiment of this application, the die casting housing 100 is formed through integrated die casting, to help improve reliability of the powertrain 10. The reducer end cover 130 is configured to cover the reducer accommodation cavity 111. The powertrain 10 further includes a motor end cover 140. The motor end cover 140 is configured to cover the motor accommodation cavity 121. The reducer 200 and the motor 300 generate a large amount of heat in an operating process, and need to be cooled and lubricated by using coolant oil, and the reducer oil passage protrusion 160 and the reducer end cover 130 are embedded into each other, so that the die casting housing 100 is connected to the reducer end cover 130. The protruding oil hole 162 of the reducer oil passage protrusion 160 and the internal oil passage in the reducer end cover 130 communicate with each other, to transfer the coolant oil from the heat exchanger 400, so that the coolant oil can flow inside the die casting housing 100 and inside the reducer end cover 130, and the reducer 200 and the motor 300 are cooled and lubricated.

In this embodiment of this application, the protruding oil hole 162 and the internal oil passage in the reducer end cover 130 are connected through a mutually embedded structure, and the coolant oil is output to the reducer 200 or a motor shaft system for cooling and lubrication. An oil sealing hole 163 is formed through cooperation of a housing structure to seal the oil passage, without a need to additionally use a sealing ring or a sealing washer, to meet requirements such as a reduced quantity of parts, simple assembly, reliable functions, and smooth oil flow, and improve reliability of the powertrain 10.

In an embodiment, the internal oil passage in the reducer end cover 130 and the protruding oil hole 162 of the reducer oil passage protrusion 160 are formed through drawing, and a process is simple. The internal oil passage in the reducer end cover 130 and the protruding oil hole 162 of the reducer oil passage protrusion 160 communicate with each other, and the opening of the protruding oil hole 162 faces the reducer end cover 130, to help the coolant oil flow from the protruding oil hole 162 of the reducer oil passage protrusion 160 to the internal oil passage in the reducer end cover 130.

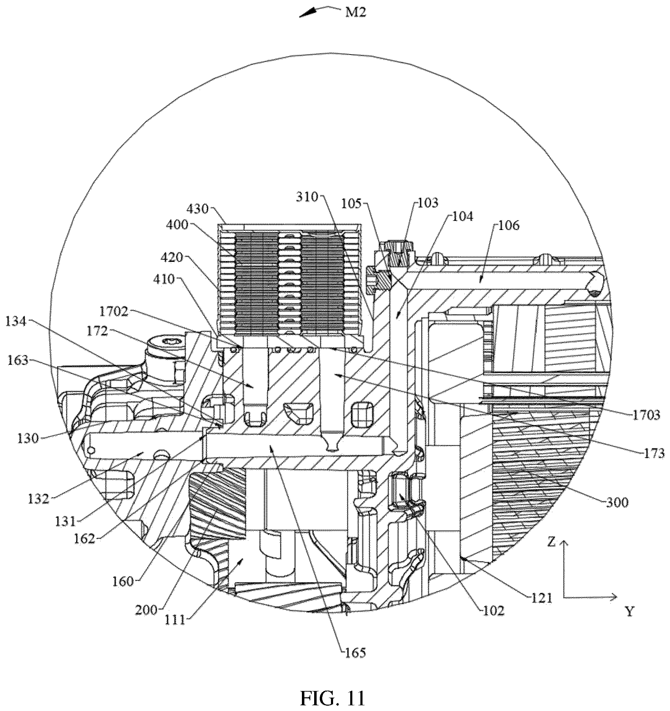

FIG. 11 is a locally enlarged view of a part M2 in the sectional view of the powertrain 10 in FIG. 8. In an embodiment, the reducer end cover 130 includes an end cover oil hole 131 formed inside the reducer end cover 130 through die casting, the end cover oil hole 131 is configured to communicate with the protruding oil hole 162, an opening of the end cover oil hole 131 faces the die casting housing 100 along the axial direction O of the motor, and the end cover oil hole 131 is configured to accommodate the reducer oil passage protrusion 160.

As shown in FIG. 11, in this embodiment of this application, the reducer end cover 130 is configured to cover the reducer accommodation cavity 111, the reducer accommodation cavity 111 is configured to accommodate the reducer 200, and the end cover oil hole 131 inside the reducer end cover 130 is formed through die casting and drawing, and a process is simple. The end cover oil hole 131 inside the reducer end cover 130 communicates with the protruding oil hole 162 of the reducer oil passage protrusion 160, to transfer the coolant oil. The opening of the end cover oil hole 131 faces the die casting housing 100 along the axial direction O of the motor, so that the end cover oil hole 131 can accommodate the reducer oil passage protrusion 160 in the die casting housing 100, and the oil passage in the reducer end cover 130 communicates with the oil passage in the die casting housing 100. The coolant oil flows from the protruding oil hole 162 of the reducer oil passage protrusion 160 to the end cover oil hole 131 inside the reducer end cover 130.

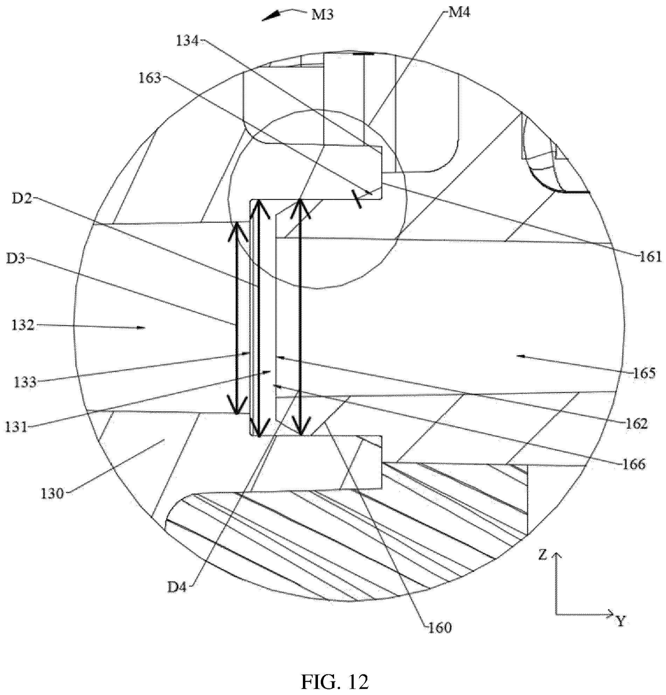

Refer to FIG. 8 and FIG. 12. FIG. 12 is a locally enlarged view of a part M3 in the sectional view of the powertrain 10 in FIG. 8. In an embodiment, the reducer end cover 130 further includes an end cover oil passage 132, and the end cover oil hole 131 and the end cover oil passage 132 are arranged along the axial direction O of the motor. A projection of the reducer oil passage protrusion 160 partially overlaps a projection of the end cover oil hole 131 along the radial direction R of the motor. The reducer oil passage protrusion 160 and the end cover oil passage 132 are spaced apart along the axial direction O of the motor. An inner diameter of the end cover oil hole 131 is greater than an inner diameter of the end cover oil passage 132, and an outer diameter of the reducer oil passage protrusion 160 is greater than the inner diameter of the end cover oil passage 132.

As shown in FIG. 8 and FIG. 12, in this embodiment of this application, the end cover oil passage 132 is located in the reducer end cover 130, the end cover oil hole 131 communicates with the end cover oil passage 132, and the end cover oil passage 132 is used for flowing of coolant oil input through the protruding oil hole 162 of the reducer oil passage protrusion 160 accommodated by the end cover oil hole 131, to cool an internal part of the reducer 200. The coolant oil sequentially flows through the protruding oil hole 162 of the reducer oil passage protrusion 160, the end cover oil hole 131, and the end cover oil passage 132. The projection of the reducer oil passage protrusion 160 partially overlaps the projection of the end cover oil hole 131 along the radial direction R of the motor, to help ensure effective communication between the reducer oil passage protrusion 160 and the end cover oil hole 131, and facilitate communication between an oil passage in a protrusion of the reducer 200 and the end cover oil passage 132 in the reducer end cover 130, and sealing when the coolant oil flows from the oil passage in the protrusion of the reducer 200 to the end cover oil passage 132.

As shown in FIG. 12, in this embodiment of this application, the reducer oil passage protrusion 160 and the oil passage in the reducer end cover 130 are connected through the protruding oil hole 162, and are sequentially arranged along the axial direction O of the motor. The projection of the reducer oil passage protrusion 160 partially overlaps the projection of the reducer end cover 130 along the radial direction R of the motor. The protruding oil hole 162 and the end cover oil passage 132 are respectively surrounded by the die casting housing 100 and the reducer end cover 130, so that the coolant oil from the heat exchanger 400 reaches the reducer 200 or the motor 300 located in the die casting housing 100 more quickly. In addition, in such an arrangement manner, space outside a periphery of the die casting housing 100 and the reducer end cover 130 is not occupied, to help the powertrain 10 to have a compact structure, and reduce an overall volume of the powertrain 10.

As shown in FIG. 12, in this embodiment of this application, the inner diameter of the end cover oil hole 131 is denoted as D2, the inner diameter of the end cover oil passage 132 is denoted as D3, the outer diameter of the reducer oil passage protrusion 160 is denoted as D4, D2>D3, and D4>D3. In a coolant oil flowing process, a reduction of an inner diameter of a pipe helps increase an oil pressure when the coolant oil flows from the end cover oil hole 131 to the end cover oil passage 132, and ensure that the oil pressure of the coolant oil is not reduced in the flowing process. This helps the coolant oil more smoothly sprayed on a part of the reducer 200 to cool and lubricate the reducer 200, and the coolant oil does not easily flow out from a gap between the reducer oil passage protrusion 160 and the end cover oil hole 131. In this way, sealing between the end cover oil hole 131 and the reducer oil passage protrusion 160 is ensured, and no additional sealing element needs to be added, to reduce costs.

As shown in FIG. 12, in an embodiment, a difference between the inner diameter of the end cover oil hole 131 and the outer diameter of the reducer oil passage protrusion 160 is greater than or equal to 0.1 mm and less than or equal to 0.2 mm along the radial direction R of the motor.

In this embodiment of this application, the difference between the inner diameter of the end cover oil hole 131 and the outer diameter of the reducer oil passage protrusion 160 is denoted as L5, L5=(D2-D4), and a value of L1 can be precisely controlled only when certain flatness of mutually embedded contact faces is ensured. Both the inner diameter of the end cover oil hole 131 and the outer diameter of the reducer oil passage protrusion 160 are formed through machining, contributing to a smoother surface and ensuring ease of assembly as well as effective sealing.

As shown in FIG. 12, in an embodiment, L5=(D2-D4)=0.2 mm, so that structural cooperation between the end cover oil hole 131 and the reducer oil passage protrusion 160 is more convenient, ensuring ease of assembly as well as effective sealing.

As shown in FIG. 12, in an embodiment, L5=(D2-D4)=0.15 mm, ensuring ease of assembly as well as effective sealing.

The projection along the radial direction R of the motor is a projection along the radial direction R of the motor on a projective plane perpendicular to the radial direction R of the motor. A projective plane of the projection along the radial direction R of the motor is perpendicular to the radial direction R of the motor. The projection along the axial direction O of the motor is a projection along the axial direction O of the motor on a projective plane perpendicular to the axial direction O of the motor. The projective plane along the axial direction O of the motor is perpendicular to the axial direction O of the motor.

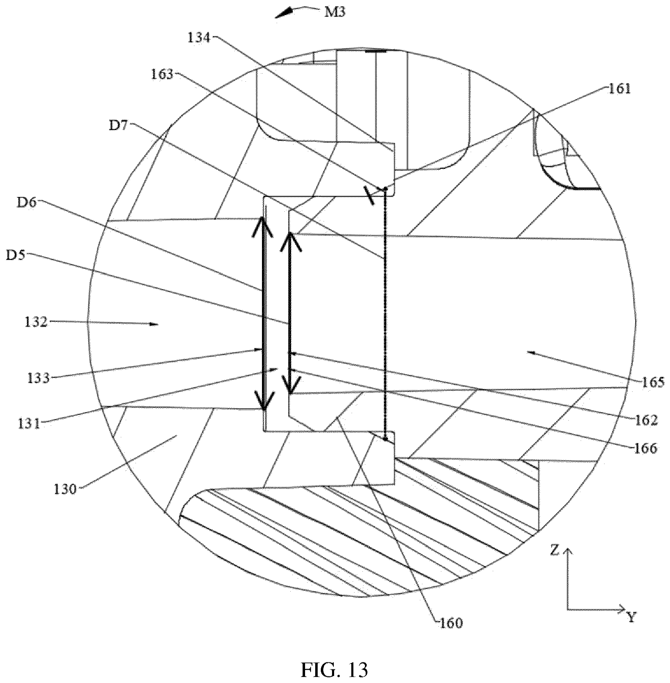

FIG. 13 is a locally enlarged view of a part M3 in the sectional view of the powertrain 10 in FIG. 8. In an embodiment, along the axial direction O of the motor, the protruding oil hole 162 includes an outlet 166 facing the end cover oil passage 132, the end cover oil passage 132 includes an inlet 133 facing the protruding oil hole 162, and an inner diameter of the outlet 166 of the protruding oil hole 162 is less than an inner diameter of the inlet 133 of the end cover oil passage 132.

As shown in FIG. 13, in this embodiment of this application, the protruding oil hole 162 is located at the reducer oil passage protrusion 160, the end cover oil passage 132 is a part of the oil passage in the reducer end cover 130, the outlet 166 of the protruding oil hole 162 is a position at which the coolant oil flows out of the reducer oil passage protrusion 160, and the inlet 133 of the end cover oil passage 132 is a position at which the coolant oil flows into the end cover oil passage 132 in the reducer end cover 130. In this embodiment of this application, both the protruding oil hole 162 and the end cover oil passage 132 are configured to transfer the coolant oil, the outlet 166 of the protruding oil hole 162 faces the end cover oil passage 132, and the inlet 133 of the end cover oil passage 132 faces an oil passage in the protruding oil hole 162, so that the coolant oil flows smoothly from the protruding oil hole 162 into the end cover oil passage 132 in the reducer end cover 130 through a short path.

In this embodiment of this application, the inner diameter of the outlet 166 of the protruding oil hole 162 is denoted as D5, the inner diameter of the inlet 133 of the end cover oil passage 132 is denoted as D6, and D5<D6. This helps the end cover oil passage 132 accommodate all coolant oil transferred from the protruding oil hole 162, and better cool and lubricate the part of the reducer 200. D5<D6, to increase the oil pressure of the coolant oil in the flowing process, so that the coolant oil enters the end cover oil passage 132 at a higher speed, to prevent the coolant oil from entering the gap between the end cover oil hole 131 and the protruding oil hole 162, and improve a sealing effect.

Still refer to FIG. 11. In an embodiment, an axis of the protruding oil hole 162 is parallel to the axial direction O of the motor, and along the axial direction O of the motor, the inner diameter of the protruding oil hole 162 gradually decreases from an end facing the end cover oil passage 132 to an end away from the end cover oil passage 132, and the inner diameter of the end cover oil passage 132 gradually decreases from an end facing the protruding oil hole 162 to an end away from the protruding oil hole 162.

As shown in FIG. 11, in this embodiment of this application, the protruding oil hole 162 is located in the die casting housing 100, and the axis of the protruding oil hole 162 is parallel to the axial direction O of the motor, so that a drawing process of forming the protruding oil hole 162 in the die casting housing 100 is smoother and simpler. The end cover oil passage 132 is a part of the oil passage in the reducer end cover 130. The coolant oil flows from the reducer oil passage protrusion 160 to the end cover oil passage 132 in the reducer end cover 130.

As shown in FIG. 11, in this embodiment of this application, the inner diameter of the protruding oil hole 162 gradually decreases from the end facing the end cover oil passage 132 to the end away from the end cover oil passage 132. In other words, the inner diameter of the protruding oil hole 162 gradually increases from the end away from the end cover oil passage 132 to the end close to the end cover oil passage 132. This helps reduce resistance in a flowing process of a cooled coolant oil transferred by the protruding oil hole 162 from the heat exchanger 400, to better transfer the coolant oil to the protruding oil hole 162. However, the inner diameter of the end cover oil passage 132 gradually decreases from the end facing the protruding oil hole 162 to the end away from the protruding oil hole 162. This helps increase an oil pressure in a process in which coolant oil input from the protruding oil hole 162 flows to the end cover oil passage 132, and ensures that a flowing pressure of the coolant oil is not reduced, so that the coolant oil in the end cover oil passage 132 is better output to the reducer 200, to cool and lubricate the internal part of the reducer 200, and improve a sealing effect.

Refer to FIG. 12 and FIG. 13. In an embodiment, the reducer end cover 130 further includes an oil sealing hole 163. The oil sealing hole 163 is configured to accommodate the coolant oil and a part of the reducer oil passage protrusion 160. The end cover oil passage 132, the end cover oil hole 131, and the oil sealing hole 163 are sequentially arranged along the axial direction O of the motor. Along the radial direction R of the motor, an inner diameter of the oil sealing hole 163 is greater than an inner diameter of the end cover oil hole 131, and the inner diameter of the oil sealing hole 163 is greater than an outer diameter of the reducer oil passage protrusion 160. Along the axial direction O of the motor, the inner diameter of the oil sealing hole 163 gradually increases from the end facing the end cover oil hole 131 to the end away from the end cover oil hole 131.

As shown in FIG. 12 and FIG. 13, in this embodiment of this application, an inner wall of the oil sealing hole 163 fits and cooperates with the reducer oil passage protrusion 160 of the die casting housing 100 to form space for accommodating the coolant oil. The coolant oil accommodated in the oil sealing hole 163 is coolant oil flowing out from the reducer oil passage protrusion 160 that cooperates with the protruding oil hole 162 or the end cover oil hole 131.

As shown in FIG. 12 and FIG. 13, in this embodiment of this application, the inner diameter of the oil sealing hole 163 is denoted as D7, the inner diameter of the end cover oil hole 131 is denoted as D2, and the outer diameter of the reducer oil passage protrusion 160 is D4, D7>D2, and D7>D4. This helps enable the oil sealing hole 163 to accommodate coolant oil flowing out of the end cover oil passage 132 and the end cover oil hole 131. In this embodiment of this application, the oil sealing hole 163 is configured to implement sealing of communication between the protruding oil hole 162 and the end cover oil hole 131 in a mutually embedded manner, to store coolant oil flowing out of a gap formed between an inner wall of the end cover oil hole 131 and an outer wall of the reducer oil passage protrusion 160, and prevent leakage of the coolant oil, thereby ensuring a sealing effect of communication between the protruding oil hole 162 and the end cover oil hole 131. In addition, sealing is implemented without a need to additionally use a sealing ring, a sealing washer, or an end face coating glue. Sealing is implemented only through structural cooperation between housings, to reduce a quantity of used parts, reduce costs, and improve competitiveness.

In an embodiment, along the axial direction O of the motor, the inner diameter of the oil sealing hole 163 gradually increases from the end facing the end cover oil hole 131 to the end away from the end cover oil hole 131. In this way, when a surface contact angle formed between the inner wall of the oil sealing hole 163 and the outer wall of the reducer oil passage protrusion 160 becomes larger, the coolant oil is not easily leaked, and due to a trend in which the coolant oil gradually increases, a buffer force and resistance are formed due to diffusion and flowing of the coolant oil in the oil sealing hole 163, to prevent the coolant oil from being leaked from the oil sealing hole 163 to some extent.

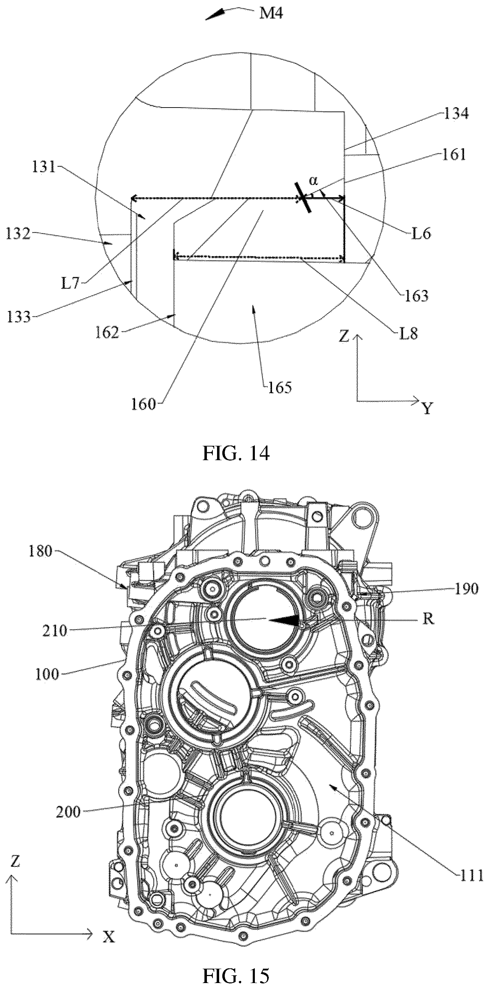

FIG. 14 is a locally enlarged view of a part M4 in the locally enlarged view of the powertrain 10 shown in FIG. 12. In an embodiment, an included angle between an inner surface of the oil sealing hole 163 and the axial direction O of the motor is less than 30°.

In this embodiment of this application, an included angle between the inner surface of the oil sealing hole 163 and the axial direction O of the motor is denoted as α. An included angle α<30° exists between the inner surface of the oil sealing hole 163 and the axial direction O of the motor, to ensure that enough tension can be formed in the oil sealing hole 163, so that when the coolant oil flows in the oil sealing hole 163, the coolant oil stops continuously spreading outward because local oil liquid tension is formed on the inner surface of the oil sealing hole 163, to prevent the coolant oil from continuously flowing outward and being leaked after flowing into the oil sealing hole 163.

As shown in FIG. 14, in an embodiment, along the axial direction O of the motor, a length of the oil sealing hole 163 is less than a length of the end cover oil hole 131, and the length of the oil sealing hole 163 is less than a difference between a length of the reducer oil passage protrusion 160 and the length of the oil sealing hole 163.

In this embodiment of this application, the inner surface of the oil sealing hole 163, an embedded oil sealing face 161, and an outer wall of a part of the reducer oil passage protrusion 160 surround and form oil sealing space, the end cover oil hole 131 is a part of the oil passage in the reducer end cover 130, and the end cover oil hole 131 is configured to accommodate the reducer oil passage protrusion 160. The length of the oil sealing hole 163 is denoted as L6, the length of the end cover oil hole 131 is denoted as L7, and the length of the reducer oil passage protrusion 160 is denoted as L8. In this embodiment of this application, L6<L7, and L6<(L8-L6). This helps the oil sealing hole 163 better seal the protruding oil hole 162 and the end cover oil hole 131. If L6>L7 and L6>L8-L6, the oil sealing hole 163 is likely to be too long, an overall volume of the oil sealing hole 163 becomes larger, and the oil sealing hole 163 stores more coolant oil. Consequently, the coolant oil forms a large impact force and has a risk of breaking through the oil sealing hole 163 and being leaked.

Refer to FIG. 11 and FIG. 14. In an embodiment, along the axial direction O of the motor, an end face that is of the reducer end cover 130 and that faces the die casting housing 100 includes an end cover oil sealing face 134, an end face that is of the die casting housing 100 and that faces the reducer end cover 130 includes the embedded oil sealing face 161, the end cover oil sealing face 134 fits a part of the embedded oil sealing face 161, and space among the oil sealing hole 163, the reducer oil passage protrusion 160, and the part of the embedded oil sealing face 161 is used to accommodate the coolant oil.

As shown in FIG. 14, in this embodiment of this application, space used to accommodate coolant oil playing a sealing role is surrounded and formed by the inner wall of the oil sealing hole 163, the end cover oil sealing face 134, and the embedded oil sealing face 161, the oil sealing hole 163 surrounds an outside of the protruding oil hole 162, and a cross section that is of the oil sealing hole 163 and that is parallel to the axial direction O of the motor is a right-angled triangle. The end cover oil sealing face 134 and the embedded oil sealing face 161 jointly act to help form the oil sealing space. The end cover oil sealing face 134 and the embedded oil sealing face 161 are some surfaces that are of the die casting housing 100 and the reducer end cover 130 and that are in contact with each other. The end cover oil sealing face 134 and the embedded oil sealing face 161 are both formed through machining, to ensure smoothness of the end cover oil sealing face 134 and the embedded oil sealing face 161. Flatness of the end face facilitates mutual fitting and sealing of the end cover oil sealing face 134 and the embedded oil sealing face 161, and helps improve reliability of the powertrain 10. Space among the oil sealing hole 163, the reducer oil passage protrusion 160, and a part of an embedded oil sealing end face accommodates the coolant oil, to prevent the coolant oil from being leaked, and implement sealing of a mutually embedded structure.

As shown in FIG. 14, in an embodiment, along the radial direction R of the motor, the reducer oil passage protrusion 160, the inner wall of the oil sealing hole 163, and the end cover oil sealing face 134 are sequentially arranged. The inner wall of the end cover oil hole 131, the inner wall of the oil sealing hole 163, and the embedded oil sealing face 161 are sequentially connected along the axial direction O of the motor. Along the radial direction R of the motor, the embedded oil sealing face 161 surrounds a periphery of the reducer oil passage protrusion 160, and the embedded oil sealing face 161 is perpendicular to the axial direction O of the motor.

In this embodiment of this application, along the radial direction R of the motor, the reducer oil passage protrusion 160, the inner wall of the oil sealing hole 163, and the end cover oil sealing face 134 are sequentially arranged, to help form a gradually enlarged outer ring around the protruding oil hole 162, and help prevent the coolant oil from being leaked from the protruding oil hole 162 and the end cover oil passage 132 to another part in the die casting housing 100. The inner wall of the end cover oil hole 131, the inner wall of the oil sealing hole 163, and the embedded oil sealing face 161 are sequentially connected along the axial direction O of the motor, to help the coolant oil flow to the oil sealing hole 163 to achieve a sealing effect. In addition, a flowing direction in such an arrangement manner is opposite to a flowing direction of the coolant oil in the protruding oil hole 162 and the end cover oil passage 132, to prevent, to some extent, more coolant oil from flowing into the oil sealing hole 163, and avoid a case in which an accommodation capability of the oil sealing hole 163 is exceeded and leakage occurs. Along the radial direction R of the motor, the embedded oil sealing face 161 surrounds a periphery of the reducer oil passage protrusion 160, and the embedded oil sealing face 161 is perpendicular to the axial direction O of the motor. The embedded oil sealing face 161 is disposed around the periphery of the reducer oil passage protrusion 160, to help the embedded oil sealing face 161 better seal the reducer oil passage protrusion 160 in an all-round manner. The embedded oil sealing face 161 is perpendicular to the axial direction O of the motor, and provides blocking resistance for flowing of the coolant oil along the axial direction O of the motor, to help better prevent the coolant oil from being leaked from the oil sealing hole 163.

Refer to FIG. 13. In an embodiment, along the radial direction R of the motor, a surface of an inner wall of the end cover oil passage 132 and a surface of an inner wall of the protruding oil hole 162 are rough surfaces, and a surface of the inner wall of the end cover oil hole 131 and an outer surface of the reducer oil passage protrusion 160 are machined surfaces.

As shown in FIG. 13, in this embodiment of this application, the end cover oil passage 132 and the end cover oil hole 131 jointly form the oil passage in the reducer end cover 130. The end cover oil hole 131 is configured to accommodate the reducer oil passage protrusion 160. The protruding oil hole 162 of the reducer oil passage protrusion 160 communicates with the oil passage in the reducer end cover 130 to transfer the coolant oil to cool and lubricate the reducer 200 or the motor 300.

In this embodiment of this application, the surface of the inner wall of the end cover oil passage 132 and the surface of the inner wall of the protruding oil hole 162 are rough surfaces, and the end cover oil passage 132 and the protruding oil hole 162 are formed through drawing. A drawing manner has a simple process requirement, processing is facilitated, and there is high density, to prevent the coolant oil from being leaked. The surface of the inner wall of the end cover oil hole 131 and the outer surface of the reducer oil passage protrusion 160 are machined surfaces, to ensure flatness of the surface of the inner wall of the end cover oil hole 131 and the outer surface of the reducer oil passage protrusion 160, ensure convenience when the end cover oil hole 131 and the reducer oil passage protrusion 160 are mutually embedded, and help seal a coolant oil flowing passage including the inner wall of the end cover oil hole 131 and the outer wall of the reducer oil passage protrusion 160.

Refer to FIG. 11. In an embodiment, the die casting housing 100 further includes the housing oil inlet hole 1703 formed through integrated die casting, and the housing oil inlet hole 1703 is configured to communicate with the heat exchanger 400 and is configured to communicate with the motor accommodation cavity 121 through the internal oil passage in the die casting housing 100. An axis of the housing oil inlet hole 1703 is parallel to the first direction Z, an opening of the housing oil inlet hole 1703 faces away from the reducer accommodation cavity 111 along the first direction Z, the reducer accommodation cavity 111, the protruding oil hole 162, and the housing oil inlet hole 1703 are sequentially arranged along the first direction Z, and the first direction Z is perpendicular to the axial direction of the powertrain 10.

As shown in FIG. 11, in this embodiment of this application, the heat exchanger 400 is configured to perform heat exchange and cooling on the hot coolant oil in the powertrain 10, and the heat exchanger 400 is disposed above an end that is of the die casting housing 100 and that is close to the reducer accommodation cavity 111. The heat exchanger 400 has an internal oil passage for heat exchange with cooling water from the entire vehicle. The housing oil inlet hole 1703 is configured to: receive coolant oil output by the internal oil passage in the heat exchanger 400, and output the coolant oil to the oil passage in the reducer oil passage protrusion 160. The coolant oil flows into the inside of the die casting housing 100. The coolant oil sequentially flows through the internal oil passage in the heat exchanger 400, the housing oil inlet hole 1703, the protruding oil hole 162, the end cover oil hole 131, and the end cover oil passage 132. In this embodiment of this application, the axis of the housing oil inlet hole 1703 is parallel to the first direction Z, to help the coolant oil in the heat exchanger 400 flow into the die casting housing 100 through a short path. The opening of the housing oil inlet hole 1703 faces away from the reducer accommodation cavity 111 along the first direction Z, to help the housing oil inlet hole 1703 receive the coolant oil output from a bottom of the heat exchanger 400. The coolant oil flows into the reducer accommodation cavity 111 along a gravity direction, to help reduce energy consumption.

Still refer to FIG. 11. In an embodiment, the die casting housing 100 further includes a communicating oil hole 103 formed through integrated die casting, and the communicating oil hole 103 is configured to communicate the protruding oil hole 162 and the motor accommodation cavity 121 through the internal oil passage in the die casting housing 100; an axis of the communicating oil hole 103 is parallel to the first direction Z, an opening of the communicating oil hole 103 is configured to accommodate a blocking element, and the opening of the communicating oil hole 103 and an opening of the housing oil inlet hole 1703 face a same direction; the reducer oil passage protrusion 160, the housing oil inlet hole 1703, the communicating oil hole 103, and the motor accommodation cavity 121 are sequentially arranged at intervals along the axial direction O of the motor; and a distance between the communicating oil hole 103 and the protruding oil hole 162 along the first direction Z is greater than a distance between the housing oil inlet hole 1703 and the protruding oil hole 162.

As shown in FIG. 11, in this embodiment of this application, the communicating oil hole 103 is formed through integrated die casting, and an operation is simple. The coolant oil in the die casting housing 100 may flow from the protruding oil hole 162 to the motor accommodation cavity 121 through the communicating oil hole 103. The axis of the communicating oil hole 103 is parallel to the first direction Z. In other words, the axis of the communicating oil hole 103 is further perpendicular to the axial direction of the powertrain 10. This facilitates drawing in a forming process of the die casting housing 100, and also facilitates a regular arrangement of the communicating oil hole 103 on the die casting housing 100. After the opening of the communicating oil hole 103 accommodates the blocking element, the coolant oil in the die casting housing 100 is prevented from being leaked from the communicating oil hole 103. The opening of the communicating oil hole 103 and the opening of the housing oil inlet hole 1703 face a same direction. This facilitates a drawing and simplification process in a same direction in a forming process of the die casting housing 100. The reducer oil passage protrusion 160, the housing oil inlet hole 1703, the communicating oil hole 103, and the motor accommodation cavity 121 are sequentially arranged at intervals along the axial direction O of the motor, so that the coolant oil can flow in the die casting housing 100 along the axial direction O of the motor, and the coolant oil can flow throughout the die casting housing 100. This helps the coolant oil cool and lubricate a part inside the die casting housing 100, and helps control a temperature rise of the powertrain 10.

Refer to FIG. 4. In an embodiment, the die casting housing 100 includes the communicating oil hole 103, and the communicating oil hole 103 is configured to communicate with the reducer oil hole 164 through the internal oil passage in the die casting housing 100; the axis of the communicating oil hole 103 is parallel to the first direction Z, the opening of the communicating oil hole 103 is configured to accommodate the blocking element, and the opening of the communicating oil hole 103 and the opening of the housing oil inlet hole 1703 face a same direction; and the housing liquid outlet hole 1702, the housing oil inlet hole 1703, and the communicating oil hole 103 are sequentially arranged at intervals along an axial direction O of the reducer input shaft.

As shown in FIG. 4, in this embodiment of this application, the communicating oil hole 103 is formed through integrated die casting, and an operation is simple. The coolant oil in the die casting housing 100 may flow from the reducer oil hole 164 to the motor accommodation cavity 121 through the communicating oil hole 103. The axis of the communicating oil hole 103 is parallel to the first direction Z. In other words, the axis of the communicating oil hole 103 is further perpendicular to the axial direction of the powertrain 10. This facilitates drawing in a forming process of the die casting housing 100, and also facilitates a regular arrangement of the communicating oil hole 103 on the die casting housing 100. After the opening of the communicating oil hole 103 accommodates the blocking element, the coolant oil in the die casting housing 100 is prevented from being leaked from the communicating oil hole 103. The opening of the communicating oil hole 103 and the opening of the housing oil inlet hole 1703 face a same direction. This facilitates a drawing and simplification process in a same direction in a forming process of the die casting housing 100. The housing liquid outlet hole 1702, the housing oil inlet hole 1703, and the communicating oil hole 103 are sequentially arranged at intervals along the axial direction O of the reducer input shaft, so that the coolant oil can flow in the die casting housing 100 along the axial direction O of the motor, and the coolant oil can flow throughout the die casting housing 100. This helps the coolant oil cool and lubricate a part inside the die casting housing 100, and helps control a temperature rise of the powertrain 10. The axial direction O of the reducer input shaft is parallel to the axial direction O of the motor.

As shown in FIG. 4, in an embodiment, along the first direction Z, a distance between the communicating oil hole 103 and the reducer oil hole 164 is greater than a distance between the housing oil inlet hole 1703 and the reducer oil hole 164.

As shown in FIG. 4, in this embodiment of this application, the distance between the communicating oil hole 103 and the reducer oil hole 164 along the first direction Z is denoted as L9, the distance between the housing oil inlet hole 1703 and the reducer oil hole 164 along the first direction Z is denoted as L10, and L9>L10. In other words, a path for conveying the coolant oil in the heat exchanger 400 through the housing oil inlet hole 1703 to the reducer oil hole 164 is short, so that the coolant oil flows into the oil passage in the reducer end cover 130 at a fast speed, to cool and lubricate the reducer 200. However, a distance in a process in which the coolant oil flows from the reducer oil hole 164 to the communicating oil hole 103 is long, so that it takes long time for the coolant oil to flow into the motor 300 in the die casting housing 100. In this process, some parts in the die casting housing 100 are cooled to reduce a temperature to some extent.

Still refer to FIG. 4. In an embodiment, the die casting housing 100 further includes a motor oil hole 105, and the motor oil hole 105 is configured to communicate the communicating oil hole 103 and the inside of the motor accommodation cavity 121 through the internal oil passage in the die casting housing 100; and an axis of the motor oil hole 105 is parallel to the axial direction O of the motor, an opening of the motor oil hole 105 faces the heat exchanger 400, and the opening of the motor oil hole 105 is configured to accommodate the blocking element.

As shown in FIG. 4, in this embodiment of this application, the motor oil hole 105 is formed through integrated die casting, and a process is simple. The coolant oil in the die casting housing 100 may flow from the communicating oil hole 103 and flow into the motor accommodation cavity 121 through the motor oil hole 105. The axis of the motor oil hole 105 is parallel to the axial direction O of the motor, to facilitate a drawing process along the axial direction O of the motor when a motor 300 housing is formed on the die casting housing 100. The opening of the motor oil hole 105 faces the heat exchanger 400 along the axial direction O of the motor, to help the coolant oil flow from the heat exchanger 400 to the motor accommodation cavity 121. The motor oil hole 105 accommodates the blocking element, to help prevent the coolant oil in the die casting housing 100 from being leaked from the motor oil hole 105.

As shown in FIG. 4, in an embodiment, along the first direction Z, a distance between the motor oil hole 105 and the reducer oil hole 164 is greater than the distance between the housing oil inlet hole 1703 and the reducer oil hole 164. In this embodiment of this application, the distance between the motor oil hole 105 and the reducer oil hole 164 along the first direction Z is denoted as L11, the distance between the housing oil inlet hole 1703 and the reducer oil hole 164 along the first direction Z is L10, and L11>L10. In other words, a path for conveying the coolant oil in the heat exchanger 400 through the housing oil inlet hole 1703 to the reducer oil hole 164 is short, so that the coolant oil flows into the oil passage in the reducer end cover 130 at a fast speed, to cool and lubricate the reducer 200. However, a distance in a process in which the coolant oil flows from the reducer oil hole 164 to the motor oil hole 105 is long, so that it takes long time for the coolant oil to flow into the motor 300 in the die casting housing 100. In this process, some parts in the die casting housing 100 are cooled to reduce a temperature to some extent.

Still refer to FIG. 4. In an embodiment, the internal oil passage in the die casting housing 100 includes a reducer oil passage 165, a housing oil inlet passage 173, a communicating oil passage 104, and a motor oil passage 106, axes of the reducer oil passage 165 and the motor oil passage 106 are both parallel to the axial direction O of the motor, and both the housing oil inlet passage 173 and the communicating oil passage 104 are parallel to the first direction Z.

In this embodiment of this application, the reducer oil passage 165, the housing oil inlet passage 173, the communicating oil passage 104, and the motor oil passage 106 are all configured to convey the coolant oil in the die casting housing 100. The axes of the reducer oil passage 165 and the motor oil passage 106 are parallel to the axial direction O of the motor, to help form the reducer oil passage 165 and the motor oil passage 106 through drawing along the axial direction O of the motor in an integrated die casting process of the die casting housing 100. Both the housing oil inlet passage 173 and the communicating oil passage 104 are parallel to the first direction Z, to help form the housing oil inlet passage 173 and the communicating oil passage 104 through drawing in the first direction Z in the integrated die casting process of the die casting housing 100.

As shown in FIG. 4, in an embodiment, the reducer oil passage 165 and the reducer oil hole 164 are coaxially arranged along the axial direction O of the motor, one end of the reducer oil passage 165 and the reducer oil hole 164 are connected and communicate with each other, the other end of the reducer oil passage 165 and one end of the communicating oil passage 104 are connected and communicate with each other, the communicating oil passage 104 and the communicating oil hole 103 are coaxially arranged along the first direction Z, the other end of the communicating oil passage 104 and the communicating oil hole 103 are connected and communicate with each other, the motor oil passage 106 and the motor oil hole 105 are coaxially arranged along the axial direction O of the motor, one end of the motor oil passage 106 and the motor oil hole 105 are connected and communicate with each other, the other end of the motor oil passage 106 communicates with the motor accommodation cavity 121, the housing oil inlet passage 173 and the housing oil inlet hole 1703 are coaxially arranged along the first direction Z, one end of the housing oil inlet passage 173 and the housing oil inlet hole 1703 are connected and communicate with each other, and the other end of the housing oil inlet passage 173 and a middle part of the reducer oil passage 165 are connected and communicate with each other.

As shown in FIG. 4, in this embodiment of this application, both the reducer oil passage 165 and the reducer oil hole 164 are located in the reducer oil passage protrusion 160, the reducer oil passage 165 extends to an inside of the die casting housing 100, the reducer oil passage 165 and the reducer oil hole 164 are coaxially arranged along the axial direction O of the motor, and one end of the reducer oil passage 165 is connected to the reducer oil hole 164. That is, the reducer oil passage 165 and the reducer oil hole 164 communicate with each other, and axes of the reducer oil passage 165 and the reducer oil hole 164 are parallel to the axial direction O of the motor. The communicating oil passage 104 and the communicating oil hole 103 are coaxially arranged along the first direction Z, and one end of the communicating oil passage 104 and one end of the communicating oil hole 103 are connected and communicate with each other, to help form the communicating oil passage 104 through drawing in the communicating oil hole 103 in a forming process of the die casting housing 100. The motor oil passage 106 and the motor oil hole 105 are coaxially arranged along the axial direction O of the motor. One end of the motor oil passage 106 and the motor oil hole 105 are connected and communicate with each other, to help form the motor oil passage 106 through drawing in the motor oil hole 105 in the forming process of the die casting housing 100. The housing oil inlet passage 173 and the housing oil inlet hole 1703 are coaxially arranged along the first direction Z, and one end of the housing oil inlet passage 173 and the housing oil inlet hole 1703 are connected and communicate with each other, to help form the housing oil inlet passage 173 through drawing in the housing oil inlet hole 1703 in the forming process of the die casting housing 100. The coolant oil sequentially flows into the motor accommodation cavity 121 through the housing oil inlet hole 1703, the housing oil inlet passage 173, the reducer oil passage 165, the communicating oil passage 104, the communicating oil hole 103, the motor oil hole 105, and the motor oil passage 106, to cool and lubricate the part of the motor 300.

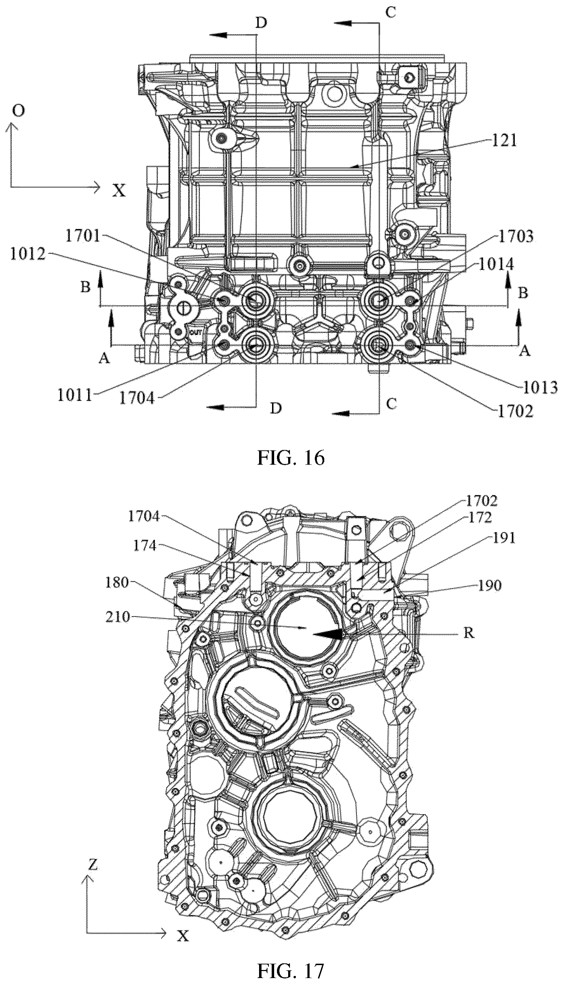

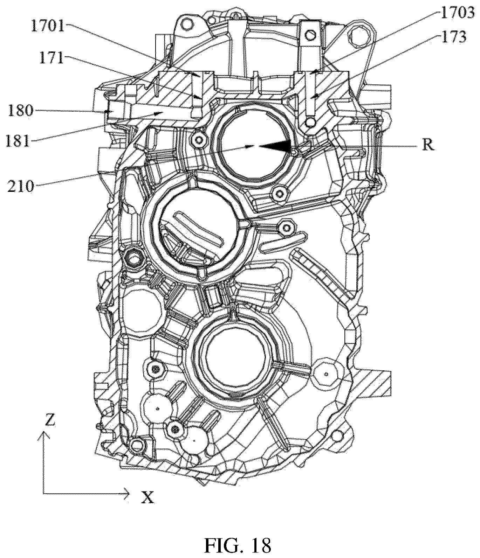

FIG. 15 is a diagram of a structure of a die casting housing 100 according to an embodiment of this application. FIG. 16 is a top view of the die casting housing 100 in FIG. 15. FIG. 17 is a sectional view of the die casting housing 100 in FIG. 16 along A-A. FIG. 18 is a sectional view of the die casting housing 100 in FIG. 16 along B-B.

As shown in FIG. 17, in an embodiment, the internal oil passage in the die casting housing 100 further includes a housing oil outlet passage 174, and an axis of the housing oil outlet passage 174 is parallel to the first direction Z. The housing oil outlet passage 174 and the housing oil outlet hole 1704 are coaxial and communicate with each other.

In this embodiment of this application, the housing oil outlet passage 174 is configured to output the hot coolant oil in the die casting housing 100 to the heat exchanger 400 for heat exchange and cooling. The axis of the housing oil outlet passage 174 is parallel to the first direction Z, to help form the housing oil outlet passage 174 through drawing in the first direction Z in the integrated die casting process of the die casting housing 100.

Still refer to FIG. 15, FIG. 16, FIG. 17, and FIG. 18. In an embodiment, the internal liquid passage in the die casting housing 100 includes a general liquid inlet passage 191, a general liquid outlet passage 181, a housing liquid inlet passage 171, and a housing liquid outlet passage 172, axes of the general liquid inlet passage 191 and the general liquid outlet passage 181 are both parallel to the second direction X, and the housing liquid inlet passage 171 and the housing liquid outlet passage 172 are both parallel to the first direction Z.

As shown in FIG. 17 and FIG. 18, in this embodiment of this application, the general liquid inlet passage 191, the general liquid outlet passage 181, the housing liquid inlet passage 171, and the housing liquid outlet passage 172 are all used to transfer the coolant, and the axes of the general liquid inlet passage 191 and the general liquid outlet passage 181 are both parallel to the second direction X, to help form the general liquid inlet passage 191 and the general liquid outlet passage 181 through drawing along the second direction X in the integrated die casting process of the die casting housing 100. Both the housing liquid inlet passage 171 and the housing liquid outlet passage 172 are parallel to the first direction Z, to help form the housing liquid inlet passage 171 and the housing liquid outlet passage 172 through drawing in the first direction Z in the integrated die casting process of the die casting housing 100.

In an embodiment, the general liquid inlet hole 190 and the general liquid inlet passage 191 are coaxially arranged along the second direction X, one end of the general liquid inlet passage 191 and the general liquid inlet hole 190 are connected and communicate with each other, the other end of the general liquid inlet passage 191 and one end of the housing liquid outlet passage 172 are connected and communicate with each other, the housing liquid outlet passage 172 and the housing liquid outlet hole 1702 are coaxially arranged along the first direction Z, and the other end of the housing liquid outlet passage 172 communicates with the liquid passage in the heat exchanger 400. The housing liquid inlet passage 171 and the housing liquid inlet hole 1701 are coaxially arranged along the first direction Z, the housing liquid inlet hole 1701 and the liquid passage in the heat exchanger 400 communicate with each other, one end of the housing liquid inlet passage 171 and the housing liquid inlet hole 1701 are connected and communicate with each other, the other end of the housing liquid inlet passage 171 and one end of the general liquid outlet passage 181 are connected and communicate with each other, the general liquid outlet passage 181 and the general liquid outlet hole 180 are coaxially arranged along the second direction X, the other end of the general liquid outlet passage 181 and the general liquid outlet hole 180 are connected and communicate with each other.

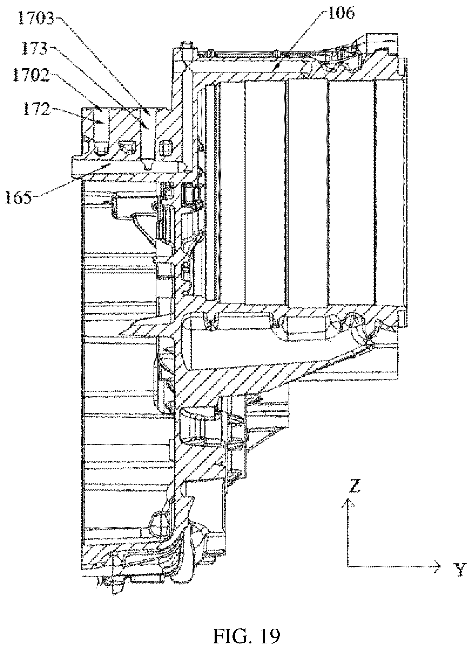

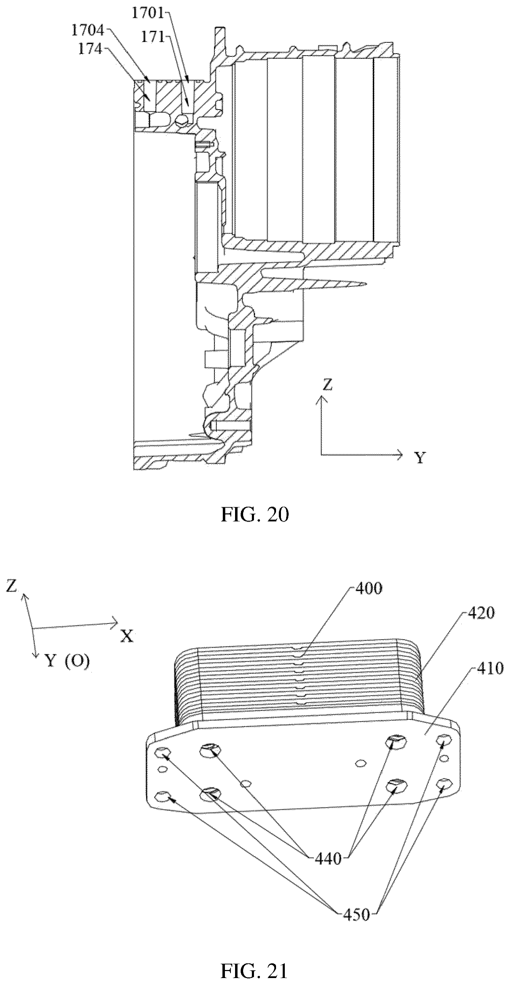

Refer to FIG. 16, FIG. 19, and FIG. 20. FIG. 19 is a sectional view of the die casting housing 100 in FIG. 16 along C-C. FIG. 20 is a sectional view of the die casting housing 100 in FIG. 16 along D-D.

As shown in FIG. 19 and FIG. 20, in an embodiment, a length of the housing oil inlet passage 173 is slightly less than a length of the housing liquid outlet passage 172 along the first direction Z, and a length of the housing liquid inlet passage 171 is less than a length of the housing oil outlet passage 174 along the first direction Z. In this embodiment of this application, a difference between lengths of pipes and passages better facilitates a proper layout of the pipe in the die casting housing 100, so that a risk such as leakage is not likely to occur when the pipe has a more compact layout.

As shown in FIG. 19, in an embodiment, the housing liquid inlet passage 171 and the reducer oil passage 165 are arranged along the first direction Z, and the pipes are compact, to help reduce a length of the pipe, thereby reducing costs, further saving pipe layout space in the die casting housing 100, and helping save space of the powertrain 10. The reducer oil passage 165, the housing oil outlet passage 174, and the housing motor oil passage 106 are sequentially arranged along the second direction X.

In an embodiment, all pipes such as the general liquid inlet passage 191, the housing oil inlet passage 173, the housing liquid outlet passage 172, the housing liquid inlet passage 171, and the housing oil outlet passage 174 in the die casting housing 100 are formed through direct casting by using a local mold. A casting fin between cross parts of the local mold does not exceed 1.5 mm, to facilitate subsequent processing and connecting between local parts. After die casting of the passages is completed, a casting fin between the passages is removed, so that the passages communicate with each other. For example, a casting fin between the general liquid inlet passage 191 and the housing oil inlet passage 173 does not exceed 1.5 mm.

Refer to FIG. 2 and FIG. 4. In an embodiment, an inner wall of at least one of the general liquid inlet hole 190, the general liquid outlet hole 180, the reducer oil hole 164, the communicating oil hole 103, and the motor oil hole 105 has a rough surface.

As shown in FIG. 2 and FIG. 4. In this embodiment of this application, the general liquid inlet hole 190, the general liquid outlet hole 180, the reducer oil hole 164, the communicating oil hole 103, and the motor oil hole 105 are all located in the die casting housing 100. The die casting housing 100 is formed through integrated die casting. The general liquid inlet hole 190, the general liquid outlet hole 180, the reducer oil hole 164, the communicating oil hole 103, and the motor oil hole 105 may all be formed through drawing in the forming process of the die casting housing 100. The inner wall has a rough surface, a simple process, and a compact structure, to help prevent the coolant oil and the coolant from being leaked.

In an embodiment, the general liquid inlet hole 190 and the general liquid inlet passage 191 are coaxial, and the general liquid inlet hole 190 and the general liquid inlet passage 191 are formed through integrated die casting and drawing. The general liquid outlet hole 180 and the general liquid outlet passage 181 are coaxial, and the general liquid outlet hole 180 and the general liquid outlet passage 181 are formed through integrated die casting and drawing. The reducer oil hole 164 and the reducer oil passage 165 are coaxial, and the reducer oil hole 164 and the reducer oil passage 165 are formed through integrated die casting and drawing. The communicating oil hole 103 and the communicating oil passage 104 are coaxial, and the communicating oil hole 103 and the communicating oil passage 104 are formed through integrated die casting and drawing. The motor oil hole 105 and the motor oil passage 106 are coaxial, and the motor oil hole 105 and the motor oil passage 106 are formed through integrated die casting and drawing. The housing liquid outlet hole 1702 and the housing liquid outlet passage 172 are coaxial, and the housing liquid outlet hole 1702 and the housing liquid outlet passage 172 are formed through integrated die casting and drawing. The housing oil outlet passage 174 and the housing oil outlet hole 1704 are coaxial, and the housing oil outlet passage 174 and the housing oil outlet hole 1704 are formed through integrated die casting and drawing. The housing liquid inlet hole 1701 and the housing liquid inlet passage 171 are coaxial, and the housing liquid inlet hole and the housing liquid inlet passage are formed through integrated die casting and drawing. The housing oil inlet passage 173 and the housing oil inlet hole 1703 are coaxial, and the housing oil inlet passage 173 and the housing oil inlet hole 1703 are formed through integrated die casting and drawing. This helps simplify a process connection, and a passage and an oil passage are formed through die casting and drawing, so that an inner wall of the passage and the oil passage has a rough surface, to help improve density and sealing performance of the inner wall.

Refer to FIG. 3 and FIG. 21. FIG. 21 is a diagram of a heat exchanger 400 according to an embodiment of this application. In an embodiment, the heat exchanger 400 includes a mounting plate 410 and a plurality of flowing plates 420, the plurality of flowing plates 420 are configured to form the liquid passage and the oil passage in the heat exchanger 400, and the mounting plate 410 is configured to fasten the reducer accommodation housing 110; the reducer accommodation cavity 111, the mounting plate 410, and the plurality of flowing plates 420 are arranged along the first direction Z; and the mounting plate 410 includes four heat exchange holes 440, the four heat exchange holes 440 are configured to respectively communicate with the four holes 170, and the heat exchange holes 440 penetrate through the mounting plate 410 along the first direction Z.

In this embodiment of this application, the reducer 200 and the motor 300 in the powertrain 10 generate a large amount of heat in a running process of an electric vehicle. The heat exchanger 400 is configured to: perform heat exchange and cooling on the hot coolant oil in the reducer 200 and the motor 300 in the powertrain 10, and control a temperature rise of the powertrain 10. The plurality of flowing plates 420 are arranged in a stacked manner along the first direction Z, and the plurality of flowing plates 420 are connected to each other and the flowing plates 420 and the mounting plate 410 are connected to each other through soldering and brazing, to provide a flowing passage for the coolant oil and the coolant in the heat exchanger 400. The oil passage and the liquid passage in the heat exchanger 400 do not communicate with each other. The mounting plate 410 is located at the bottom of the heat exchanger 400, and is configured to fasten the heat exchanger 400 to the reducer accommodation housing 110. The reducer accommodation cavity 111, the mounting plate 410, and the plurality of flowing plates 420 are arranged in the first direction Z. In other words, the heat exchanger 400 is arranged above the reducer accommodation cavity 111. In this embodiment of this application, the four heat exchange holes 440 of the heat exchanger 400 are all arranged on the mounting plate 410 at the bottom, to reduce occupied space above the heat exchanger 400 along the first direction Z, and facilitate compact arrangement of the heat exchanger 400 in the powertrain 10 and miniaturization of the powertrain 10. The four holes 170 are located on the die casting housing 100, and the four heat exchange holes 440 are configured to respectively communicate with the four holes 170. In other words, the liquid passage and the oil passage in the heat exchanger 400 communicate with the liquid passage and the oil passage in the die casting housing 100 through the four heat exchange holes 440 and the four holes 170, so that the heat exchanger 400 cools the hot coolant oil in the die casting housing 100, and transfers the cooled coolant oil to the die casting housing 100, to cool and lubricate the part inside the reducer 200, the motor 300, or the like.

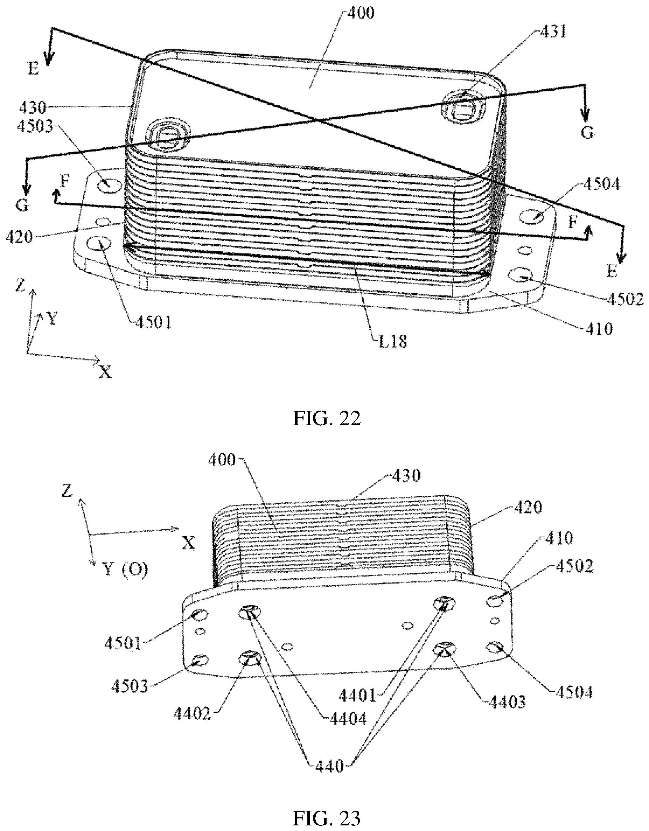

Refer to FIG. 7, FIG. 22, and FIG. 23. FIG. 22 is a diagram of a structure of a heat exchanger 400 according to an embodiment of this application. FIG. 23 is a diagram of a structure of a heat exchanger 400 according to an embodiment of this application. In an embodiment, two of the four heat exchange holes 440 are configured to communicate with the liquid passage in the heat exchanger 400, the other two heat exchange holes 440 are configured to communicate with the oil passage in the heat exchanger 400, and the heat exchange holes 440 penetrate through the mounting plate 410 along the first direction Z.

As shown in FIG. 7, FIG. 22, and FIG. 23, in this embodiment of this application, the two heat exchange holes 440 communicate with the liquid passage in the heat exchanger 400. To be specific, the two heat exchange holes 440 act, so that the coolant flows into the heat exchanger 400 and a coolant whose temperature rises after absorbing heat flows out of the heat exchanger 400. The two heat exchange holes 440 are configured to communicate two holes of the die casting housing 100, so that the liquid passage in the heat exchanger 400 and the internal liquid passage in the die casting housing 100 communicate with each other. The other two heat exchange holes 440 communicate with the oil passage in the heat exchanger 400. To be specific, the other two heat exchange holes 440 act, so that the coolant oil flows into the heat exchanger 400 and coolant oil whose temperature decreases flows out of the heat exchanger 400. The other two heat exchange holes 440 are configured to communicate the other two holes of the die casting housing 100, so that the oil passage in the heat exchanger 400 and the internal oil passage in the die casting housing 100 communicate with each other. In an implementation of this application, the four heat exchange holes 440 of the heat exchanger 400 are all arranged on the mounting plate 410 at the bottom, to reduce occupied space above the heat exchanger 400 along the first direction Z, and facilitate compact arrangement of the heat exchanger 400 in the powertrain 10 and miniaturization of the powertrain 10.

Still refer to FIG. 23. In an embodiment, the two heat exchange holes 440 include a heat exchange liquid inlet hole 4401 and a heat exchange liquid outlet hole 4402, and the other two heat exchange holes 440 include a heat exchange oil inlet hole 4404 and a heat exchange oil outlet hole 4403.

As shown in FIG. 23, in this embodiment of this application, all the four heat exchange holes 440 are located on the mounting plate 410 at the bottom of the heat exchanger 400, the heat exchange liquid inlet hole 4401 is configured to input a coolant from the cooling system of the entire vehicle into the liquid passage in the heat exchanger 400, and the heat exchange liquid outlet hole 4402 is configured to output, to the liquid passage in the heat exchanger 400, a coolant whose temperature rises after performing heat exchange with the hot coolant oil in the heat exchanger 400. The heat exchange oil inlet hole 4404 is configured to input the hot coolant oil from the powertrain 10 into the heat exchanger 400 to perform heat exchange with the coolant. The heat exchange oil outlet hole 4403 is configured to output, from the oil passage in the heat exchanger 400 to the heat exchanger 400, the coolant oil whose temperature is cooled after heat exchange, to cool and lubricate the part in the reducer 200 or the motor 300 in the powertrain 10. The heat exchange liquid inlet hole 4401 and the heat exchange liquid outlet hole 4402 of the heat exchanger 400 are also arranged on the mounting plate 410. Compared with another solution in which the heat exchange liquid inlet hole 4401 and the heat exchange liquid outlet hole 4402 are arranged above the heat exchanger 400, in this solution, a pipe can be prevented from being arranged above the heat exchanger 400, to help reduce occupied space of the heat exchanger 400 in the first direction Z, help reduce an overall volume of the powertrain 10, and optimize a layout of the entire vehicle.

Still refer to FIG. 23. In an embodiment, the heat exchange liquid inlet hole 4401 and the heat exchange oil inlet hole 4404 are arranged along the second direction X, the heat exchange oil outlet hole 4403 and the heat exchange liquid outlet hole 4402 are arranged along the second direction X, the heat exchange liquid inlet hole 4401 and the heat exchange oil outlet hole 4403 are arranged along the third direction Y, and the heat exchange oil inlet hole 4404 and the heat exchange liquid outlet hole 4402 are arranged along the third direction Y.

As shown in FIG. 23, in this embodiment of this application, the heat exchange liquid outlet hole 4402, the heat exchange liquid inlet hole 4401, the heat exchange oil outlet hole 4403, and the heat exchange oil inlet hole 4404 are diagonally arranged on the mounting plate 410, to facilitate heat exchange between the oil passage and the liquid passage in the heat exchanger 400. A projection of the heat exchange liquid inlet hole 4401 and a projection of the heat exchange oil inlet hole 4404 overlap along the second direction X, a projection of the heat exchange oil outlet hole and a projection of the heat exchange liquid outlet hole 4402 overlap along the second direction X, the projection of the heat exchange liquid inlet hole 4401 and the projection of the heat exchange oil outlet hole 4403 overlap along the third direction Y, and the projection of the heat exchange oil inlet hole 4404 and the projection of the heat exchange liquid outlet hole 4402 overlap along the third direction Y. In this implementation, the holes are arranged regularly and symmetrically, to facilitate direct casting through processing in a mold, and facilitate production.

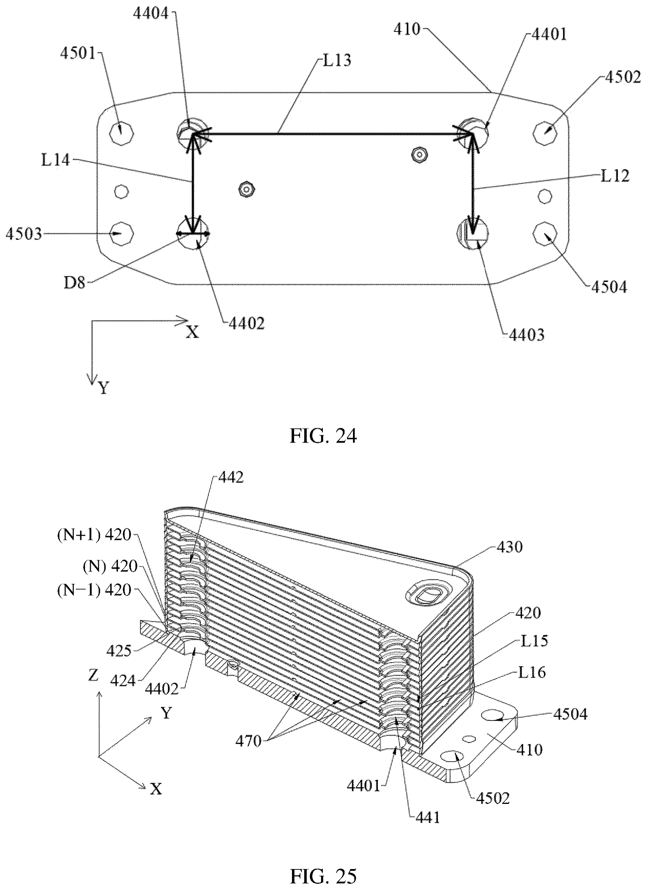

FIG. 24 is a diagram of a structure of a mounting plate 410 of a heat exchanger 400 according to an embodiment of this application. In an embodiment, a distance between a center of the heat exchange liquid inlet hole 4401 and a center of the heat exchange oil outlet hole 4403 along the third direction Y is less than a distance between the center of the heat exchange liquid inlet hole 4401 and a center of the heat exchange oil inlet hole 4404 along the second direction X. A distance between the center of the heat exchange oil inlet hole 4404 and a center of the heat exchange liquid outlet hole 4402 along the third direction Y is less than the distance between the center of the heat exchange liquid inlet hole 4401 and the center of the heat exchange oil inlet hole 4404 along the second direction X.

In this embodiment of this application, the distance between the center of the heat exchange liquid inlet hole 4401 and the center of the heat exchange oil outlet hole 4403 along the third direction Y is denoted as L12, the distance between the center of the heat exchange liquid inlet hole 4401 and the center of the heat exchange oil inlet hole 4404 along the second direction X is denoted as L13, the distance between the center of the heat exchange oil inlet hole 4404 and the center of the heat exchange liquid outlet hole 4402 along the third direction Y is denoted as L14, L12<L13, and L14<L3. An arrangement manner of the heat exchange oil inlet hole 4404, the heat exchange oil outlet hole 4403, the heat exchange liquid inlet hole 4401, and the heat exchange liquid outlet hole 4402 on the heat exchanger 400 increases a length along the second direction X, to help increase a flowing path of the oil passage and the liquid passage in the heat exchanger 400 along the second direction X, facilitate a heat exchange area between the oil passage and the liquid passage in the heat exchanger 400, and improve heat exchange efficiency.

Refer to FIG. 24 and FIG. 25. FIG. 25 is a sectional view of the heat exchanger 400 in FIG. 22 along E-E. In an embodiment, hole diameters of the four heat exchange holes 440 are all greater than a spacing between two flowing plates 420 adjacently arranged along the first direction Z, the hole diameters of the four heat exchange holes 440 are all greater than a thickness of each flowing plate 420 along the first direction Z, and the spacing between two flowing plates 420 adjacently arranged along the first direction Z is greater than the thickness of each flowing plate 420 along the first direction Z.

As shown in FIG. 24 and FIG. 25, in this embodiment of this application, the hole diameter of the heat exchange hole 440 is denoted as D8, the spacing between two flowing plates 420 adjacently arranged along the first direction Z is denoted as L15, the thickness of each flowing plate 420 in the first direction Z is denoted as L16, D8>L15, and D8>L16, to facilitate flowing of the coolant and the coolant oil in the liquid passage and the oil passage in the heat exchanger 400 and outside the heat exchanger 400. When L15>L16, the spacing between two flowing plates 420 adjacently arranged is greater than the thickness of the flowing plate 420, so that a liquid passage and an oil passage formed by adjacent flowing plates 420 in the heat exchanger 400 can accommodate more coolants and coolant oil, and a heat exchange process of the hot coolant oil and the coolant in the heat exchanger 400 is accelerated.

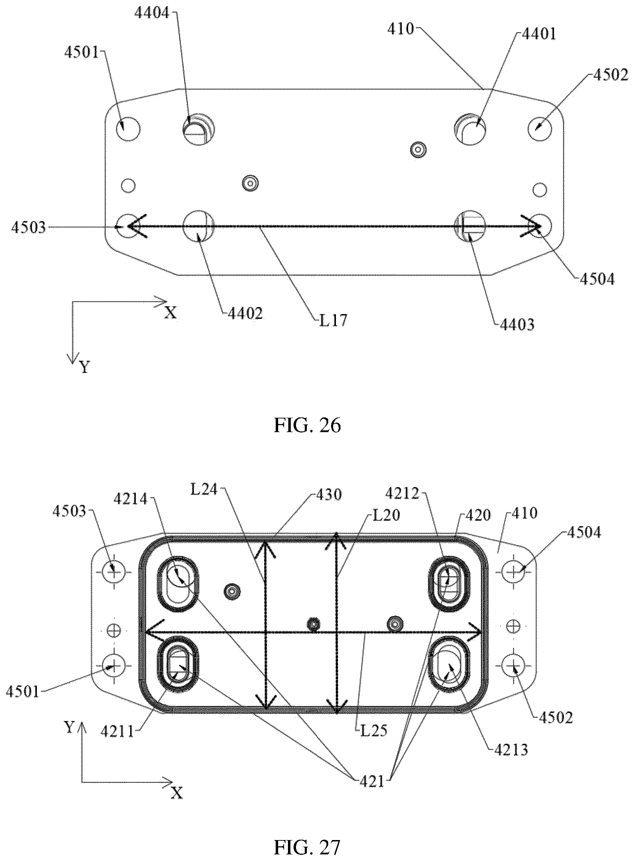

Still refer to FIG. 21 and FIG. 26. FIG. 26 is a diagram of a structure of a mounting plate 410 of a heat exchanger 400 according to an embodiment of this application. In an embodiment, the mounting plate 410 further includes a plurality of heat exchange mounting holes 450. The heat exchange mounting holes 450 are configured to fasten a housing of the powertrain 10. The plurality of heat exchange mounting holes 450 are distributed on two sides of the four heat exchange holes 440 along the second direction X. A distance between two heat exchange mounting holes 450 arranged on two sides of the four heat exchange holes 440 along the second direction X is greater than a length of the flowing plate 420 along the second direction X.

As shown in FIG. 26, in this embodiment of this application, there are four heat exchange mounting holes 450 on the mounting plate 410, and the heat exchange mounting holes 450 are located on the mounting plate 410 at the bottom of the heat exchanger 400, so that the heat exchanger 400 is mounted and fastened on the housing of the powertrain 10 through the mounting holes. Along the second direction X, a first heat exchange mounting hole 4501, the heat exchange oil inlet hole 4404, the heat exchange liquid inlet hole 4401, and a second heat exchange mounting hole 4502 are sequentially arranged at intervals, and a third heat exchange mounting hole 4503, the heat exchange liquid outlet hole 4402, the heat exchange oil outlet hole 4403, and a fourth heat exchange mounting hole 4504 are sequentially arranged at intervals. The first heat exchange mounting hole 4501 and the third heat exchange mounting hole 4503 are spaced apart along the third direction Y, a projection of the first heat exchange mounting hole 4501 and a projection of the third heat exchange mounting hole 4503 along the third direction Y coincide, the second heat exchange mounting hole 4502 and the fourth heat exchange mounting hole 4504 are spaced apart along the third direction Y, and a projection of the second heat exchange mounting hole 4502 and a projection of the fourth heat exchange mounting hole 4504 along the third direction Y coincide. In this implementation, the holes are arranged regularly and symmetrically, to facilitate direct casting through processing in a mold, and facilitate production. The heat exchange mounting holes 450 are distributed on two sides of the four heat exchange holes 440 along the second direction X, so that the heat exchanger 400 is more stable when being mounted and fastened.

As shown in FIG. 22 and FIG. 26, in this embodiment of this application, the distance between the two heat exchange mounting holes 450 arranged on two sides of the four heat exchange holes 440 along the second direction X is denoted as L17, the length of the flowing plate 420 along the second direction X is denoted as L18, and L17>L18. This prevents adverse impact on the liquid passage and the oil passage in the heat exchanger 400 during its mounting when the coolant oil needs to pass through the inside of the heat exchanger 400.

Refer to FIG. 22. In an embodiment, the heat exchanger 400 further includes a top plate 430. The top plate 430 is configured to isolate the liquid passage and the oil passage in the heat exchanger 400 from the outside, and the mounting plate 410, the plurality of flowing plates 420, and the top plate 430 are sequentially arranged along the first direction Z.

As shown in FIG. 22, in this embodiment of this application, the top plate 430 is located at the top of the heat exchanger 400 along the first direction Z, and no coolant oil or coolant flows above the top plate 430. The top plate 430 is configured to communicate and block the coolant or the coolant oil flowing on the flowing plate 420 closest to the top plate 430, to isolate the oil passage and the liquid passage in the heat exchanger 400 from the outside. In this embodiment of this application, an upper part of the top plate 430 does not need to communicate with a cooling system of the entire vehicle through a liquid pipe or a pipe, so that a mounting height of the heat exchanger 400 can be reduced, and a height of the powertrain 10 is reduced.

Still refer to FIG. 22. In an embodiment, the top plate 430 includes at least one through hole 431, the through hole 431 is configured to accommodate a blocking element, and an outer diameter of the blocking element is greater than or equal to an inner diameter of the through hole 431.

As shown in FIG. 22, in this embodiment of this application, the top plate 430 is located at the top of the heat exchanger 400 along the first direction Z, and the through hole 431 on the top plate 430 accommodates the blocking element, so that the top plate 430 isolates the liquid passage and the oil passage in the heat exchanger 400 from the outside. When an outer diameter of the blocking element is equal to an inner diameter of the through hole 431, the blocking element can just seal the through hole 431. When the outer diameter of the blocking element is greater than the inner diameter of the through hole, a sealing effect may be formed on the top plate 430 by using the blocking element. In this case, a requirement on a size of the blocking element and a size of the through hole 431 is reduced, and a processing process requirement is simpler.

In an embodiment, the top plate 430 may be an integrally formed plate structure, so that a processing process is simple. In an embodiment, the top plate 430 has a same structure as the flowing plate 420, that is, the top plate 430 also has four flowing holes 421, and the four flowing holes 421 are blocked by using the blocking element. In this way, one of the flowing plates 420 may be used as the top plate 430, and a process is simplified to produce a mold.

FIG. 27 is a sectional view of the heat exchanger 400 in FIG. 22 along F-F. In an embodiment, the plurality of flowing plates 420 each include four flowing holes 421, and projections of the four flowing holes 421 along the first direction Z respectively at least partially overlap with the projections of the four heat exchange holes 440. Two flowing holes 421 are respectively configured to be arranged opposite to two heat exchange holes 440, the other two flowing holes 421 are configured to be opposite to the other two heat exchange holes 440, two flowing holes 421 in each flowing plate 420 do not communicate with the other two flowing holes 421, and the flowing hole 421 penetrates through the flowing plate 420 along the first direction Z.

Refer to FIG. 23 and FIG. 27. In this embodiment of this application, the flowing hole 421 is used for flowing of the coolant oil or the coolant in the heat exchanger 400. Along the first direction Z, the projections of the four flowing holes 421 respectively overlap the projections of the four heat exchange holes 440, and are regularly arranged. In addition, the coolant oil or the coolant flowing through the four heat exchange holes 440 flows into the flowing hole 421 or flows out of the flowing hole 421 through a short path. The two flowing holes 421 are arranged opposite to the two heat exchange holes 440, and the other two flowing holes 421 are arranged opposite to the other two heat exchange holes 440. Two flowing holes 421 in the plurality of flowing plates 420 form a heat exchange liquid inlet passage 441 and a heat exchange liquid outlet passage 442 of the liquid passage in the heat exchanger 400, and other two flowing holes 421 in the plurality of flowing plates 420 form a heat exchange oil inlet passage 444 and a heat exchange oil outlet passage 443 of the oil passage in the heat exchanger 400, and two flowing holes 421 in each flowing plate 420 do not communicate with the other two flowing holes 421. That is, it is ensured that the liquid passage and the oil passage in the heat exchanger 400 do not communicate with each other. In addition, the flowing holes 421 through which the coolant oil flows and the flowing holes 421 through which the coolant flows are arranged diagonally, to facilitate diagonal flowing of the coolant oil and the coolant in the heat exchanger 400, increases a heat exchange time of the coolant and the coolant oil, and enhances a heat exchange effect of the coolant and the coolant oil in the heat exchanger 400, thereby facilitating temperature rise control of the heat exchanger 400 on the powertrain 10 and improving overall performance of the entire vehicle.

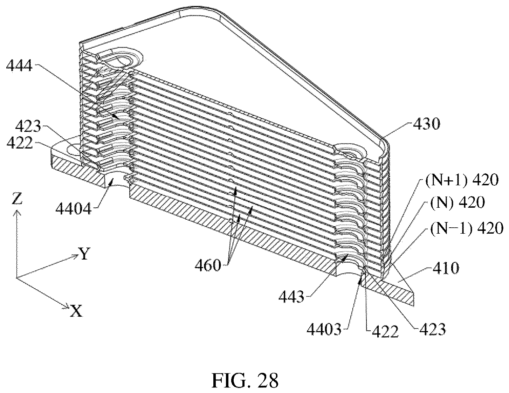

Refer to FIG. 25, FIG. 27, and FIG. 28. FIG. 28 is a sectional view of the heat exchanger 400 in FIG. 22 along G-G. In an embodiment, the liquid passage in the heat exchanger 400 includes a plurality of layers of liquid subpassages 470, the oil passage in the heat exchanger 400 includes a plurality of layers of oil subpassages 460, the plurality of layers of oil subpassages 460 and the plurality of layers of liquid subpassages 470 are alternately arranged along the first direction Z, the plurality of layers of oil subpassages 460 communicate with each other, the plurality of layers of liquid subpassages 470 communicate with each other, and a quantity of the plurality of flowing plates 420 is M.

As shown in FIG. 25 and FIG. 28, in this embodiment of this application, both the oil subpassages 460 and the liquid subpassages 470 in the heat exchanger 400 are implemented by using the flowing plate 420. On the flowing plate 420, the liquid subpassages 470 and the oil subpassages 460 in the heat exchanger 400 are arranged in a stacked manner. The oil passage in the heat exchanger 400 includes a plurality of layers of oil subpassages 460, and the plurality of layers of oil subpassages 460 communicate with each other. The liquid passage in the heat exchanger 400 includes a plurality of layers of liquid subpassages 470, and the plurality of layers of liquid subpassages 470 communicate with each other. The plurality of layers of oil subpassages 460 and the plurality of layers of liquid subpassages 470 are alternately arranged along the first direction Z, to help increase a contact area of heat exchange between the coolant and the coolant oil in the heat exchanger 400, help implement a heat exchange process, and ensure a cooling effect of the hot coolant oil flowing into the heat exchanger 400.

As shown in FIG. 25, in an embodiment, a layer of liquid subpassage 470 of the heat exchanger 400 is formed between an N^{th} flowing plate (N) 420 and an (N-1)^{th} flowing plate (N-1) 420, two flowing holes 421 in the N^{th} flowing plate (N) 420 and two flowing holes 421 in the (N-1)^{th} flowing plate (N-1) 420 all communicate with the layer of liquid subpassage 470 between the N^{th} flowing plate (N) 420 and the (N-1)^{th} flowing plate (N-1) 420, the other two flowing holes 421 in the N^{th} flowing plate (N) 420 and the other two flowing holes 421 in the (N-1)^{th} flowing plate (N-1) 420 do not communicate with the layer of liquid subpassage 470 between the N^{th} flowing plate (N) 420 and the (N-1)^{th} flowing plate (N-1) 420. N is an integer greater than or equal to 2 and less than or equal to M.

Refer to FIG. 25 and FIG. 27. In this embodiment of this application, four flowing holes 421 on the flowing plate 420 are coolant oil inflow flowing hole 4211, coolant oil outflow flowing hole 4212, a coolant inflow flowing hole 4213, and a coolant outflow flowing hole 4214. The liquid subpassage 470 is formed between the N^{th} flowing plate (N) 420 and the (N-1)^{th} flowing plate (N-1) 420 in the heat exchanger 400, and a coolant inflow flowing hole 4213 and a coolant outflow flowing hole 4214 in the N^{th} flowing plate (N) 420 respectively communicate with a coolant inflow flowing hole 4213 and a coolant outflow flowing hole 4214 in the (N-1)^{th} flowing plate (N-1) 420, and respectively communicate with the layer of liquid subpassage 470 between the N^{th} flowing plate (N) 420 and the (N-1)^{th} flowing plate (N-1) 420. The coolant flows into the liquid subpassage 470 through the coolant inflow flowing hole 4213, and flows out of the liquid subpassage 470 through the coolant outflow flowing hole 4214 after heat exchange. In addition, coolant oil inflow flowing holes 4211 and coolant oil outflow flowing holes 4212 in the N^{th} flowing plate (N) 420 and the (N-1)^{th} flowing plate (N-1) 420 do not communicate with the layer of liquid subpassage 470 between the N^{th} flowing plate (N) 420 and the (N-1)^{th} flowing plate (N-1) 420, to effectively avoid mutual leakage of the coolant oil and the coolant in the heat exchanger 400.

Refer to FIG. 28. In an embodiment, the other two flowing holes 421 in the (N-1)^{th} flowing plate (N-1) 420 have first protrusions 422 protruding toward the other two flowing holes 421 in the N^{th} flowing plate (N) 420, the other two flowing holes 421 in the N^{th} flowing plate (N) 420 have second protrusions 423 protruding toward the other two flowing holes 421 of the (N-1)^{th} flowing plate (N-1) 420, and the first protrusion 422 is connected to the second protrusion 423, so that the other two flowing holes 421 in the N^{th} flowing plate (N) 420 and the other two flowing holes 421 in the (N-1)^{th} flowing plate (N-1) 420 do not communicate with the layer of liquid subpassage 470 between the N^{th} flowing plate (N) 420 and the (N-1)^{th} flowing plate (N-1) 420.

In an embodiment, a sealing ring exists between the other two flowing holes 421 in the (N-1)^{th} flowing plate (N-1) 420 and the other two flowing holes 421 in the N^{th} flowing plate (N) 420, so that the other two flowing holes 421 in the N^{th} flowing plate (N) 420 and the other two flowing holes 421 in the (N-1)^{th} flowing plate (N-1) 420 do not communicate with the layer of liquid subpassage 470 between the N^{th} flowing plate (N) 420 and the (N-1)^{th} flowing plate (N-1) 420.

As shown in FIG. 28, in an embodiment, a layer of oil subpassage 460 of the heat exchanger 400 is formed between the N^{th} flowing plate (N) 420 and the (N+1)^{th} flowing plate (N+1) 420, and the other two flowing holes 421 in the N^{th} flowing plate (N) 420 and the other two flowing holes 421 in the (N+1)^{th} flowing plate (N+1) 420 communicate with the layer of oil subpassage 460 between the N^{th} flowing plate (N) 420 and the (N+1)^{th} flowing plate (N+1) 420, two flowing holes 421 in the N^{th} flowing plate (N) 420 and two flowing holes 421 in the (N+1)^{th} flowing plate (N+1) 420 do not communicate with the layer of oil subpassage 460 between the N^{th} flowing plate (N) 420 and the (N+1)^{th} flowing plate (N+1) 420. N is an integer greater than or equal to 2 and less than or equal to M. A distance between the N^{th} flowing plate (N) 420 and the mounting plate 410 is greater than a distance between the (N-1)^{th} flowing plate (N-1) 420 and the mounting plate 410.

Refer to FIG. 27 and FIG. 28. In this embodiment of this application, an oil subpassage 460 is formed between the N^{th} flowing plate (N) 420 and the (N+1)^{th} flowing plate (N+1) 420 in the heat exchanger 400, and coolant oil inflow flowing hole 4211 and coolant oil outflow flowing hole 4212 in the N^{th} flowing plate (N) 420 and coolant oil inflow flowing hole 4211 and coolant oil outflow flowing hole 4212 in the (N+1)^{th} flowing plate (N+1) 420 respectively communicate correspondingly, and communicate with the layer of oil subpassage 460 formed between the N^{th} flowing plate (N) 420 and the (N+1)^{th} flowing plate (N+1) 420. The coolant oil flows into the oil subpassage 460 through the coolant oil inflow flowing hole 4211, and flows out of the oil subpassage 460 through the coolant oil outflow flowing hole 4212 after heat exchange. In addition, coolant inflow flowing holes 4213 and coolant outflow flowing holes 4214 in the N^{th} flowing plate (N) 420 and the (N+1)^{th} flowing plate (N+1) 420 do not communicate with the layer of oil subpassage 460 that is of the heat exchanger 400 and that is formed between the Nth flowing plate (N) 420 and the (N+1)^{th} flowing plate (N+1) 420, to effectively avoid mutual leakage of the coolant oil and the coolant in the heat exchanger 400.

In an embodiment, two flowing holes 421 in the N^{th} flowing plate (N) 420 have third protrusions 424 protruding toward two flowing holes 421 in the (N+1)^{th} flowing plate (N+1) 420, two flowing holes 421 in the (N+1)^{th} flowing plate (N+1) 420 have fourth protrusions 425 (as shown in FIG. 25) protruding toward two flowing holes 421 of the N^{th} flowing plate (N) 420, and the third protrusion 424 is connected to the fourth protrusion 425, so that the two flowing holes 421 in the N^{th} flowing plate (N) 420 and the two flowing holes 421 in the (N+1)^{th} flowing plate (N+1) 420 do not communicate with the layer of oil subpassage 460 between the N^{th} flowing plate (N) 420 and the (N+1)^{th} flowing plate (N+1) 420.

In an embodiment, a sealing ring exists between the two flowing holes 421 in the N^{th} flowing plate (N) 420 and the two flowing holes 421 in the (N+1)^{th} flowing plate (N+1) 420, so that the other two flowing holes 421 in the N^{th} flowing plate (N) 420 and the other two flowing holes 421 in the (N-1)^{th} flowing plate (N-1) 420 do not communicate with the layer of liquid subpassage 470 between the N^{th} flowing plate (N) 420 and the (N-1)^{th} flowing plate (N-1) 420.

Refer to FIG. 25 and FIG. 28. In an embodiment, two flowing holes 421 in a 1^{st} flowing plate 420 communicate with two heat exchange holes 440 in the mounting plate 410 and do not communicate with the other two heat exchange holes 440, and the other two flowing holes 421 in the 1^{st} flowing plate 420 do not communicate with the two heat exchange holes 440 in the mounting plate 410 and communicate with the other two heat exchange holes 440.

As shown in FIG. 25 and FIG. 28, in this embodiment of this application, the 1^{st} flowing plate 420 is a flowing plate 420 closest to the mounting plate 410 at the bottom of the heat exchanger 400. In addition to a manner in which the liquid subpassage 470 or the oil subpassage 460 is formed between two flowing plates 420 in the foregoing embodiment, the mounting plate 410 and the 1^{st} flowing plate 420 may also form an oil subpassage 460 or a liquid subpassage 470. Two flowing holes 421 in the 1^{st} flowing plate 420 communicate with two heat exchange holes 440 on the mounting plate 410, and do not communicate with the other two heat exchange holes 440. When the two flowing holes 421 are a coolant inflow flowing hole 4213 and a coolant outflow flowing hole 4214, the two heat exchange holes 440 are a heat exchange liquid inlet hole 4401 and a heat exchange liquid outlet hole 4402, and the other two heat exchange holes 440 are a heat exchange oil inlet hole 4404 and a heat exchange oil outlet hole 4403, the coolant inflow flowing hole 4213 and the coolant outflow flowing hole 4214 respectively communicate with the heat exchange liquid inlet hole 4401 and the heat exchange liquid outlet hole 4402, and do not communicate with the heat exchange oil inlet hole 4404 and the heat exchange oil outlet hole 4403. The other two flowing holes 421 in the 1^{st} flowing plate 420 do not communicate with the two heat exchange holes 440 in the mounting plate 410, and communicate with the other two heat exchange holes 440. When the other two flowing holes 421 are coolant oil inflow flowing hole 4211 and coolant oil outflow flowing hole 4212, the coolant oil inflow flowing hole 4211 and the coolant oil outflow flowing hole 4212 do not communicate with the heat exchange liquid inlet hole 4401 and the heat exchange liquid outlet hole 4402, and the coolant oil inflow flowing hole 4211 and the coolant oil outflow flowing hole 4212 respectively communicate with the heat exchange oil inlet hole 4404 and the heat exchange oil outlet hole 4403. This helps ensure that the coolant oil or coolant flows into the mounting plate 410 and the 1^{st} flowing plate 420, so that no leakage occurs between the coolant oil and the coolant.

In an embodiment, the heat exchanger 400 further includes a heat dissipation fin, the oil subpassage 460 and the liquid subpassage 470 in the heat exchanger 400 are further configured to accommodate the heat dissipation fin, and the heat dissipation fin is configured to: increase a heat dissipation area, and improve a heat exchange effect between the oil passage and the liquid passage.

Refer to FIG. 7 and FIG. 23. In an embodiment, the powertrain 10 includes the powertrain housing 100 and the heat exchanger 400. The powertrain housing 100 is configured to accommodate the motor 300 and the reducer 200. The powertrain housing 100 is further configured to fasten the mounting plate 410 in the heat exchanger 400. Two heat exchange holes 440 in the mounting plate 410 are further configured to communicate with the liquid passage in the powertrain housing 100. The other two heat exchange holes 440 of the mounting plate 410 are further configured to communicate with the oil passage in the powertrain housing 100.

As shown in FIG. 7 and FIG. 23, in this embodiment of this application, the powertrain housing 100 may be formed through integrated die casting, and the heat exchanger 400 may be arranged and mounted on the powertrain housing 100 by using the mounting plate 410. In another embodiment, the powertrain housing 100 may alternatively be a split housing. In this embodiment of this application, the powertrain housing 100 includes the reducer accommodation cavity 111 and the motor accommodation cavity 121. The reducer accommodation cavity 111 is configured to accommodate the reducer 200, and the motor accommodation cavity 121 is configured to accommodate the motor 300. The heat exchange liquid inlet hole 4401 and the heat exchange liquid outlet hole 4402 in the mounting plate 410 are configured to communicate with the liquid passage in the powertrain housing 100. The coolant flows from the liquid passage in the powertrain housing 100 to the heat exchanger 400 through the heat exchange liquid inlet hole 4401, and the coolant flows out of the heat exchanger 400 to the liquid passage in the powertrain housing 100 through the heat exchange liquid outlet hole 4402. The heat exchange oil inlet hole 4404 and the heat exchange oil outlet hole 4403 of the mounting plate 410 are configured to communicate with the oil passage in the powertrain housing 100. The coolant oil in the oil passage in the powertrain housing 100 flows into the heat exchanger 400 through the heat exchange oil inlet hole 4404, and the cooled coolant oil flows out of the heat exchanger 400 to the oil passage in the powertrain housing 100 through the heat exchange oil outlet hole 4403, to cool and lubricate the part inside the motor 300 and the reducer 200 in the powertrain housing 100.

Still refer to FIG. 7 and FIG. 23. In an embodiment, the powertrain housing 100 includes a reducer accommodation housing 110. The reducer accommodation housing 110 is configured to accommodate the reducer 200 and is configured to fasten the mounting plate 410. The oil passage in the heat exchanger 400 communicates with the inside of the reducer accommodation housing 110. The reducer accommodation housing 110, the mounting plate 410, and the plurality of flowing plates 420 are sequentially arranged along the first direction Z.

As shown in FIG. 7, in this embodiment of this application, the reducer accommodation cavity 111 is formed inside the reducer accommodation housing 110, and the reducer accommodation cavity 111 is configured to accommodate the reducer 200. The mounting plate 410 is located at the bottom of the heat exchanger 400, and the reducer accommodation housing 110 is configured to fasten the mounting plate 410. In other words, the heat exchanger 400 is mounted on the reducer accommodation housing 110 of the powertrain housing 100. The oil passage in the heat exchanger 400 communicates with the inside of the reducer accommodation housing 110, and the coolant oil cooled by the heat exchanger 400 flows into the inside of the reducer accommodation housing 110, to cool and lubricate the part inside the reducer 200. The reducer accommodation housing 110, the mounting plate 410, and the plurality of flowing plates 420 are sequentially arranged along the first direction Z. The heat exchanger 400 includes the mounting plate 410 and the plurality of flowing plates 420. In this arrangement manner, coolant oil flowing out of the heat exchanger 400 may flow into the reducer accommodation housing 110 in a gravity manner, to reduce a power loss and energy consumption, and improve overall performance of the entire vehicle.

Still refer to FIG. 7. In an embodiment, the powertrain housing 100 further includes a motor end plate 310 and a motor accommodation housing 120 that are integrally formed with the reducer accommodation housing 110 through die casting, the motor accommodation housing 120 is configured to accommodate the motor 300, and the reducer accommodation housing 110 and the motor accommodation housing 120 are arranged on two sides of the motor end plate 310 along the axial direction O of the motor. The reducer accommodation housing 110 covers a part of the motor end plate 310 along the axial direction O of the motor, a part of the motor end plate 310 is exposed outside the reducer accommodation housing 110, and the heat exchanger 400, the part that is of the motor end plate 310 and that is exposed outside the reducer accommodation housing 110, and the motor accommodation housing 120 are sequentially arranged along the axial direction O of the motor.

As shown in FIG. 7, in this embodiment of this application, the motor accommodation cavity 121 is formed inside the motor accommodation housing 120, and the motor accommodation cavity 121 is configured to accommodate the motor 300. The reducer accommodation housing 110 covers a part of the motor end plate 310 along the axial direction O of the motor, and a part of the motor end plate 310 is exposed outside the reducer accommodation housing 110. If the heat exchanger 400 is arranged on the reducer accommodation housing 110, this structure may provide space for the heat exchanger 400 to be arranged on the reducer accommodation housing 110, so that the heat exchanger 400 is compactly arranged with the reducer accommodation housing 110 and the motor end plate 310, and the heat exchanger 400 does not occupy more space in the first direction Z of the powertrain 10. This facilitates a miniaturization arrangement of the powertrain 10. The reducer accommodation housing 110 covers a part of the motor end plate 310 along the axial direction O of the motor, to also help reduce space occupied by the motor end plate 310 in the powertrain 10 along the first direction Z. Along the axial direction O of the motor, the heat exchanger 400, the part that is of the motor end plate 310 and that is exposed outside the reducer accommodation housing 110, and the motor accommodation housing 120 are sequentially compactly arranged, to facilitate a compact arrangement of a structure of the powertrain 10, reduce overall space occupied by the powertrain 10, reduce an overall volume of the powertrain 10, and facilitate mounting of the powertrain 10 in the electric vehicle.

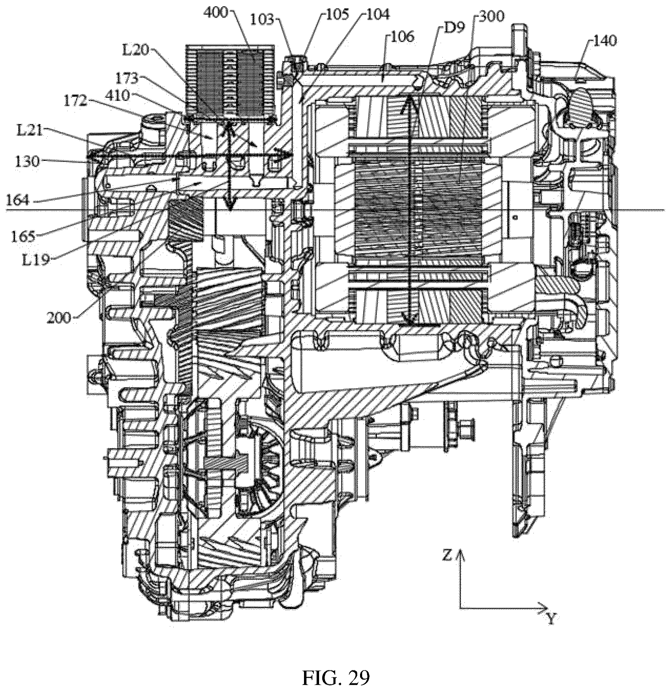

FIG. 29 is a sectional view of a powertrain 10 along an axial direction O of a motor according to an embodiment of this application. In an embodiment, a distance between the mounting plate 410 and the axis of the motor along the first direction Z is less than a half of an inner diameter of the motor housing 120.

As shown in FIG. 29, in this embodiment of this application, the distance between the mounting plate 410 and the axis of the motor is denoted as L19, the inner diameter of the motor accommodation housing 120 is denoted as D9, and L19<0.5D9. The mounting plate 410 is located at the bottom of the heat exchanger 400. In other words, the distance between the heat exchanger 400 and the axis of the motor is less than a half of the inner diameter of the motor accommodation housing 120. In addition to the mounting plate 410, in the heat exchanger 400, the top plate 430 and the plurality of flowing plates 420 are arranged along the first direction Z. When the distance between the mounting plate 410 and the axis of the motor is less than a half of the motor accommodation housing 120, large space still exists between an upper part of the mounting plate 410 and the top of the motor accommodation housing 120 in the first direction Z, and may be used to arrange the heat exchanger 400. In addition, the heat exchanger 400 does not occupy too much space of the powertrain 10 along the first direction Z, and the projection of the heat exchanger 400 overlaps the projection of the motor accommodation housing 120 along the axial direction O of the motor, to facilitate a compact arrangement of the heat exchanger 400 and the powertrain housing 100, help reduce the overall volume of the powertrain 10, and optimize the layout of the entire vehicle.

Refer to FIG. 7. In an embodiment, a length direction of the mounting plate 410 is perpendicular to both the axial direction O of the powertrain and the first direction Z, and a width direction of the mounting plate 410 is parallel to the axial direction O of the powertrain.

As shown in FIG. 7, in this embodiment of this application, the length direction of the mounting plate 410 is A, the width direction of the mounting plate 410 is denoted as B, the mounting plate 410 is a part of the heat exchanger 400, and the mounting plate 410, the plurality of flowing plates 420, and the top plate 430 in the heat exchanger 400 are sequentially arranged along the first direction Z. When the length direction A of the mounting plate 410 is perpendicular to the axial direction O of the powertrain and the first direction Z, and the width direction B of the mounting plate 410 is parallel to the axial direction O of the powertrain, a projection area of the heat exchanger 400 in the first direction Z, the second direction X, and the third direction Y is the smallest, and the heat exchanger 400 is regularly arranged, to help reduce space occupied by the heat exchanger 400 in the powertrain 10. In this embodiment of this application, the length direction A of the mounting plate 410 is parallel to the second direction X, the width direction B of the mounting plate 410 is parallel to the third direction Y, and the third direction Y is parallel to the axial direction O of the powertrain.

Refer to FIG. 7 and FIG. 29. In an embodiment, a length of the mounting plate 410 is less than a length of the reducer accommodation housing 110 along the axial direction O of the powertrain, and a length of the mounting plate 410 is less than a length of the reducer accommodation housing 110 along the length direction A of the mounting plate 410.

As shown in FIG. 7 and FIG. 29, in this embodiment of this application, the length of the mounting plate 410 along the axial direction O of the powertrain is denoted as L20, the length of the reducer accommodation housing 110 along the axial direction O of the powertrain is denoted as L21, the length of the mounting plate 410 along the length direction A of the mounting plate 410 is denoted as L22, and the length of the reducer accommodation housing 110 along the length direction A of the mounting plate 410 is denoted as L23. L20<L21, and L22<L23. In this way, the mounting plate 410 does not occupy too much space of the reducer accommodation housing 110 along the axial direction O of the powertrain and along the length direction A of the mounting plate 410, that is, does not occupy too much space of the powertrain 10 along the third direction Y and the second direction X. This facilitates a compact arrangement of the heat exchanger 400 in the powertrain 10, helps reduce the overall volume of the powertrain 10, and optimizes the layout of the entire vehicle.

Refer to FIG. 27 and FIG. 29. In an embodiment, a length of the flowing plate 420 along the axial direction O of the powertrain is less than or equal to a length of the mounting plate 410 along the axial direction O of the powertrain, and a length of the flowing plate 420 along the length direction A of the mounting plate 410 is less than a length of the mounting plate 410 along the length direction A.

As shown in FIG. 27 and FIG. 29, in this embodiment of this application, the length of the flowing plate 420 along the axial direction O of the powertrain is denoted as L24, the length of the mounting plate 410 along the axial direction O of the powertrain is denoted as L20, the length of the flowing plate 420 along the length direction A of the mounting plate 410 is denoted as L25, the length of the mounting plate 410 along the length direction A is denoted as L22, L24<L20, and L25<L22. It indicates that the flowing plate 420 does not occupy too much space of the mounting plate 410 along the axial direction O of the powertrain and the length direction A of the mounting plate 410, to facilitate miniaturization of the heat exchanger 400 along the axial direction O of the powertrain and the length direction A of the mounting plate 410.

It should be noted that the heat exchanger in this application may also be used as an independent apparatus to form a powertrain with an independent reducer and an independent motor. To be specific, a plurality of embodiments in which four heat exchange holes are arranged on a mounting plate at a bottom of the independent heat exchanger and there is no heat exchange hole on a top plate are the same as those of the heat exchanger in the powertrain. Details are not described herein again.

Refer to FIG. 3, FIG. 5, and FIG. 6. In an embodiment, the die casting housing 100 includes four sealing grooves 107 and four sealing rings 108, and the four heat exchange holes 440 and the four holes 170 are sealed and connected by using the sealing grooves 107 and the sealing rings 108. A first sealing groove 1071 surrounds the housing liquid inlet hole 1701, one sealing ring 108 is located in the first sealing groove 1071, and the sealing ring 108 contacts a peripheral side surface of the heat exchange liquid outlet hole 4402, to implement sealing of the housing liquid inlet hole 1701 and the heat exchange liquid outlet hole 4402. A second sealing groove 1072 surrounds the housing liquid outlet hole 1702, one sealing ring 108 is located in the second sealing groove 1072, the sealing ring 108 contacts a peripheral side surface of the heat exchange liquid inlet hole 4401, to implement sealing of the housing liquid outlet hole 1702 and the heat exchange liquid inlet hole 4401. In this embodiment of this application, the sealing ring 108 and the sealing groove 107 are selected to seal communication between the die casting housing 100 and the heat exchanger 400, to improve a sealing effect between the heat exchanger 400 and the die casting housing 100, and further help reduce space of the heat exchanger 400 and the die casting housing 100 along the first direction Z, so that the powertrain 10 is compact, the layout of the entire vehicle is optimized, a connection path is shortened, a coolant is quickly conveyed, a cooling process is accelerated, and a temperature rise control of the entire vehicle is facilitated.

Refer to FIG. 3 and FIG. 5. In an embodiment, for the four sealing grooves 107 in the die casting housing 100, a third sealing groove 1073 in the sealing groove 107 surrounds the housing oil outlet hole 1704, one of the four sealing rings 108 is located in the third sealing groove 1073, and one sealing ring 108 contacts a peripheral side surface of the heat exchange oil inlet hole 4404, to implement sealing of the housing oil outlet hole 1704 and the heat exchange oil inlet hole 4404. The fourth sealing groove 1074 surrounds the housing oil inlet hole 1703, one sealing ring 108 is located in the fourth sealing groove 1074, and one sealing ring 108 contacts a periphery side surface of the heat exchange oil outlet hole 4403, to implement sealing of the housing oil inlet hole 1703 and the heat exchange oil outlet hole 4403. In this solution, the sealing ring 108 and the sealing groove 107 are selected to implement sealing of the die casting housing 100 and the heat exchanger 400, to help reduce space of the heat exchanger 400 and the die casting housing 100 along the first direction Z, make the powertrain 10 compact, optimize the layout of the entire vehicle, shorten a connection path, facilitate quick conveyance of the coolant oil, accelerate a cooling process between the coolant oil and the coolant, and facilitate temperature rise control of the entire vehicle.

As shown in FIG. 6, in an embodiment, along the first direction Z, the heat exchange oil inlet hole 4404 and the heat exchange oil outlet hole 4403 are located on a surface that is of the heat exchanger 400 and that faces the die casting housing 100, and the general liquid inlet hole 190, the heat exchange oil outlet hole 4403, the heat exchange oil inlet hole 4404, and the general liquid outlet hole 180 are sequentially arranged along the second direction X, and both a projection of the heat exchange oil inlet hole 4404 and a projection of the heat exchange oil outlet hole 4403 are located in the projection of the die casting housing 100 along the first direction Z. In this embodiment of this application, the general liquid inlet hole 190 for conveying the coolant is close to the heat exchange oil inlet hole 4404, to help reduce a case in which when the coolant flows through another part of the die casting housing 100, the coolant absorbs heat and a temperature rises, and a heat exchange effect of the coolant in the heat exchanger 400 is weakened.

As shown in FIG. 6, in an embodiment, along the first direction Z, the housing oil outlet hole 1704 and the heat exchange oil inlet hole 4404 are arranged oppositely, and the housing oil inlet hole 1703 and the heat exchange oil outlet hole 4403 are arranged oppositely. Along the first direction Z, projections of the housing oil outlet hole 1704 and the heat exchange oil inlet hole 4404 overlap, and projections of the housing oil inlet hole 1703 and the heat exchange oil outlet hole 4403 overlap. In this embodiment of this application, the oil hole on the die casting housing 100 and the oil hole on the heat exchanger 400 communicate with each other along the first direction Z, to reduce space occupied by the pipe along the second direction X and the third direction Y, thereby helping reduce space occupied by the powertrain 10 in the vehicle.

Refer to FIG. 3, FIG. 5, and FIG. 21. In an embodiment, along the axial direction O of the reducer input shaft, the heat exchange oil inlet hole 4404, the heat exchange liquid outlet hole 4402, and the motor accommodation cavity 121 are sequentially arranged, the heat exchange liquid inlet hole 4401, the heat exchange oil outlet hole 4403, and the motor accommodation cavity 121 are sequentially arranged, the heat exchange liquid inlet hole 4401 and the heat exchange oil inlet hole 4404 are arranged along the second direction X, and the heat exchange liquid outlet hole 4402 and the heat exchange oil outlet hole 4403 are arranged along the second direction X. In this embodiment of this application, the motor accommodation cavity 121, the reducer accommodation cavity 111, and the heat exchanger 400 are compactly arranged.

Refer to FIG. 3. In an embodiment, the powertrain 10 further includes a motor controller housing 150, the motor controller housing 150 is configured to accommodate a motor controller 500, the motor controller 500 is configured to provide electric energy for the motor 300, and the motor 300 converts the electric energy into kinetic energy and transmits the kinetic energy to the reducer input shaft 210. In this embodiment of this application, the motor controller housing 150 and the die casting housing 100 are two independent housings.

As shown in FIG. 3, in an embodiment, the die casting housing 100 and the motor controller housing 150 are arranged along the second direction X; the general liquid outlet hole 180, the heat exchanger 400, the general liquid inlet hole 190, and the motor controller housing 150 are sequentially arranged along the second direction X; and the heat exchanger 400, the general liquid inlet hole 190, and the motor controller housing 150 are sequentially arranged along the first direction Z.

As shown in FIG. 3, in this embodiment of this application, the motor accommodation cavity 121 and the reducer accommodation cavity 111 are arranged along the axial direction O of the reducer input shaft, and the motor accommodation cavity 121 and the motor controller housing 150 are arranged along the second direction X. In this embodiment of this application, the heat exchanger 400 and the general liquid inlet hole 190 are arranged compactly, to help shorten a path through which the coolant is input to the die casting housing 100 and then output to the heat exchanger 400 for heat exchange, reduce heat absorption of the coolant in a conveyance process, and facilitate a process of cooling the hot coolant oil in the heat exchanger 400.

Refer to FIG. 2 and FIG. 3. In an embodiment, the powertrain 10 further includes a liquid pipe 600, an electrically controlled liquid outlet hole 151, and an electrically controlled liquid inlet hole (not shown in the figure), both the electrically controlled liquid outlet hole 151 and the electrically controlled liquid inlet hole are fastened to the motor controller housing 150, the electrically controlled liquid inlet hole is configured to communicate with an external cooling system, and the liquid pipe 600 is configured to communicate the general liquid inlet hole 190 and the electrically controlled liquid outlet hole 151.

As shown in FIG. 2 and FIG. 3, in this embodiment of this application, the electrically controlled liquid inlet hole receives the coolant from the cooling system of the entire vehicle and inputs the coolant to the motor controller housing 150, to cool the motor controller 500. The electrically controlled liquid outlet hole 151 inputs, to the general liquid inlet hole 190 on the die casting housing 100 through the liquid pipe 600, the coolant that passes through the motor controller 500. The electrically controlled liquid outlet hole 151 is connected and fastened to the liquid pipe 600 through a fastener 610, and the liquid pipe 600 is connected and fastened to the general liquid inlet hole 190 through a fastener 620.

Still refer to FIG. 2 and FIG. 3, in an embodiment, along the second direction X, the heat exchanger 400, the general liquid inlet hole 190, and the electrically controlled liquid outlet hole 151 are sequentially arranged, and the liquid pipe 600 is connected between the general liquid inlet hole 190 and the electrically controlled liquid outlet hole 151; the heat exchanger 400, the general liquid inlet hole 190, the electrically controlled liquid outlet hole 151, the motor controller housing 150, and the electrically controlled liquid inlet hole are sequentially arranged along the first direction Z; and the heat exchanger 400, the liquid pipe 600, and the motor controller housing 150 are sequentially arranged along the second direction X.

As shown in FIG. 2, in this embodiment of this application, the liquid pipe 600 is located in space between the heat exchanger 400 and the motor controller housing 150, neither additionally occupying a size in the axial direction O of the motor of the powertrain 10 nor additionally occupying a size along the second direction X and a size in the first direction Z. In this way, the heat exchanger 400, the general liquid inlet hole 190, and the motor controller housing 150 are arranged compactly, so that the powertrain 10 has a compact structure, and space occupied by the powertrain 10 in a vehicle body is reduced.

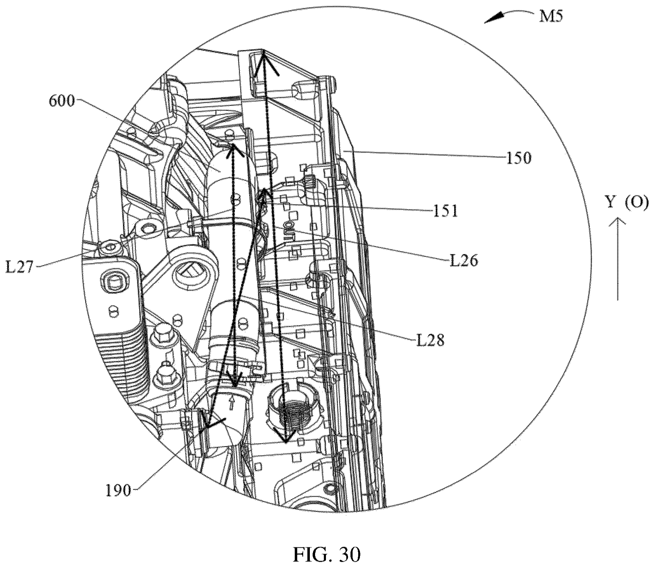

Refer to FIG. 2 and FIG. 30. FIG. 30 is a locally enlarged view of a part M5 in the powertrain 10 in FIG. 2. In an embodiment, along the axial direction O of the motor, a length of the motor controller housing 150 is greater than a length of the liquid pipe 600, the length of the motor controller housing 150 is greater than a distance between the general liquid inlet hole 190 and the electrically controlled liquid outlet hole 151, and the axial direction O of the motor is parallel to the axial direction O of the reducer input shaft; along a radial direction R of the motor, a projection of the motor controller housing 150 at least partially overlaps a projection of the motor accommodation cavity 121, and the projection of the motor controller housing 150 at least partially overlaps the projection of the reducer accommodation cavity 111; a projection of the electrically controlled liquid outlet hole 151 is located in the motor accommodation cavity 121 along the radial direction R of the motor; and a projection of the heat exchanger 400 partially overlaps the projection of the motor accommodation cavity 121 along the axial direction O of the motor.

As shown in FIG. 30, in this embodiment of this application, the length of the motor controller housing 150 along the axial direction O of the motor is denoted as L26, the length of the liquid pipe 600 along the axial direction O of the motor is denoted as L27, the distance between the general liquid inlet hole 190 and the electrically controlled liquid outlet hole 151 along the axial direction O of the motor is denoted as L28, L26>L27, and L26>L28. In this embodiment of this application, a layout of the motor controller housing 150, the motor accommodation cavity 121, and the heat exchanger 400 occupies smaller space along the second direction X and occupies smaller space along the third direction Y. In this way, the powertrain 10 has a more compact layout, space occupied by the powertrain 10 in the entire vehicle is reduced, and a layout of the entire vehicle is optimized.

As shown in FIG. 2, in an embodiment, the powertrain 10 further includes a reducer end cover 130 and a motor end cover 140. The reducer end cover 130, the die casting housing 100, and the motor end cover 140 are sequentially arranged along the axial direction O of the reducer input shaft. The general liquid inlet hole 190 and the general liquid outlet hole 180 are arranged between the reducer end cover 130 and the motor end cover 140, and do not occupy space along the third direction Y of the powertrain 10.

The foregoing describes in detail the powertrain and the electric vehicle provided in embodiments of this application. The principles and embodiments in this application are described in this specification by using specific examples. The descriptions about embodiments are merely provided to help understand the method in this application and core ideas of the method. In addition, a person of ordinary skill in the art can make variations and modifications in terms of the specific embodiments and application scopes based on the ideas in this application. In conclusion, the content of this specification shall not be construed as a limitation on this application.

## Claims

1. A powertrain, wherein the powertrain comprises a die casting housing and a reducer end cover, the die casting housing comprises a reducer accommodation cavity, a motor accommodation cavity, and a reducer oil passage protrusion that are formed through integrated die casting, the reducer accommodation cavity and the motor accommodation cavity are respectively configured to accommodate a reducer and a motor, and the reducer end cover, the reducer accommodation cavity, and the motor accommodation cavity are sequentially arranged along an axial direction of the motor; and
the reducer oil passage protrusion protrudes from an end face of the die casting housing toward the reducer end cover along the axial direction of the motor, the reducer oil passage protrusion is configured to be embedded into an internal oil passage in the reducer end cover, the reducer oil passage protrusion further comprises a protruding oil hole, an opening of the protruding oil hole faces the reducer end cover, and the protruding oil hole is configured to directly communicate with the internal oil passage in the reducer end cover and is configured to communicate with the motor accommodation cavity through the internal oil passage in the die casting housing.

2. The powertrain according to claim 1, wherein the reducer end cover comprises an end cover oil hole formed inside the reducer end cover through die casting, the end cover oil hole is configured to communicate with the protruding oil hole, an opening of the end cover oil hole faces the die casting housing along the axial direction of the motor, and the end cover oil hole is configured to accommodate the reducer oil passage protrusion.

3. The powertrain according to claim 2, wherein the reducer end cover further comprises an end cover oil passage, and the end cover oil hole and the end cover oil passage are arranged along the axial direction of the motor;
a projection of the reducer oil passage protrusion partially overlaps a projection of the end cover oil hole along a radial direction of the motor;
the reducer oil passage protrusion and the end cover oil passage are spaced apart along the axial direction of the motor;
an inner diameter of the end cover oil hole is greater than an inner diameter of the end cover oil passage, and an outer diameter of the reducer oil passage protrusion is greater than the inner diameter of the end cover oil passage; and
a difference between the inner diameter of the end cover oil hole and the outer diameter of the reducer oil passage protrusion is greater than or equal to 0.1 mm and less than or equal to 0.2 mm along the radial direction of the motor.

4. The powertrain according to claim 3, wherein along the axial direction of the motor, the protruding oil hole comprises an outlet facing the end cover oil passage, the end cover oil passage comprises an inlet facing the protruding oil hole, and an inner diameter of the outlet of the protruding oil hole is less than an inner diameter of the inlet of the end cover oil passage.

5. The powertrain according to claim 3, wherein an axis of the protruding oil hole is parallel to the axial direction of the motor, and along the axial direction of the motor, the inner diameter of the protruding oil hole gradually decreases from one end facing the end cover oil passage to one end away from the end cover oil passage, and the inner diameter of the end cover oil passage gradually decreases from one end facing the protruding oil hole to one end away from the protruding oil hole.

6. The powertrain according to claim 3, wherein the reducer end cover further comprises an oil sealing hole, and the oil sealing hole is configured to accommodate coolant oil and a part of the reducer oil passage protrusion;
the end cover oil passage, the end cover oil hole, and the oil sealing hole are sequentially arranged along the axial direction of the motor;
along the radial direction of the motor, an inner diameter of the oil sealing hole is greater than the inner diameter of the end cover oil hole, and the inner diameter of the oil sealing hole is greater than the outer diameter of the reducer oil passage protrusion; and
along the axial direction of the motor, the inner diameter of the oil sealing hole gradually increases from an end facing the end cover oil hole to an end away from the end cover oil hole.

7. The powertrain according to claim 6, wherein an included angle between an inner surface of the oil sealing hole and the axial direction of the motor is less than 30°; and
along the axial direction of the motor, a length of the oil sealing hole is less than a length of the end cover oil hole, and the length of the oil sealing hole is less than a difference between a length of the reducer oil passage protrusion and the length of the oil sealing hole.

8. The powertrain according to claim 6, wherein along the axial direction of the motor, an end face that is of the reducer end cover and that faces the die casting housing comprises an end cover oil sealing face, an end face that is of the die casting housing and that faces the reducer end cover comprises an embedded oil sealing face, the end cover oil sealing face fits a part of the embedded oil sealing face, and space between the oil sealing hole, the reducer oil passage protrusion, and the part of the embedded oil sealing face is used to accommodate coolant oil;
the reducer oil passage protrusion, an inner wall of the oil sealing hole, and the end cover oil sealing face are sequentially arranged along the radial direction of the motor;
an inner wall of the end cover oil hole, the inner wall of the oil sealing hole, and the embedded oil sealing face are sequentially connected along the axial direction of the motor; and
along the radical direction of the motor, the embedded oil sealing face surrounds a periphery of the reducer oil passage protrusion, and the embedded oil sealing face is perpendicular to the axial direction of the motor.

9. The powertrain according to claim 3, wherein along the radial direction of the motor, a surface of an inner wall of the end cover oil passage and a surface of an inner wall of the protruding oil hole are rough surfaces, and a surface of an inner wall of the end cover oil hole and an outer surface of the reducer oil passage protrusion are machined surfaces.

10. The powertrain according to any one of claims 1 to 9, wherein the die casting housing further comprises a housing oil inlet hole formed through integrated die casting, and the housing oil inlet hole is configured to communicate with a heat exchanger and is configured to communicate with the motor accommodation cavity through the internal oil passage in the die casting housing; and
an axis of the housing oil inlet hole is parallel to a first direction, an opening of the housing oil inlet hole faces away from the reducer accommodation cavity along the first direction, the reducer accommodation cavity, the protruding oil hole, and the housing oil inlet hole are sequentially arranged along the first direction, and the first direction is perpendicular to an axial direction of the powertrain.

11. The powertrain according to claim 10, wherein the die casting housing further comprises a communicating oil hole formed through integrated die casting, and the communicating oil hole is configured to communicate with the protruding oil hole and the motor accommodation cavity through the internal oil passage in the die casting housing;
an axis of the communicating oil hole is parallel to the first direction, an opening of the communicating oil hole is configured to accommodate a blocking element, and the opening of the communicating oil hole and the opening of the housing oil inlet hole face a same direction;
the reducer oil passage protrusion, the housing oil inlet hole, the communicating oil hole, and the motor accommodation cavity are sequentially arranged at intervals along the axial direction of the motor; and
a distance between the communicating oil hole and the protruding oil hole is greater than a distance between the housing oil inlet hole and the protruding oil hole along the first direction.

12. The powertrain according to claim 11, wherein the die casting housing further comprises a motor oil hole formed through integrated die casting, and the motor oil hole is configured to communicate the communicating oil hole and the motor accommodation cavity through the internal oil passage in the die casting housing;
an axis of the motor oil hole is parallel to the axial direction of the motor, an opening of the motor oil hole faces the reducer oil passage protrusion along the axial direction of the motor, and the opening of the motor oil hole is configured to accommodate a blocking element; and
a distance between the motor oil hole and the protruding oil hole is greater than a distance between the housing oil inlet hole and the protruding oil hole along the first direction.

13. The powertrain according to claim 12, wherein the internal oil passage in the die casting housing comprises a reducer oil passage, a housing oil inlet passage, a communicating oil passage, and a motor oil passage, axes of the reducer oil passage and the motor oil passage are both parallel to the axial direction of the motor, and the housing oil inlet passage and the communicating oil passage are both parallel to the first direction; and
the reducer oil passage and the protruding oil hole are coaxially arranged along the axial direction of the motor, one end of the reducer oil passage and the protruding oil hole are connected and communicate with each other, the other end of the reducer oil passage and one end of the communicating oil passage are connected and communicate with each other, the communicating oil passage and the communicating oil hole are coaxially arranged along the first direction, the other end of the communicating oil passage and the communicating oil hole are connected and communicate with each other, the motor oil passage and the motor oil hole are coaxially arranged along the axial direction of the motor, one end of the motor oil passage and the motor oil hole are connected and communicate with each other, the other end of the motor oil passage communicates with the motor accommodation cavity, the housing oil inlet passage and the housing oil inlet hole are coaxially arranged along the first direction, one end of the housing oil inlet passage and the housing oil inlet hole are connected and communicate with each other, and the other end of the housing oil inlet passage and a middle part of the reducer oil passage are connected and communicate with each other.

14. The powertrain according to any one of claims 1 to 9 and 11 to 13, wherein the powertrain further comprises a heat exchanger, the heat exchanger comprises a mounting plate and a plurality of flowing plates, the plurality of flowing plates are configured to form a liquid passage and an oil passage in the heat exchanger, and the mounting plate is configured to fasten the die casting housing;
the reducer accommodation cavity, the reducer oil passage protrusion, the mounting plate, and the plurality of flowing plates are sequentially arranged along the first direction, and the first direction is perpendicular to the axial direction of the powertrain;
along the first direction, a projection of the mounting plate at least partially overlaps a projection of the reducer accommodation cavity, and the projection of the mounting plate does not overlap a projection of the motor accommodation cavity; and
the mounting plate comprises four heat exchange holes, two heat exchange holes are configured to communicate the liquid passage in the heat exchanger and an internal liquid passage in the die casting housing, the other two heat exchange holes are configured to communicate the oil passage in the heat exchanger and the protruding oil hole, and the heat exchange hole penetrates through the mounting plate along the first direction.

15. An electric vehicle, wherein the electric vehicle comprises a vehicle body, a cooling system, and the powertrain according to any one of claims 1 to 14, the powertrain and the cooling system are fastened on the vehicle body, the cooling system is configured to communicate with a liquid passage in the powertrain, a coolant in the cooling system is used to be successively conveyed to a liquid passage in a heat exchanger in the powertrain through the liquid passage in the powertrain, to perform heat exchange with an oil passage in the heat exchanger in the powertrain, and the oil passage in the heat exchanger is configured to convey coolant oil to a protruding oil hole and the motor accommodation cavity.
